(19) Europäisches Patentamt
European Patent Office
Office européen des brevets

(11) **EP 4 697 711 A1**

(12) **EUROPEAN PATENT APPLICATION**
published in accordance with Art. 153(4) EPC

(43) Date of publication:
**18.02.2026 Bulletin 2026/08**

(21) Application number: **23932533.5**

(22) Date of filing: **14.04.2023**

(51) International Patent Classification (IPC):
**H04N 19/176** (2014.01)

(52) Cooperative Patent Classification (CPC):
**H04N 19/176**

(86) International application number:
**PCT/CN2023/088535**

(87) International publication number:
**WO 2024/212252 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **MA, Yanzhuo
Dongguan, Guangdong 523860 (CN)**

• **HUO, Junyan
Dongguan, Guangdong 523860 (CN)**
• **YANG, Fuzheng
Dongguan, Guangdong 523860 (CN)**
• **DU, Hongqing
Dongguan, Guangdong 523860 (CN)**
• **LI, Ming
Dongguan, Guangdong 523860 (CN)**

(74) Representative: **Taor, Simon Edward William et al
Venner Shipley LLP
200 Aldersgate
London EC1A 4HD (GB)**

(54) **ENCODING METHOD, DECODING METHOD, CODE STREAM, ENCODER, DECODER AND
STORAGE MEDIUM**

(57)    The embodiments of the present application disclose an encoding method, a decoding method, a code stream, an encoder, a decoder, and a storage medium. The decoding method includes: decoding a code stream and determining a prediction mode of a current block; determining a first BV candidate list of the current block when the prediction mode of the current block indicates that the current block determines a predicted value of the current block using an IBC-merge prediction mode; determining a first region range, and determining a second BV candidate list based on the first BV candidate list and the first region range; a predicted value of the current block is determined based on the second BV candidate list. The embodiments of the present application can improve the accuracy of inter prediction, thereby improving the codec efficiency of geometric information and improving the codec performance of a point cloud.

| | |
|---|---|
| A bitstream is decoded to determine a prediction mode of a current block | S101 |
| When the prediction mode of the current block indicates that the current block determines the predicted value of the current block using the IBC-merge prediction mode, a first BV candidate list of the current block is determined | S102 |
| A first region range is determined, and a second BV candidate list is determined based on the first BV candidate list and the first region range | S103 |
| The predicted value of the current block is determined based on the second BV candidate list | S104 |

**FIG. 21**

**Description**

TECHNICAL FIELD

The present disclosure relates to the technical field of video codec, and particularly relates to encoding and decoding methods, a bitstream, an encoder, a decoder, and a storage medium.

BACKGROUND

Intra Block Copy (IBC), As a block-level coding mode, may find a best block vector (BV) for each coding block through motion search The best BV here is obtained by searching a reconstructed region of a picture where a current coding block is located (i.e. a current coding picture). Intra Template Matching Prediction (Intra TMP) technology is also a coding mode based on BV for intra prediction, and the motion search thereof takes template matching as an evaluation standard.

However, in the actual coding process, the IBC mode and the IntraTMP mode have many similarities, for example, both use BV to obtain predicted values, and both are used to encode natural video and screen video content, etc. Nevertheless, search ranges in the organization methods may overlap with search ranges of other prediction modes in related technologies, which is not conducive to efficient coding, thus affecting the efficiency of video coding.

SUMMARY

The present disclosure provides encoding and decoding methods, a bitstream, an encoder, a decoder, and a storage medium. By eliminating redundant BV information among different modes, the expression efficiency of header information and consequently, the overall video coding efficiency can be improved.

The technical solution of the present disclosure can be implemented as follows.

According to a first aspect, an embodiment of the present disclosure provides a decoding method, including:

decoding a bitstream and determining a prediction mode of a current block;
determining a first BV candidate list for the current block when the prediction mode of the current block indicates that the current block determines a predicted value of the current block using an IBC-merge prediction mode;
determining a first region range, and determining a second BV candidate list based on the first BV candidate list and the first region range; and
determining the predicted value of the current block based on the second BV candidate list.

In a second aspect, an embodiment of the present disclosure provides an encoding method, comprising:

determining a prediction mode of a current block;
determining a first BV candidate list for the current block when the prediction mode indicates that the current block uses an IBC-merge prediction mode;
determining a first region range, and determining a second BV candidate list based on the first BV candidate list and the first region range;
determining a predicted value of the current block based on the second BV candidate list.

According to a third aspect, an embodiment of the present disclosure provides a bitstream generated by performing bit encoding according to information to be coded; wherein the information to be coded includes at least one of the following:

a prediction residual of a current block, candidate BV index information, extended candidate BV index information, first syntax identification information, second syntax identification information, and third syntax identification information; wherein the first syntax identification information is used to indicate whether the current block uses an IBC prediction mode, the second syntax identification information is used to indicate whether the current block uses an IBC-merge prediction mode, and the third syntax identification information is used to indicate whether the current block uses a Merge Mode with Block Vector Difference (MBVD) mode.

According to a fourth aspect, an embodiment of the present disclosure provides a decoder, including:

a decoding section, configured to decode a bitstream to determine a prediction mode of a current block;
a first determination section, configured to determine a first BV candidate list of the current block when the prediction mode of the current block indicates that the current block determines a predicted value of the current block using an IBC-merge prediction mode; and determine a first region range;

a first removal section, configured to determine a second BV candidate list based on the first BV candidate list and the first region range; and

a first prediction section, configured to determine the predicted value of the current block based on the second BV candidate list.

According to a fifth aspect, an embodiment of the present disclosure provides a decoder including a first memory and a first processor.

The first memory is for storing a computer program executable on the first processor.

The first processor is for executing the method according to the first aspect when running the computer program.

According to a sixth aspect, an embodiment of the present disclosure provides an encoder, including:

a second determination section, configured to determine a prediction mode of a current block, determine a first BV candidate list for the current block when the current block uses an IBC-merge prediction mode, and determine a first region range;

a second removal section, configured to determine a second BV candidate list based on the first BV candidate list and the first region range; and

a second prediction section, configured to determine a predicted value of the current block based on the second BV candidate list.

In a seventh aspect, an embodiment of the present disclosure provides an encoder including a second memory and a second processor.

The second memory is for storing a computer program executable on the second processor.

The second processor is for executing the method of the second aspect when running the computer program.

According to an eighth aspect, an embodiment of the present disclosure provides a computer-readable storage medium storing a computer program that, when executed, implements the method according to the first aspect or implements the method according to the second aspect.

The embodiments of the present disclosure provide encoding and decoding methods, a bitstream, an encoder, a decoder, and a storage medium. For IBC-merge-mode prediction in the block codec process, the encoding end or the decoding end may determine the second BV candidate list based on the first BV candidate list of the current block by removing redundant BVs within the first region range in the Intra TMP mode, and determine the predicted value of the current block based on the redundancy-removed BVs in the second BV candidate list. Eliminating redundant BV information is conductive to improve the expression efficiency of header information and the overall video coding efficiency when codec is performed using BVs subjected to de-duplication.

BRIEF DESCRIPTION OF THE DRAWINGS

The accompanying drawings which are incorporated into and constitute a part of the description illustrate embodiments matching the present disclosure, and together with the description, are used to explain the technical solution of the present disclosure. Obviously, the drawings in the following description are only some embodiments of the present disclosure, and other drawings can be obtained from these drawings without making creative efforts to those skilled in the art.

The flowcharts shown in the drawings are merely illustrative and do not necessarily include all contents and operations/steps, nor do they necessarily need to be performed in the order as described. For example, some operations/-steps may also be decomposed, while some operations/steps may be combined or partially combined, so the order of actual execution may be changed according to the actual situation.

FIG. 1 is a schematic flow diagram of an optional process of a decoding end obtaining a reconstructed pixel value according to an embodiment of the present disclosure.

FIG. 2a is a first schematic diagram of an optional template type according to an embodiment of the present disclosure.

FIG. 2b is a second schematic diagram of an optional template type according to an embodiment of the present disclosure;

FIG. 2c is a third schematic diagram of an optional template type according to an embodiment of the present disclosure;

FIG. 2d is a fourth schematic diagram of an optional template type according to an embodiment of the present disclosure;

FIG. 2e is a fifth schematic diagram of an optional template type according to an embodiment of the present disclosure;

FIG. 2f is a sixth schematic diagram of an optional template type according to an embodiment of the present disclosure;

FIG. 3 is a schematic diagram of optional neighboring block positions according to an embodiment of the present disclosure.

FIG. 4 is a schematic diagram of optional BVP candidates according to an embodiment of the present disclosure.

FIG. 5 is a schematic diagram of optional template cost calculation according to an embodiment of the present disclosure.

FIG. 6 is a schematic diagram of optional candidate clustering according to an embodiment of the present disclosure.

FIG. 7a is a first schematic flow diagram of optional candidate search according to an embodiment of the present disclosure.

FIG. 7b is a second schematic flow diagram of optional candidate search according to an embodiment of the present disclosure;

FIG. 8 is a schematic diagram of optional BV determination according to an embodiment of the present disclosure.

FIG. 9a is a first schematic diagram of an optional IBC reference region according to an embodiment of the present disclosure.

FIG. 9b is a second schematic diagram of an optional IBC reference region according to an embodiment of the present disclosure;

FIG. 9c is a third schematic diagram of an optional IBC reference region according to an embodiment of the present disclosure;

FIG. 9d is a schematic diagram 4 of an optional IBC reference region according to an embodiment of the present disclosure;

FIG. 10 is a fifth schematic diagram of an optional IBC reference region according to an embodiment of the present disclosure;

FIG. 11 is a sixth schematic diagram of an optional IBC reference region according to an embodiment of the present disclosure;

FIG. 12 is a schematic diagram of an optional Intra TMP prediction process according to an embodiment of the present disclosure.

FIG. 13 is a schematic diagram of an optional template search region according to an embodiment of the present disclosure.

FIG. 14 is a schematic diagram of an optional prediction flow in IntraTMP mode according to an embodiment of the present disclosure.

FIG. 15 is a schematic diagram of an optional refinement flow in IntraTMP mode according to an embodiment of the present disclosure;

FIG. 16 is a first schematic diagram of an optional search flow in Intra TMP Fusion mode according to an embodiment of the present disclosure.

FIG. 17 is a second schematic diagram of an optional search flow in Intra TMP Fusion mode according to an embodiment of the present disclosure;

FIG. 18 is a schematic diagram of an optional flow of determining a predicted value in Intra TMP Fusion mode according to an embodiment of the present disclosure;

FIG. 19a is a first schematic structural diagram of an optional filter according to an embodiment of the present disclosure.

FIG. 19b is a second schematic structural diagram of an optional filter according to an embodiment of the present disclosure;

FIG. 19c is a third schematic structural diagram of an optional filter according to an embodiment of the present disclosure.

FIG. 19d is a fourth schematic structural diagram of an optional filter according to an embodiment of the present disclosure;

FIG. 19e is a fifth schematic structural diagram of an optional filter according to an embodiment of the present disclosure;

FIG. 19f is a sixth schematic structural diagram of an optional filter according to an embodiment of the present disclosure;

FIG. 20 is a schematic diagram of optional TM-FLM prediction according to an embodiment of the present disclosure.

FIG. 21 is a schematic flow diagram of an optional decoding method according to an embodiment of the present disclosure.

FIG. 22 is a first schematic flowchart of an optional encoding method according to an embodiment of the present disclosure.

FIG. 23 is a second schematic flow diagram of an optional encoding method according to an embodiment of the present disclosure.

FIG. 24 is a third schematic flow diagram of an optional encoding method according to an embodiment of the present disclosure.

FIG. 25 is a schematic flow diagram 4 of an optional encoding method according to an embodiment of the present disclosure.

FIG. 26 is a schematic diagram of a composition structure of a decoder according to an embodiment of the present disclosure.

FIG. 27 is a schematic diagram of a specific hardware structure of a decoder according to an embodiment of the present disclosure.

FIG. 28 is a schematic diagram of the composition structure of an encoder according to an embodiment of the present disclosure.

FIG. 29 is a schematic diagram of a specific hardware structure of an encoder according to an embodiment of the present disclosure.

FIG. 30 is a schematic diagram of a composition structure of a codec system according to an embodiment of the present disclosure.

DETAILED DESCRIPTION

In order to provide a more detailed understanding of the features and technical contents of the embodiments of the present disclosure, the implementation of the embodiments of the present disclosure will be described in detail below with reference to the accompanying drawings, which are for reference and illustration only, and are not intended to limit the embodiments of the present disclosure.

Unless otherwise defined, all technical and scientific terms used herein have the same meaning as commonly understood by those skilled in the art. The terminology used herein is for the purpose of describing embodiments of the present disclosure only and is not intended to limit the present disclosure.

In the following description, "some embodiments" describes a subset of all possible embodiments, but it is understood that "some embodiments" may be the same subset or different subsets of all possible embodiments, and may be combined with each other without conflict. It should also be pointed out that the terms "first\ second\ third" used in the embodiments of the present disclosure are only used to distinguish similar objects, and do not represent a specific ordering for the objects, and it is understood that "first\ second\ third" can be interchanged with a specific order or a priority order where allowed, so that the embodiments of the present disclosure described herein can be implemented in an order other than that illustrated or described herein.

It should also be pointed out that if a similar description of "first/second" appears in the present disclosure, the following description will be added. In the following description, the terms "first, second, third" are merely used to distinguish similar objects and do not represent a specific ordering of objects. It is understood that "first, second, third" can be interchanged for a specific order or order where allowed, so that the embodiments of the present disclosure described herein can be implemented in an order other than that illustrated or described herein.

Before further describing the embodiments of the present disclosure in detail, the terms used in the embodiments of the present disclosure will be described first and are applicable to the following explanations:

Video coding standard, Versatile Video Coding (H.266/VVC);
Intra Block Copy (IBC);
Intra Template Matching Prediction (Intra TMP);
Block Vector (BV);
Template Matching (TM);
Advanced Motion Vector Prediction (AMVP);
Advanced Block Vector Prediction (ABVP);
Combined inter and intra prediction (CIIP);
Geometric Partitioning Mode (GPM); and
Local Illumination Compensation (LIC).

In order to facilitate understanding of the embodiments of the present disclosure, first, the related concepts of BV prediction technologies mentioned in the embodiments of the present disclosure are briefly introduced as follows:
BV prediction technologies mainly include Intra Block Copy (IBC) prediction and Intra template matching prediction (IntraTMP). These two BV prediction technologies are described below in detail.

Intra Block Copy (IBC) is an extended tool of Video Coding Standard (VVC) for Screen Content Coding, which can significantly improve the efficiency of screen content coding.

IBC is a block-level coding mode. Similar to inter-prediction technology, the coding end performs motion search to find a best block vector (BV) for each coding block. The motion search here can be understood as block matching, and the BV here may also be called Motion Vector (MV). A BV is a vector pointing from a current block to a reference block. Different from the inter-prediction technology, the best BV of IBC is obtained by searching the reconstructed region of the picture where the current coding block is located (i.e. the current coding picture), while the inter motion vector is obtained by searching neighboring reference pictures of the current coding picture in the time domain.

IBC technology is used as an important tool for screen content coding in H.265/HEVC SCC, H.266/VVC, AV1, AVS3, EVC and other coding standards. In Enhanced Compression Model (ECM), as the exploration model for the next-generation H.266/VVC coding standard, IBC technology remains used as a tool for screen content coding, and this tool has been extended into a multi-mode tool set and is also brought into natural-video coding, becoming a more versatile video coding tool.

Intra template matching prediction (IntraTMP) is also a coding mode that performs intra prediction based on BVs. Different from IBC, the motion search block matching process of Intra TMP is carried out at both the decoding end and the encoding end. The matching criterion for this search process is not based on coding block matching, but on template matching (TM).

On the decoding end, the basic decoding process for the IBC mode or IntraTMP mode includes: obtaining a BV, using the BV to obtain a predicted value, and determining a reconstructed value.

It should be noted that the decoder can determine a decoding mode, such as the IBC mode or the IntraTMP mode, corresponding to a current block based on corresponding syntax element information (mode identification information) by parsing a bitstream.

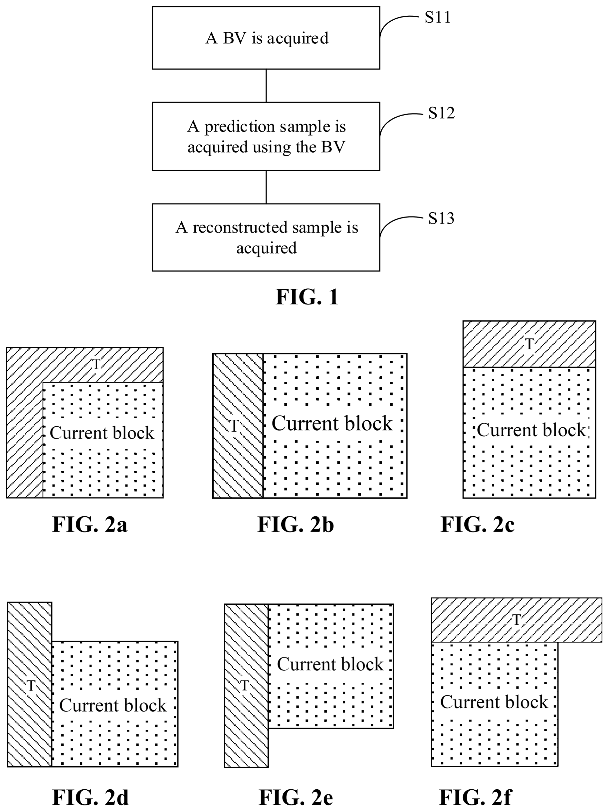

Referring to FIG. 1, FIG. 1 shows a schematic flow diagram of an optional process of a decoding end obtaining a reconstructed pixel value according to an embodiment of the present disclosure. As shown in FIG. 1, the process of obtaining a reconstructed pixel value by the decoding end includes S11 to S13.

In S11: a BV is acquired.

At the decoding end, a decoder obtains a BV corresponding to a current block by parsing a bitstream.

Specifically, the decoder obtains the BV through syntax parsing. In practice, the BV can be obtained in many ways, so the bitstream may contain mode information of a BV obtaining mode and corresponding parameter information. For example, if an IBC merge mode is obtained from a syntax element, the decoder may construct a merge list, parses candidate indexes of the merge list, and then obtains specific information of the BV from the corresponding candidate in the merge list according to the indexes; for another example, if it is an ordinary IBC mode (i.e. IBC-ABVP mode), the decoder may obtain specific information of the BV by parsing the value of the syntax element that describes the BV or a BV prediction difference in the bitstream; for another example, if it is the IntraTMP mode, the decoder may directly obtain a best BV through BV search within a certain range, or construct a list of candidate BVs, and then determine the specific information of the ultimately used BV based on the syntax element in the bitstream.

In S12: a prediction sample is acquired using the BV.

At the decoding end, the decoder uses the BV to obtain a predicted value corresponding to the prediction sample. Here, obtaining the predicted value using the BV usually refers to obtaining the predicted value of the current block by copying the corresponding region pointed to by the BV.

In S13: a reconstructed sample is acquired.

At the decoding end, if there is a prediction residual, the decoder is required to parse the bitstream to obtain a prediction residual, and then add the prediction residual and the predicted value to obtain a final reconstructed value of the current block.

Considering that both the IBC merge mode and the IntraTMP mode involve template matching and template-matching cost in the codec process, template matching is described in a unified way below.

Referring to FIGS. 2a, 2b, 2c, 2d, 2e, and 2f, FIGS. 2a to 2f are schematic diagrams of an optional template type according to an embodiment of the present disclosure. As shown in FIGS. 2a to 2f, there are many template types, including but not limited to the template types shown in FIGS. 2a to 2f. Fig. 2a, Fig. 2b and Fig. 2c are three commonly used template types. FIG. 2a shows a template type as a region on the above and left side of the Current Block; FIG. 2b shows a template type as a region on the left side of the current block; the template type shown in FIG. 2c is a region above the current block. It should be noted that different template types can be used at the same time or can be used separately (for example, only the template type shown in FIG. 2a is used), and syntax elements may specify available template types.

In addition, the template type adopted by the current block may be determined by parsing the bitstream and parsing the corresponding syntax element information. The current block may use a template type to perform template matching, thereby determining the BV of the current block; or the current block may perform template matching using a combination of a plurality of template types, thereby determining the BV of the current block. The present disclosure does not limit this in any way.

The process of calculating TM cost is: expressing a cost value of the reference block and the current block as a pixel difference between the template of the reference block and the template of the current block through a preset cost function.

The preset cost function may be Sum of Absolute Differences (SAD), Sum of Absolute Transformed Differences (SATD), Mean Squared Error (MSE), Sum of Squared Differences (SSD), Mean Absolute Difference (MAD), Mean Squared Deviation (MSD), Normalized Cross-Correlation (NCC), and the like.

Note that the preset cost function may be any one of the above-described cost functions or any combination of the above-described cost functions, and the present disclosure does not limit this.

Exemplarily, the cost function SAD may be expressed by Equation (1):

$$SAD(T_i) = \sum_{m=0}^{M-1} |T_{i,m} - T_m|, \, m = 0, 1, \ldots, M-1 \qquad (1)$$

In Equation (1), $T_i$ is a template in a search process, M represents the number of pixels in the template, $T_m$ represents the m-th pixel in the template of the current block, and $T_{i,m}$ represents the m-th pixel in the i-th template of the reference block.

For S11 (obtaining a BV, that is, deriving a BV), the steps of S11 are described in detail below.

As for S11, block vector luma (bvL) and block vector chroma (bvC) are described here, respectively.

(1) Luma component:

The bvL of the current block is determined based on the luma position of the current block as well as the width and height of the current block.

Input: Luma position (xCb, yCb), specifying the upper left sample of the current coding block (current block) relative to the upper left luma sample of the current picture; a variable cbWidth, specifying the width of the current coding block in the luma sample; and a variable cbHeight, specifying the height of the current coding block in the luma sample.

It should be noted that by parsing the bitstream, the decoder can acquire size information (i.e., width and height) of the current block in the header information.

Output: block vector Luma (bvL)

The IBC mode may be roughly classified into two categories: IBC merge mode and IBC ABVP mode (similar to the merge and AMVP modes used in VVC inter prediction), and the process of obtaining a BV may include S21 to S23.

S21, when deriving bvL, it is necessary to establish an IBC block vector candidate list (bvCandList).

In the IBC mode, in the process of obtaining the bvL of the current block, it is necessary to establish a bvCandList, and the bvCandList includes a plurality of candidates.

Note that the number of BVs (that is, the number of candidates) in the bvCandList may be different in different modes. For example, the number of candidates included in the bvCandList of the IBC merge mode may be 6, and the number of candidates included in the bvCandList of the IBC ABVP mode may be 2. In the embodiments of the present disclosure, the number of candidate(s) that the bvCandList may include may be N, where N is a positive integer greater than or equal to 1. The number N of candidate(s) is set in advance, and both the decoder and the encoder agree on or specify the value of N for the bvCandList corresponding to the current block. For example, when the decoder and the encoder agree on or stipulate that the value of N for the bvCandList corresponding to the current block is 8, the number of candidates included in the established IBC bvCandList in the process of encoding or decoding the current block is 8.

In S22: a candidate in the selected list is determined based on the bitstream.

By parsing the bitstream, an index value of the bvL corresponding to the current block is determined, and the candidate corresponding to the current block is determined from the bvCandList according to the index value.

For the IBC mode and the IntraTMP mode, candidate information (i.e., availability conditions) in the bvCandList includes at least one of the following information:

1) Prediction direction (L0 or L1, generally default is L0);
2) BV information (horizontal and vertical components);
3) Reference picture (default is the current picture), the current picture is the current reference picture;
4) Reorder type (for example: no reorder, horizontal reorder and vertical reorder);
5) Whether to use local illumination compensation (LIC) (linear model).

It is to be noted that the above-mentioned availability conditions are merely an example, and may be any one or a combination of the above-mentioned availability conditions. There may be other availability conditions in practice, and the present disclosure does not limit it in any way.

In S23: A final BV is determined based on the candidate.

Further, S21 includes S211 to S215.

S211 includes derivation of a spatial-domain candidate.

When a usage condition is satisfied (for example, the size condition IsGt4by4 is TRUE: the variable IsGt4by4 is set to TRUE when the luma width multiplied by the height is greater than 16), the decoding-specification specified procedure of deriving spatial BV candidates from the neighboring coding units is called using the luma coding block position (xCb, yCb), the luma coding block width cbWidth, and the height cbHeight as inputs, and the outputs are availability flags such as available FlagA1 and available FlagB1, as well as bvA1 and bvB1. The size condition IsGt4by4 represents the restriction on the block size. The availableFlagA1 represents an availability flag for the bvA1, and the availableFlagB1 represents an available flag for the bvB1.

For example, when the value of the availableFlagA1 is a first preset value, it indicates that the bvA1 may be used as a candidate. When the value of the availableFlagA1 is a second preset value, it indicates that the bvA1 cannot be used as a candidate.

Note that the first preset value is different from the second preset value, and the first preset value and the second preset value may be in a parameter form or a digital form. Specifically, the availableFlagA1 may be a parameter written in a profile, or may be a value of a flag, which is not specifically limited here.

For example, for the first preset value and the second preset value, the first preset value may be set to 1, and the second preset value may be set to 0; alternatively, the first preset value may be set to 0, and the second preset value may be set to 1; alternatively, the first preset value may be set to true, and the second preset value may be set to false; alternatively, the first preset value may be set to false, and the second preset value may be set to true. It is not specifically limited here.

Further, the determination condition (i.e., the availability condition) of availability detection for each candidate includes at least one of the following:

Condition 1: whether the offset position obtained by adding a BVP to the current block position does not exceed a Picture boundary;
Condition 2: whether the current block position plus the block position pointed to by a BVP does not cover the current block;
Condition 3: whether the offset position obtained by adding a BVP to the current block position does not exceed an IBC available region;
Condition 4: whether the current block position plus the block position pointed to by a BVP has been reconstructed.

Note that, since the reference block is a reconstructed block, the reference block has BV information, and on this basis, it is necessary to satisfy condition 1, condition 2, condition 3, and condition 4 at the same time before it can be determined as a candidate.

In addition, the above-mentioned availability conditions (Condition 1, Condition 2, Condition 3, and Condition 4) are merely an example, and the availability conditions include but are not limited to the above-mentioned conditions 1, 2, 3, and 4, and may be any one or any combination of the conditions, and may also include other availability conditions in practice. The embodiments of the present disclosure do not make any limitation thereon.

The availability conditions include, but are not limited to, the above-described condition 1, condition 2, condition 3, and condition 4. The availability conditions are stipulated or agreed by both the encoder and the decoder. When availability detection is carried out on the BV of the current block, the detection is carried out according to the availability conditions stipulated by both parties, and consistent detection results can be obtained.

Furthermore, a BV is selected as a candidate only if the BV satisfies all availability conditions simultaneously.

For example, in a case where the availability conditions for performing availability detection on a BV are agreed by codec parties include condition 1, condition 2, condition 3, and condition 4, if bvA1 only satisfies condition 1, condition 2, and condition 3, and does not satisfy condition 4, the bvA1 is not regarded as a candidate; and if the bvA1 satisfies all the condition 1, condition 2, condition 3, and condition 4, the bvA1 is regarded as a candidate.

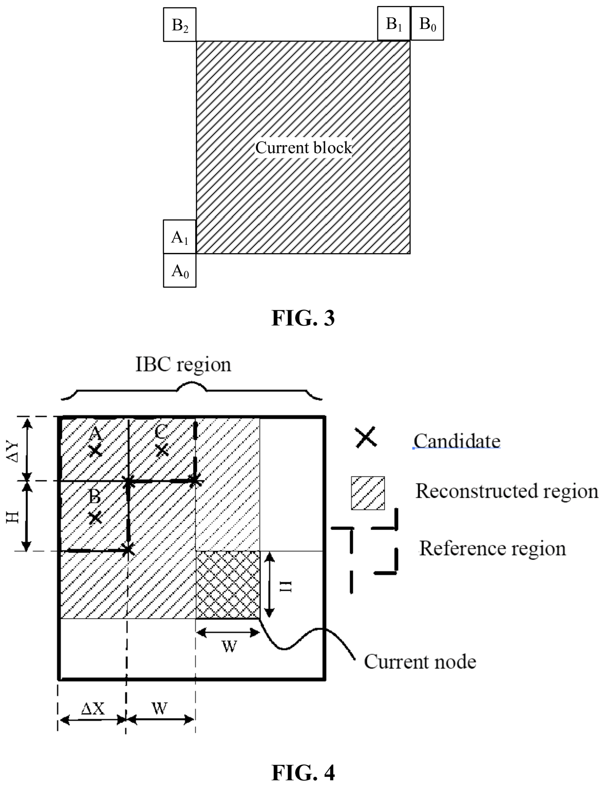

In addition, in the process of determining a candidate, it is required to traverse the neighboring blocks of the current block in a preset order to determine the candidate. The preset order of traversing neighboring blocks is specified by both the encoder and the decoder, and in the codec process, the neighboring blocks of the current block are traversed in the preset order. Referring to FIG. 3, FIG. 3 is a schematic diagram of optional neighboring block positions according to an embodiment of the present disclosure. As shown in FIG. 3, the neighboring blocks of the current block include: A0, A1, B0, B1, and B2, and the preset order (i.e., the traversal order) may be set to: A1 → B1 → B0 → A0 → B2, and the preset order is predetermined or agreed by both codec parties. Of course, the preset order here is merely an example, and the present disclosure is not limited thereto.

S212 includes that: the spatial-domain candidate is added to the candidate list.

When the usage condition is satisfied (e.g. the size condition IsGt4by4 is equal to TRUE), i.e. for candidates satisfying the availability conditions, the bvCandList may be expressed as:

$$i = 0$$

$$\text{if( availableFlagA1 )}$$

$$\text{bvCandList [ i++ ] = bvA1}$$

$$\text{if( availableFlagB1 )}$$

$$\text{bvCandList [ i++ ] = bvB1}$$

For each BV of the current block, whether a BV satisfies the availability condition is determined based on the availability flag of the BV; the BV satisfying the availability condition is added to the bvCandList, and the number of candidates in the bvCandList is updated.

For example, in the process of traversing the neighboring blocks of the current block in the preset order of A1 → B1 → B0 → A0 → B2, whether the availableFlagA1 of the neighboring block A1 is true (or equal to 1) is determined in the preset order of A1 → B1 → B0 → A0 → B2, and when the availableFlagA1 of the neighboring block A1 is true (or equal to 1), the bvA1 corresponding to the neighboring block A1 is used as the i-th candidate in the bvCandList, and i is incremented by 1; it is continued to determine whether the availableFlagB1 of the neighboring block B1 is true (or equal to 1), and when the availableFlagB1 of the neighboring block B1 is true (or equal to 1), the bvB1 corresponding to the neighboring block B1 is used as the i-th candidate in the bvCandList, and i is incremented by 1; it is continued to determine whether the availableFlagB0 of the neighboring block B0 is true (or equal to 1), and when the availableFlagB0 of the neighboring block B0 is false (or equal to 0), it is continued to determine whether the availableFlagA0 of the neighboring block A0 is true (or equal to 1); and so on.

S213 includes: the number of valid candidates in the candidate list is checked.

numCurrCand is used to represent the number of valid candidates in the candidate list. The derivation process of the variable numCurrCand (the number of candidates that have been obtained) is as follows:

If the usage condition is satisfied (for example, the size condition IsGt4by4 is equal to TRUE), numCurrCand is set equal to the number of candidates in bvCandList; otherwise numCurrCand is set to 0.

S214 includes: if the specified number of candidates is not reached in the candidate list, historical-candidate derivation, availability detection and addition are continued.

If the specified number of candidates (for example, the number of candidates specified under the IBC merge mode is 6, and the number of candidates specified under the IBC ABVP mode is 2) is not reached in the candidate list, derivation, availability detection and addition of historical candidates are continued, that is, the BV that appeared in the row where the current CTU is located is selected as a historical candidate from a historical list, and can be filled into the historical list from back to front to update the historical candidate list.

Specifically, when numCurrCand is smaller than MaxNumIbcMergeCand (the maximum number of candidates in the IBC merge mode) and NumHmvpIbcCand (the maximum number of candidates of the historical best BV (Hmvp) in the IBC mode) is larger than 0, bvCandList and numCurrCand are used as inputs and modified bvCandList and numCurrCand are used as outputs to invoke the history based derivation process of IBC BV candidates as specified in the decoding specification.

S215 includes that it is continued to check the number of valid candidates in the candidate list and add other available candidates until the specified number of candidates is reached.

The available candidates include at least one of: pairwise average candidates, and zero-value BV candidates.

Exemplarily, pairwise average candidates may be constructed by utilizing the 1st and 2nd candidates, which may be expressed as:

$$mvAvgLX=(mvCand0LX+mvCand1LX+1)\gg 1$$

Exemplarily, the zero-value BV may be directly set to:

bvCandList [numCurrCand] [0] is set equal to 0. (horizontal component of bv)
bvCandList [numCurrCand] [1] is set equal to 0. (vertical component of bv)

As another example, a group of BVP candidates located in the IBC reference region may be used as candidates that may be added. FIG. 4 is a schematic diagram of optional BVP candidates according to an embodiment of the present disclosure. As shown in FIG. 4, coordinates of a group of BVP candidates are determined by the width and height of the current block and $\Delta X$ and $\Delta Y$ parameters, a reference region is determined in a reconstructed region of the IBC, and a group of BVP candidates are determined as candidates that may be added (shown as A, B, and C in FIG. 4).

Every time a candidate is added to the bvCandList, the number of valid candidates (numCurrCand) in the candidate list increases by 1. Note that the numCurrCand in the candidate list may be written into the bitstream.

In summary, the basic bvCandList can be established by S211 to S215.

On the basis of the bvCandList, if the mode of the current block is the IBC merge mode, cost computation may be performed on an order for the bvCandList by using a template to reorder the candidates in the bvCandList and adjust the order of the candidates in the candidate list. In this way, high spatial correlation can be fully utilized, coded-bit transmission can be reduced, and the coding efficiency can be effectively improved.

For example, for the IBC merge mode, after an intermediate candidate list (i.e., bvCandList) is constructed according to the above list construction method (note that the length of the intermediate candidate list may be greater than or equal to the maximum number of candidates in the IBC merge mode), all candidates in the list are reordered using a template, and the top N (e.g., N = 6) candidates in the sorted list are selected according to the TM cost from low to high.

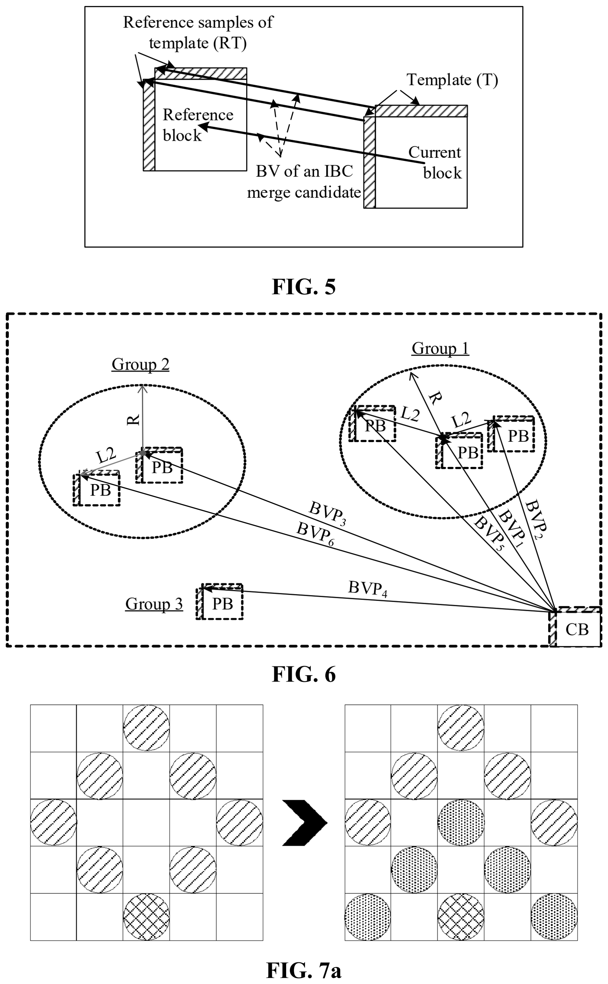

Referring to FIG. 5, FIG. 5 is a schematic diagram of optional template cost calculation according to an embodiment of the present disclosure. As shown in FIG. 5, in the IBC merge mode, the SAD between the template position of the reference block pointed to by each candidate and the template position of the current block are calculated, that is, the cost values between the Template (T) of the current block and the reference sample of template (RT) of the reference blocks pointed to by the BV of an IBC merge candidate are calculated; and cost values of the reference blocks are arranged in ascending order, and the first 6 candidates (N) are selected as an IBC merge candidate list.

On the basis of the bvCandList, if the mode of the current block is the IBC ABVP mode, an operation of removing candidate redundancy may be performed based on distances between candidates, specifically including that: the number of candidates remains at two, and candidate lists are established respectively for integer-pixel precision and 4-pixel precision.

When the mode of the current block is the IBC ABVP mode, if the current block corresponds to a non-Reconstruction-Reordered IBC (RRIBC) mode (without reorder), and if the number of valid BVP candidates exceeds two, up to six BVP candidates in the candidate list are clustered according to the Euclidean distances between the valid BVP candidates, and the clustering radius (R) for a group of BVs is determined as a logarithmic function of the width (cbWidth) and the height (cbHeight) of the current block. If the Euclidean distance between the reference positions pointed to by several BV candidates is less than R, the several BV candidates will be clustered. The radius (R) may be determined by formula (2):

$$R = \log_2 ((cbWidth \cdot cbHeight) \gg MIN\_PU\_SIZE) \qquad (2)$$

In Equation (2), cbWidth represents the width of the current block, cbHeight represents the height of the current block, and MIN_PU_SIZE represents the largest Prediction Unit (PU) size, R. Here, the PU is a candidate.

Referring to FIG. 6, FIG. 6 is a schematic diagram of optional candidate clustering according to an embodiment of the present disclosure. As shown in FIG. 6, when the current block (CB) corresponds to a non-RRIBC mode, if the number of valid BVP candidates exceeds two, up to six BVP candidates (shown by BVP1, BVP2, BVP3, BVP4, BVP5 and BVP6 in FIG. 6) of the candidate list are clustered according to the Euclidean distance between the reference blocks (PB) corresponding to BVPs. As shown in FIG. 6, up to 6 BVP candidates are grouped according to the distance between the reference blocks (PB) pointed to by BVPs. As shown in FIG. 6, if the distance (L2) between the PB pointed to by BVP1 is close to the PB pointed to by BVP2 and the distance (L2) between the PB pointed to by BVP1 and the PB pointed to by BVP5 and both the distances (L2) are smaller than the Radius R (Radius), then the PB pointed to by BVP1, the PB pointed to by BVP2, and the PB pointed to by BVP5 may be clustered and classified into Group 1 (Group1). If the distance (L2) between the PB pointed to by BVP3 and the PB pointed to by BVP6 is smaller than the Radius R (Radius), then the PB pointed to by BVP3 and the PB pointed to by BVP6 may be clustered and classified into Group 2 (Group2). The PB pointed to by BVP4 is far away from the remaining five PBs, so the PB pointed to by BVP4 may be clustered and classified into Group3.

The clustering method is carried out in the order of the candidate list. In each cluster, the BVP with the lowest TM cost is selected as the representative candidate of the group, and then the templates for the representative candidates in all clusters are sorted to select the representative candidates of the first two groups for the motion estimation process.

The candidate clustering shown in FIG. 6 is taken as an example. First, cost values between the templates of the PB pointed to by BVP1, the PB pointed to by BVP2, and the PB pointed to by BVP5 in group 1 and the template of the current block (CB) are calculated and sorted, and the PB with the smallest cost value in group 1 is selected as the representative candidate of group 1. The cost values between the templates of the PB pointed to by BVP3 and the PB pointed to by BVP6 in group 2 and the template of the current block (CB) are calculated and sorted, and the PB with the smallest cost value in group 2 is selected as the representative candidate of group 2. The cost value between the template of the PB pointed to by BVP4 in group 3 and the template of the current block (CB) is calculated and the PB pointed to by BVP4 is taken as the representative candidate of group 3. Then, the representative candidate of group 1, the representative candidate of group 2 and the representative candidate of group 3 are sorted, and the first two representative candidates with the smallest cost value are selected as the final candidates.

In the case that the mode of the current block is the IBC ABVP mode, if the current block corresponds to the RRIBC mode, the candidates are adjusted to the boundary pointing to the valid IBC search region according to the horizontal or vertical direction of the RRIBC mode.

The RRIBC mode is a method in which reference blocks are reordered in row or column coordinate and copied to serve as predicted values when prediction is performed by the reference blocks pointed to by BVs on the current block according to the symmetry characteristics of some graphics and words.

In S22, in the case of the IBV merge mode (general_merge_flag [xCb] [yCb] is true) and the IBC ABVP mode (general _merge_flag [xCb] [yCb] is false), the candidate index bvIdx is derived by the manner below, wherein general _merge_flag represents whether or not it is the IBC merge mode, and the above process may be expressed as follows:

$$bvIdx = general\_merge\_flag[xCb][yCb]?\ Merge\_idx\ [xCb]\ [yCb]:\ bvp\_L0\_flag[xCb]\ [yCb]$$

The decoder parses the bitstream, and when the general _merge_flag of the current block is true (equal to 1), the decoder acquires the index value of the candidate of the current block through the bitstream.

For S23, in the IBC merge mode, the specific bvL can be obtained according to the bvIdx and the bvCandList. The above process may be expressed as:

$$bvL[\ 0\ ] = bvCandList[\ bvIdx\ ][\ 0\ ]$$

$$bvL[\ 1\ ] = bvCandList[\ bvIdx\ ][\ 1\ ]$$

This bvL is the final BV.

When the current block is an IBC Merge Mode with Block Vector Difference (MBVD) mode, similar to the MMVD in the inter-prediction technology of VVC, a candidate is selected with a certain candidate in an IBC merge list as a starting point from a candidate set corresponding to a predefined distance set and directions, and the corresponding BV is used as the final BV. That is, shifting is performed with the current candidate as the center point to obtain a candidate set, and it is continued to select a candidate from the candidate set as the final BV.

For example, in a case where the current block is in the IBC MBVD mode, the distance set is defined as {1 pel, 2 pel, 4 pel, 8 pel, 12 pel, 1 pel, 24 pel, 32 pel, 40 pel, 48 pel, 56 pel, 64 pel, 72 pel, 80 pel, 88 pel, 96 pel, 104 pel, 112 pel, 120 pel, 128 pel}, and BVD directions are positive and negative horizontal directions as well as positive and negative vertical directions.

Basic candidates are selected from the top five candidates in the resorted IBC merge list, and the refined positions (i.e. 20 × 4 candidates) of all possible MBVDs for each basic candidate are reordered based on the SAD cost between the template and the reference for the refined position of each basic candidate. Finally, the first 8 refined positions with the minimum template SAD are reserved for MBVD index coding. Candidates of IBC-MBVD do not inherit reorder types from RR-IBC-coded neighboring blocks. The MBVD index is binarized by Rice codes with a parameter equal to 1.

Further, in the IBC merge mode, after obtaining the bvL based on the above information, a BV may be be partially refined using TM, and the specific operation is to perform a search in a small range with the obtained bvL as the center, and select the best BV in the range as the final BV based on the minimum TM cost. That is, further local refinement is carried out on each of the obtained eight candidates (bvL), and the best BV within the local range of the candidate is obtained as the final BV.

For example, TM refinement is performed on candidates in the candidate list in the IBC merge mode, and a specific implementation process is as follows:

When building candidates, the reorder type defaults to not reordered;
In the IBC TM merge mode, the transmitted syntax element indicates whether to perform TM refinement of integer-pixel precision. The positions of the refined motion vector and the template used in each refinement step are required to comply with the constraints of the reference region.

A search is performed near the pointed positions of candidates, and the size of SAD between the template of the reference block and the template of the current block is used to determine the best position. The search method includes but is not limted to the following: the search range is [-8, 8]. First, a diamond search of integer-pixels is performed to search for eight points near the middle position, as shown in the upper left corner of the figure below. The maximum number of search times is 375. After the best position is determined for the first time, the search is continued. In the subsequent search, even positions are searched for 5 points and odd positions are searched for 3 points.

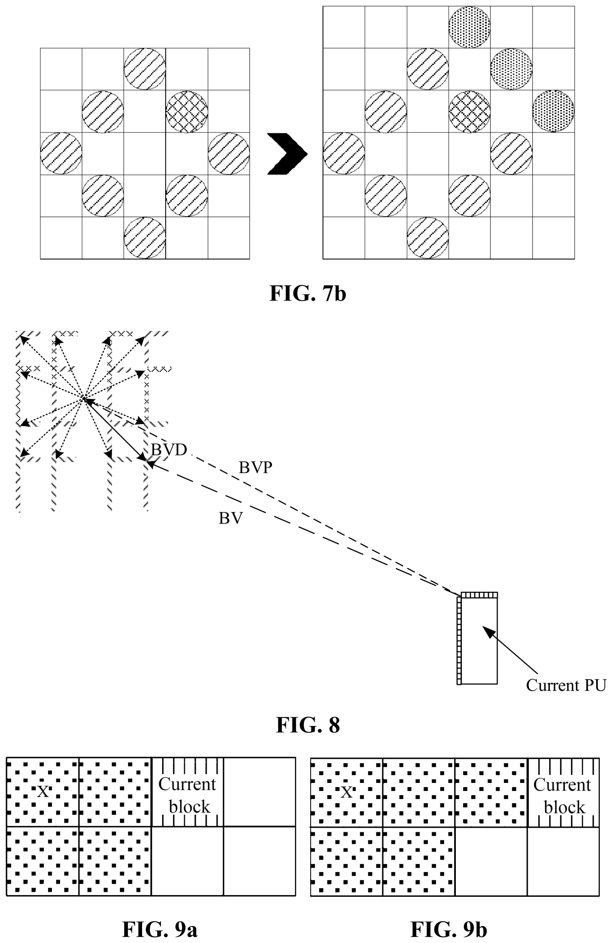

For example, referring to FIG. 7a, FIG. 7a is a first schematic flow diagram of optional candidate search according to an embodiment of the present disclosure. As shown in FIG. 7a, when the best position (shown in a grid circle in FIG. 7a) is determined to be an even point for the first time, the search for five points shown in a black dot circle in FIG. 7a is continued. Referring to FIG. 7b, FIG. 7b is a second schematic flow diagram of optional candidate search provided by the embodiments of the present disclosure. As shown in FIG. 7b, when the best position (shown in a grid circle in FIG. 7a) is determined to be an odd point for the first time, the search for three points shown in a black dot circle in FIG. 7b is continued. After the above diamond search, integer-pixel cross search is performed only once, that is, after the current best position is founded out through the diamond search, check is performed at four positions which are below, right, above and left of the current best position by one pixel, and the final best position is updated, that is, the refined candidate list is updated.

When the current block is in the IBC ABVP mode, the bvL obtained by the bvIdx and the bvCandList is the predicted bvL, and the true bvL is required to be adjusted by adding a BV Difference (BVD). The specific generalized process includes S31 to S33:

In S31, the horizontal and vertical components of the BVD are obtained, where MvdL0 is the forward motion vector difference. The above process can be expressed as:

$$\text{bvd}[\,0\,] = \text{MvdL0}[\,\text{xCb}\,][\,\text{yCb}\,][\,0\,]$$

$$\text{bvd}[\,1\,] = \text{MvdL0}[\,\text{xCb}\,][\,\text{yCb}\,][\,1\,]$$

In S32, a rounding operation is performed on the obtained predicted bvL, wherein the right shift parameter AmvrShift is for the rounding, and the left shift parameter AmvrShift is used to improve the resolution. The above process can be expressed as:

$$\text{offset} = (\,\text{AmvrShift} == 0\,)\,?\,0:(\,(\,1 << (\,\text{AmvrShift} - 1\,)\,) - 1\,)$$

$$\text{bvL}[\,0\,] = \text{Sign}(\,\text{bvL}[\,0\,]\,)\,*$$
$$(\,(\,(\,\text{Abs}(\,\text{bvL}[\,0\,]\,) + \text{offset}\,) >> \text{AmvrShift}\,) << \text{AmvrShift}\,)$$

$$\text{bvL}[\,1\,] = \text{Sign}(\,\text{bvL}[\,1\,]\,)\,*$$
$$(\,(\,(\,\text{Abs}(\,\text{bvL}[\,1\,]\,) + \text{offset}\,) >> \text{AmvrShift}\,) << \text{AmvrShift}\,)$$

In S33, the true bvL is derived as follows, and its range is required to be controlled between - 217 and 217⁻¹. The above process can be expressed as:

$$\text{u}[\,0\,] = (\,\text{bvL}[\,0\,] + \text{bvd}[\,0\,] + 218\,)\,\%\,218$$

$$\text{bvL}[\,0\,] = (\,\text{u}[\,0\,] >= 217\,)\,?\,(\,\text{u}[\,0\,] - 218\,):\text{u}[\,0\,]$$

$$\text{u}[\,1\,] = (\,\text{bvL}[\,1\,] + \text{bvd}[\,1\,] + 218\,)\,\%\,218$$

$$\text{bvL}[\,1\,] = (\,\text{u}[\,1\,] >= 217\,)\,?\,(\,\text{u}[\,1\,] - 218\,):\text{u}[\,1\,]$$

Referring to FIG. 8, FIG. 8 is a schematic diagram of optional BV determination BV according to an embodiment of the present disclosure, in which, after horizontal and vertical components of the BVD of the current PU are obtained, the final BV is determined based on the BVP and the BVD corresponding to the current PU.

The method of acquiring a BVD in S31 may be inferred from syntax elements obtained by other coding methods. The BVD in the IBC ABVP is in units of sub-pixels, integer-pixels, or 4 pixels. When coding is performed, its symbol can be predicted, and its suffix of the exponential Golumbus code obtained after binarization can also be predicted. Therefore, its syntax elements can be obtained from the BVD value: whether it is 0 indicated by a flag, prefix, symbol, suffix and multiple pieces of information, and the actual BVD value may be obtained by analyzing the information combination.

In a specific embodiment, an identifier indicating whether the BVD is 0 is context coded. The value of (absolute value -1) is binarized using a first-order exponential Columbus, the first 5 bins of EG1 prefix are context coded, and the remaining prefixes are bypass coded. Up to 4 bins of the EG1 suffix are context coded to transmit a prediction index, and the other bins of the EG1 suffix are bypass coded. Two bins of the symbol bit transmit the symbol prediction index using context coding. Two suffix bins respectively in horizontal and vertical directions for prediction-index transmission and two symbol bins respectively in horizontal and vertical directions for prediction-index transmision are sorted using the template of the current block and the template at the corresponding BV, to derive prediction indexes of the suffix and the symbol.

The final derived BV should be within a specified range (a coordinate range with rows and columns as units).

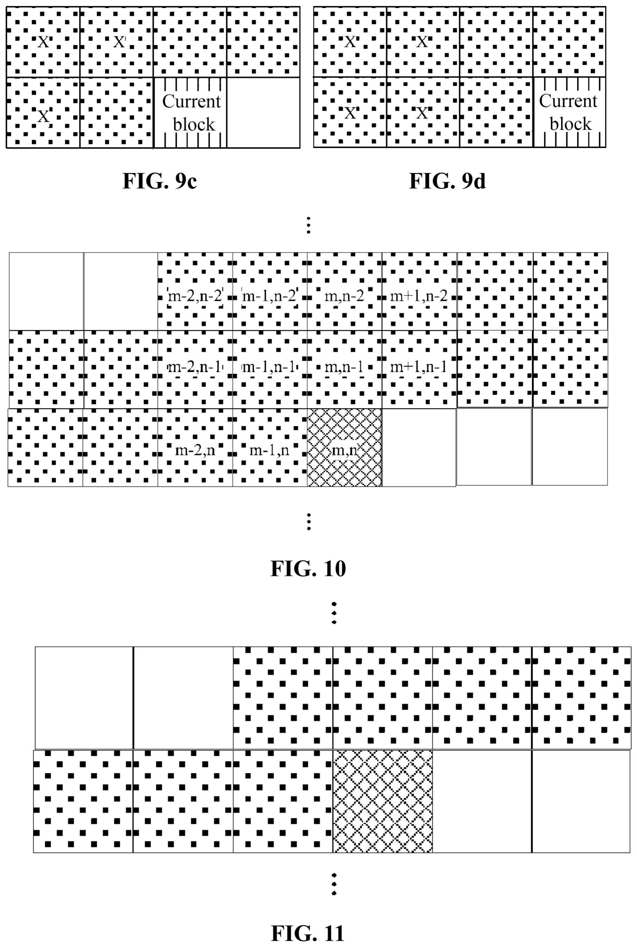

For example, in VVC, the reference region of IBC is 128x128, and for a CTU having a size of 128x128, the reference region can be shown in FIGS. 9a to 9d. FIG. 9a is a first schematic diagram of an optional IBC reference region according to an embodiment of the present disclosure. As shown in FIG. 9a, the reference block in the reference region of the current block may include three reference blocks in a hatched portion, and one block marked with "×" is not used as a reference block. FIG. 9b is a second schematic diagram of an optional IBC reference region according to an embodiment of the present disclosure. As shown in FIG. 9b, the reference block in the reference region of the current block may include three reference blocks in a hatched portion, and two blocks marked with "×" are not used as reference blocks. FIG. 9c is a third schematic diagram of an optional IBC reference region according to an embodiment of the present disclosure. As shown in FIG. 9c, the reference block in the reference region of the current block may include three reference blocks in a hatched portion, and the three blocks marked with "×" are not used as reference blocks. FIG. 9d is a schematic diagram 4 of an optional IBC reference region according to an embodiment of the present disclosure. As shown in FIG. 9d, the reference block in the reference region of the current block may include three reference blocks in a hatched portion, and the four blocks marked with "×" are not used as reference blocks.

For example, in ECM 7.0, when the size of a CTU is 128, the reference region of the IBC may be shown in FIG. 10. As shown in FIG. 10, one box represents one CTU, a grid box represents the CTU in which the current block is located, and a black dot box represents its reference region. Specifically, assuming that the current block to be coded is located at CTU $(m, n)$, the reference region includes CTUs with indices $(m - 2, n - 2)$... $(W, n - 2)$... $(0, n - 1)$... $(W, n - 1)$, $(0, n)$... $(m, n)$, W representing the maximum horizontal index within the current Tile, Slice, or Picture.

For example, when the size of a CTU is 256, the reference region of the IBC may be shown in FIG. 11. As shown in FIG. 11, the reference region is adjusted, one box represents one CTU, a grid box represents the CTU in which the current block is located, and a black dot box represents its reference region.

The range for each block to perform BV search (or local search) is restricted to horizontal $[-(C << 1), C >> 2]$ and vertical $[-C, C >> 2]$ to accommodate reference-region expansion, where C denotes a CTU size.

The above is the method of obtaining bvL in the IBC related mode, while in the IntraTMP mode, the input and output for obtaining bvL are basically the same as those in the IBC related mode, but the specific method is different. The main difference is that the search is performed at the decoding end.

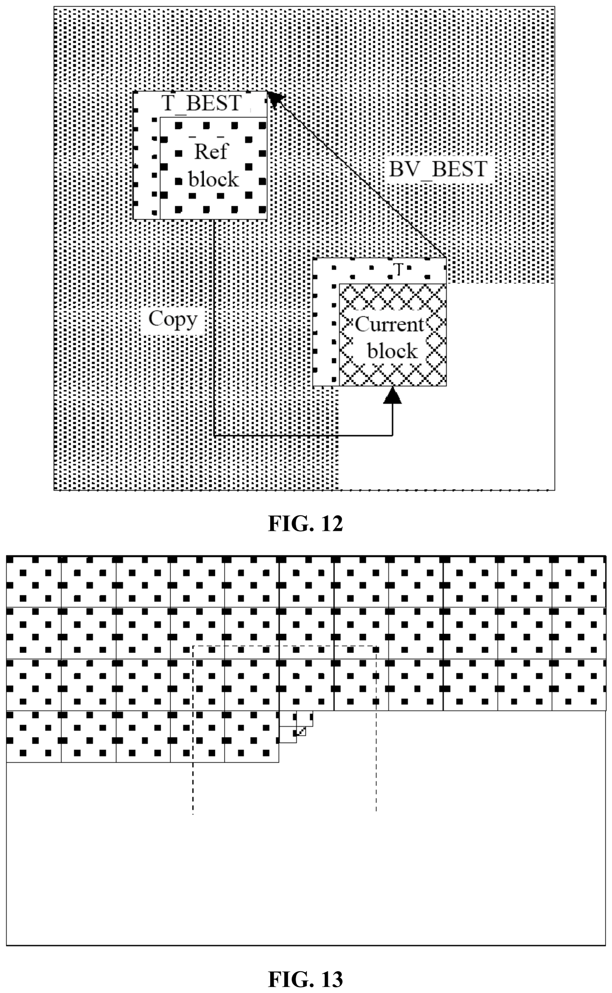

Referring to FIG. 12, FIG. 12 is a schematic diagram of an optional Intra TMP prediction process according to an embodiment of the present disclosure. As shown in FIG. 12, in the Intra TMP mode, the decoding end searches within a certain range near a zero-value BV to find a best BV (BV_best) based on the minimum template-matching (TM) cost as a criterion, or constructs a best BV list. It should be noted that the zero-value BV is the current block, that is, the decoder searches with target of minimum TM cost within a certain range near the current block, obtains the reference picture (Ref Block) corresponding to the best template (T-BEST) with the minimum TM cost, and uses the best BV (BV-BEST) corresponding to the reference picture as the final BV.

Referring to FIG. 13, FIG. 13 is a schematic diagram of an optional template search region according to an embodiment of the present disclosure. As shown in FIG. 13, a dotted box represents a searchable region of a template, and a middle box of the dotted box represents a current block. It can be seen that the searchable region of the template of the current block is a square region. Compared with the reference region in the IBC mode shown in FIGs. 10 and 11, the reference region in the Intra TMP mode shown in FIG. 13 is more square-shaped, and the reference region in the IBC mode is slender.

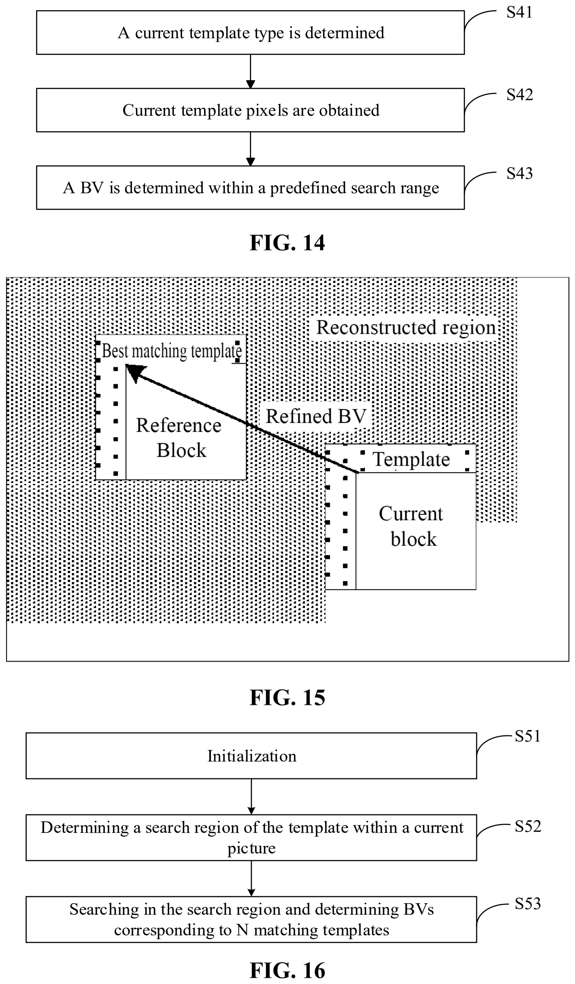

Referring to FIG. 14, FIG. 14 is a schematic diagram of an optional prediction flow in IntraTMP mode according to an embodiment of the present disclosure, and as shown in FIG. 14, the prediction flow of the IntraTMP mode includes S41 to S43.

In S41, a current template type is determined;

In S42: current template pixels are obtained; and
In S43: A BV is determined within a predefined search range.

In the IntraTMP mode, a template type is first obtained, and template pixels around a current block are obtained accordingly, and search is performed within the predefined search range. If a final BV is directly determined based on TM cost, an candidate with the smallest TM cost is the final BV. If a BV candidate list is established based on TM cost, the list stores a plurality of BV candidates in the order of TM cost from small to large, and then a corresponding syntax element in a bitstream determines which BV candidate is finally selected. This selected BV candidate will be the final BV.

(2) Chroma component:

In the IBC mode or IntraTMP mode of chroma components, BV chroma can be derived according to BV luma, and then prediction and reconstruction can be realized according to the BV chroma. The process of deriving the BV chroma from the BV luma is as follows:

Input: bvL (1/16 pixel precision);
Output: bvC (Block Vector Chroma) (1/32 pixel precision).

The derivation process may be direct scaling, or scaling followed by refinement with TM. Examples of scaling embodiments are as follows:

$$bvC[\,0\,] = (\,(\,bvL[\,0\,] >> (\,3 + SubWidthC\,)\,) * 32)$$

$$bvC[\,1\,] = (\,(\,bvL[\,1\,] >> (\,3 + SubHeightC\,)\,) * 32)$$

The variables SubWidthC and SubHeightC depend on the chroma format sampling structure specified by sps_chroma_format_idc. Table 1 shows the correspondence relationship of the chroma format sampling structure. The specific correspondence relationship is as follows:

Table 1

| chroma format sampling structure | chroma sampling format | SubWidthC | SubHeightC |
|---|---|---|---|
| 0 | monochrome | 1 | 1 |
| 1 | 4:2:0 | 2 | 2 |
| 2 | 4:2:2 | 2 | 1 |
| 3 | 4:4:4 | 1 | 1 |

Embodiments of the refinement operation may be as follows.

Referring to FIG. 15, FIG. 15 is a schematic diagram of an optional refinement flow in IntraTMP mode according to an embodiment of the present disclosure. As shown in FIG. 15, a current block is refined by TM, that is, after obtaining BV luma, the position of a chroma block and the BV are used to find an offset position, and refinement is performed using the template in the vicinity of the offset position, and the best BV (refined BV) is obtained based on the minimum TMcost.

For S12, (using BV to obtain prediction samples), the steps of S12 are described in detail below:

Inputs: Luma position (xCb, yCb), indicating the upper-left-corner sample of the current coding block relative to the upper-left-corner luma sample of the current picture; a variable cbWidth, indicating the width of the current coding block in the luma sample; a variable cbHeight, indicating the height of the current coding block in the luma sample; a bv variable cIdx, indicating the color component index of the current block; and
Outputs: an array of predicted samples (predSamples).

An example of the derivation process of a prediction block by directly copying is as follows.

When cIdx is equal to 0, which represents a luma component, for x = xCb.. xCb + cbWidth - 1 and y = yCb.. yCb + cbHeight - 1:

$$xVb = (x + (bvL[0] >> 4))\ \&\ (IbcBufWidthY - 1)//\text{Restore to a position of integer-pixel}$$

precision of the component

$$yVb = (y + (bvL[1] >> 4))\ \&\ (CtbSizeY - 1)$$

$$predSamples\,[x]\,[y] = ibcVirBuf\,[0]\,[xVb]\,[yVb]\,//\text{Predicted value of one pixel}$$

IbcBufWidthY is the width of the luma pixels of the reconstruction buffer stored in the IBC, CtbSizeY is the size of a Coding Tree Unit (CTU), and ibcVirBuf is the reconstruction pixel stored in the IBC.

When cIdx is not equal to 0, which represents a chroma component, for x = xCb/SubWidthC.. xCb/SubWidthC + cbWidth/SubWidthC - 1 and y = yCb/SubHeightC.. yCb/SubHeightC + cbHeight/SubHeightC - 1:

$$xVb = (x + (bvC\,[0] >> 4))\ \&\ (IbcBufWidthC - 1)$$

$$yVb = (y + (bvC\,[1] >> 4))\ \&\ ((CtbSizeY/subHeightC) - 1)$$

$$predSamples\,[x]\,[y] = ibcVirBuf\,[cIdx]\,[xVb]\,[yVb]$$

In addition to the above basic acquisition methods, there is also an acquisition method in which a prediction region is required to be reordered horizontally or vertically to serve as a predicted value in an IBC reorder mode. For example, a syntax element indicates whether to reorder, and if reordered, further indicates whether to reorder horizontally or vertically. The decoding end performs horizontal or vertical rearrangement of reference-region pixels based on the indication of the syntax to obtain a predicted pixel value of the coding block.

In addition to the above acquisition process, a model between a current block and a prediction region may be established using the template, and a prediction block may be processed based on the model to obtain a predicted value of the current block. For example, the IBC Local Illumination Compensation (LIC) mode, applied to IBC merge and IBC ABVP, compensates for local illumination variations with a linear equation. The same as the LIC of inter prediction of VVC, the parameters of the linear equation may be represented by a scaling parameter $\alpha$ and an offset parameter $\beta$, i.e. $\alpha * p\,[x] + \beta$ to compensate for illumination variation, where p [x] is the reference sample pointed to by the position x of the BV in the current picture. The least squares method is used to derive the linear-model parameters.

In addition to obtaining the predicted value as described above, weighted prediction with other intra prediction methods may be performed, and the result after the weighted prediction may be used as the final prediction result.

The weighted prediction methods include one that draws on the Combined Inter and Intra Prediction (CIIP) of VVC, which means weighting and combining the results obtained from the above prediction process and the prediction results obtained from the ordinary intra directional prediction mode at each pixel position; and the weighted prediction methods also include one that draws on the inter geometric prediction mode (GPM) of VVC, which is based on a wedge partition, specifically, using results obtained by different prediction modes in different wedge regions and performing weighted mixing according to certain rules near the wedge partition line.

The operation process in the IBC CIIP mode is taken as an example: an IBC predicted value of a current block is weighted and fused with a predicted value of an intra mode, and the IBC prediction may be carried out by general merge, TM merge, MBVD and ABVP modes.

In the case where the IBC prediction is general IBC merge, TM merge, MBVD modes, the weight ratio of the IBC prediction to the intra prediction is 13: 3, intra modes include a TIMD mode of a current block and a intra prediction mode at a candidate BV. If a second prediction mode and a first prediction mode in the intra modes are the same, it is determined whether the first prediction mode is a PLANAR mode, and if it is determined the first prediction mode is a PLANAR mode, the second prediction mode is replaced with a horizontal prediction mode, otherwise, the second prediction mode is replaced with the PLANAR mode.

In the case where the IBC prediction is the ABVP mode, the weight ratio of the IBC prediction to the intra prediction is 1: 1, the TIMD mode is obtained as the first prediction mode of the intra prediction modes, and if a deduced prediction mode is a horizontal prediction mode, the PLANAR mode is obtained as the second prediction mode of the intra prediction modes, otherwise, the horizontal prediction mode is acquired as the second prediction mode.

The operation process in the IBC GPM mode is taken as an example: general merge and TM merge may be applied to IBC prediction. One partition is IBC mode and one partition is INTRA mode. An intra prediction mode (IPM) candidate list is constructed using the same method as inter GPM, and the size of the IPM candidate list is predefined to be 3.

In specific implementation, a total of 48 geometric partition modes may be partitioned into two geometric partition mode sets. Table 2 is a first geometric partition model set, and Table 3 is a second geometric partition model set.

Table 2

| ibc_gpm_partition_idx | 0 | 1 | 2 | 3 | 4 | 5 | 6 | 7 |
|---|---|---|---|---|---|---|---|---|
| angleIdx | 0 | 0 | 8 | 8 | 16 | 16 | 24 | 24 |

(continued)

| distanceIdx | 1 | 3 | 1 | 3 | 1 | 3 | 1 | 3 |
|---|---|---|---|---|---|---|---|---|

Table 3

| ibc_gpm_partition_idx | 0 | 1 | 2 | 3 | 4 | 5 | 6 | 7 | 8 | 9 |
|---|---|---|---|---|---|---|---|---|---|---|
| angleIdx | 2 | 2 | 2 | 3 | 3 | 3 | 4 | 4 | 4 | 5 |
| distanceIdx | 0 | 1 | 3 | 0 | 1 | 3 | 0 | 1 | 3 | 0 |
| ibc_gpm_partition_idx | 10 | 11 | 12 | 13 | 14 | 15 | 16 | 17 | 18 | 19 |
| angleIdx | 5 | 5 | 11 | 11 | 11 | 12 | 12 | 12 | 13 | 13 |
| distanceIdx | 1 | 3 | 0 | 1 | 3 | 0 | 1 | 3 | 0 | 1 |
| ibc_gpm_partition_idx | 20 | 21 | 22 | 23 | 24 | 25 | 26 | 27 | 28 | 29 |
| angleIdx | 13 | 14 | 14 | 14 | 18 | 18 | 19 | 19 | 20 | 20 |
| distanceIdx | 3 | 0 | 1 | 3 | 1 | 3 | 1 | 3 | 1 | 3 |
| ibc_gpm_partition_idx | 30 | 31 | 32 | 33 | 34 | 35 | 36 | 37 | 38 | 39 |
| angleIdx | 21 | 21 | 27 | 27 | 28 | 28 | 29 | 29 | 30 | 30 |
| distanceIdx | 1 | 3 | 1 | 3 | 1 | 3 | 1 | 3 | 1 | 3 |

When the IBC GPM is used, flags of the IBC GPM sets are transmitted to indicate whether a first or second GPM set is selected, and then GPM indexes are transmitted; and partition flags within an IBC-GPM picture are transmitted to indicate whether intra prediction is used for the first sub-partition. The intra prediction requires transmission of an intra prediction mode index; and the IBC prediction requires transmission of an MEGRE index.

In the IntraTMP mode, in addition to the basic copying method to obtain a predicted value, there is also a method of obtaining the predicted value by performing filtering and fusion using corresponding positions of multiple BVs and a method of performing fused prediction with an ordinary Intra mode.

For example, after a BV candidate list is obtained using template matching during the search in the decoding-end region, the top N candidates (for example, N = 3) are selected for weighted fusion. This method may be called as an IntraTMP Fusion mode.

Or after obtaining a best BV, a plurality of points around the BV are taken, and the corresponding predicted values of the plurality of points are weighted and fused to obtain predicted values. This method may be called as an IntraTMP FLM mode.

Or after obtaining a best BV, a predicted value obtained by using the BV and a predicted value obtained by an ordinary Intra mode such as Planar mode or a directional mode (the directional mode can be deduced by TIMD or obtained by positioning an Index transmitted in a bitstream in an Intra candidate list) are weighted and combined to obtain a predicted value. This method may be called as an IntraTMP CIIP mode.

Referring to FIG. 16, FIG. 16 is a first schematic diagram of an optional search flow in Intra TMP Fusion mode according to an embodiment of the present disclosure. As shown in FIG. 16, the search flow in the Intra TMP Fusion mode includes S51 to S53.

S51 includes initialization;
S52 includes determining a search region of the template within a current picture; and
S53 includes searching in the search region and determining BVs corresponding to N matching templates.

In the IntraTMP Fusion mode, the Intra TMP Fusion technique is used to search in the search region and determine BVs corresponding to N matching templates.

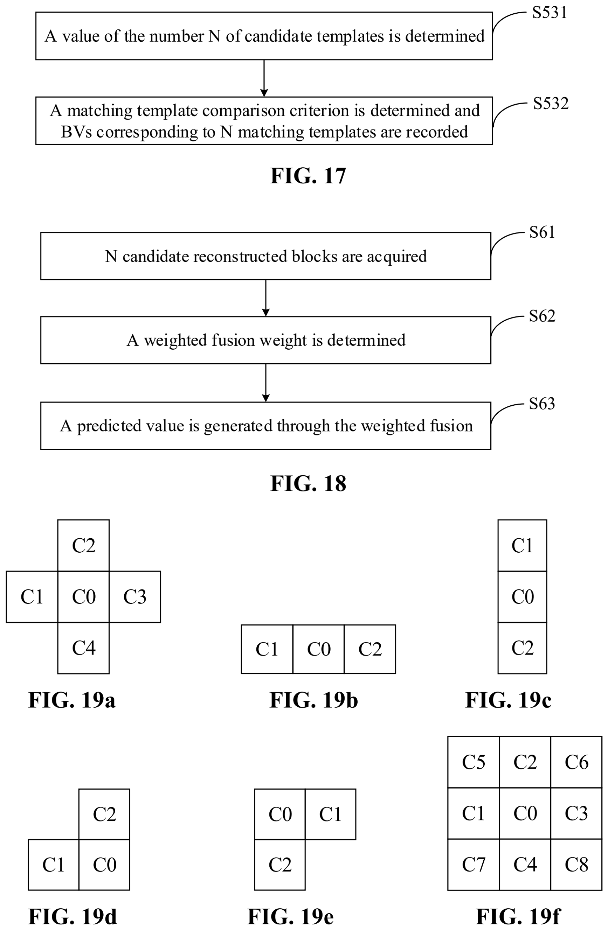

Further, referring to FIG. 17, FIG. 17 is a second schematic diagram of an optional search flow in Intra TMP Fusion mode provided by an embodiment of the present disclosure. As shown in FIG. 17, S53 includes S531 to S532.

S531 includes that: a value of the number N of candidate templates is determined.

In Intra TMP Fusion technology, it is first required to determine the value of N, where N may be artificially preset as a certain constant such as 4, or N may also be within a certain numerical range, for example, the value of N may be any integer in [2, 8]. By artificially presetting the range of values of of N, and the best N value may be determined at the encoding end by means of cost 1 rough selection, or cost 2 rough selection, or cost 3 rough selection, or cost 4 fine selection, etc., and the best value of N may be transmitted in the form of bitstream to the decoding end. The cost 1, 2, 3, 4 may be one of the cost functions used to mode measurement, such as SAD, SATD, MSE, MAD, RDO, etc.

S532 includes that a matching template comparison criterion is determined and BVs corresponding to N matching templates are recorded.

After determining the value of the number N of candidate templates, it is required to select BVs corresponding to N matching candidate templates according to a comparison criterion.

Here, the operation of searching for a matching template and recording a BV is the same as the operation in the existing Intra TMP described above. The difference is that Intra TMP Fusion filters and records a plurality of BVs (BVn) on the basis of this operation, calculates the TM cost according to the BVn, that is, according to the template offsets pXn and pYn, and records the BVs corresponding to N matching templates with smaller cost. Here, the N matching templates are called candidate templates.

The TM cost may be one of SAD, SATD, MSE, MAD, RDO, correlation coefficient and the like cost functions used for mode measurement.

The matching cost comparison criterion adopted in this scheme is Mean Absolute Difference (MAD), and the calculation formula is as follows:

$$\mathrm{MAD(refT)} = \frac{1}{M}\sum_{m=0}^{M-1}|\mathrm{refT}_m - \mathrm{curT}_m| \qquad (3)$$

In Equation (3), M represents the number of pixels in the template, [curT] _m represents the template of a current block, and [refT]_m represents the template of a reference block.

In the Intra TMP Fusion technique of the present disclosure, after obtaining BVs corresponding to N candidate templates, N candidate reconstructed blocks are obtained through the BVs, and then the N candidate reconstructed blocks are weighted and fused to obtain a predicted block of a current coding block. Referring to FIG. 18, FIG. 18 is a schematic diagram of an optional flow of determining a predicted value in Intra TMP Fusion mode according to an embodiment of the present disclosure. As shown in FIG. 18, the flow of determining a predicted value of the Intra TMP Fusion mode includes S61 to S63.

S61 includes that: N candidate reconstructed blocks are acquired.

After obtaining the BVs corresponding to N candidate templates, the candidate reconstructed blocks RefBlockn are obtained directly from a current image according to BVn, wherein the horizontal offset and the vertical offset of BVn are pXn and pYn, where n = 0, 1..., N-1.

Simple translational copy is used. The specific operation is as follows: for x = 0... nTbW-1, y = 0... nTbH-1,

$$\mathrm{RefBlockn} \ [x] \ [y] = \mathrm{recSamples} \ [x + pXn] \ [y + pYn]$$

where recSamples represents the reconstructed pixels of the current picture.

S62 includes that: a weighted fusion weight is determined.

After the N candidate reconstructed blocks RefBlock are obtained, it is required to calculate the weight W for the weighted fusion of the N candidate reconstructed blocks. The weight may be a predefined determination value, or may be a value adaptively calculated using a cost value, a pixel value, or the like.

In the Intra TMP Fusion technique in the embodiments of the present disclosure, the weighted fusion weight is derived by minimizing the Mean Squared Error (MSE) between the reconstructed values of the candidate templates refTn and the pixel values of the templates refpredTn to be predicted.

Specifically, in the MSE minimization process, the autocorrelation matrix of the first P matching reference samples refT and the cross correlation vector between the first P matching reference samples refT and the neighboring template sample curT of the current coding block are used as inputs, and the weight of the reconstructed block corresponding to each matching reference candidate is output.

S63 includes that: a predicted value is generated through the weighted fusion.

A prediction block is obtained by calculation according to each candidate reconstructed block and its corresponding weighted fusion weight. Specifically, the value of each candidate reconstructed block and its corresponding weight are multiplied and accumulated to obtain the current prediction block (i.e., weighted prediction). The calculation formula is as follows:

For x = 0... nTbW-1, y = 0... nTbH-1, the predicted value is calculated as follows:

$$\mathrm{predSamples}_{x,y} = \sum_{p=0}^{P-1} w_{p,x,y} * \mathrm{RefBlock}_{p,x,y} \qquad (4)$$

The spatial storage of each predicted value predSamples_(x, y) is the output prediction block of Intra TMP Fusion.

In the IntraTMP FLM mode, a linear filtering model is established using the best matching template obtained from the previous search step and the current coding-block template. It mainly includes the following two processes: determining a reconstructed region used to calculate filter coefficients and calculating the filter coefficients.

The number of taps of a filter is determined as nTap. nTap may be a constant or a variable, for example, the number of taps of the filter may be dynamically adjusted according to the size of a block. Referring to FIGS. 19a to 19f, FIGS. 19a to 19f are schematic structural diagrams of six fixed shapes of an optional filter according to an embodiment of the present disclosure, and in the embodiments of the present disclosure, filters of various shapes may be selected.

Available reconstructed pixels are determined according to the template type refTemplateType, and a reconstructed region for calculating filter coefficients is determined according to the available reconstructed pixels. The reconstructed region is called R, and R typically includes all available reconstructed pixels in the template. In the region R, the filter coefficients are derived with minimized MSE.

For each current block to be coded, a set of filter coefficients can be obtained in the above manner, and the set of filter coefficients is $c_0$, $c_1$, $c_2$... $c_{nTap-1}$. Then, the best matching reconstructed block is filtered according to the filter shape and filter coefficients, that is, the filter coefficients and the reference pixels at the corresponding positions are weighted and summed to obtain the current pixels to be predicted. ref represents the best matching reconstructed block, which is defined as follows:

$$\text{ref}[i][j] = \text{recSamples}[i + pX\_BEST][j + pY\_BEST] \qquad (5)$$

where $i = 0,..., nTbW-1$, $j = 0,..., nTbH-1$, recSamples are reconstructed pixels of a current image or a reference image, and pX_BEST and pY_BEST are horizontal and vertical components of the best motion vector.

The specific predicted-value calculation process is as follows.

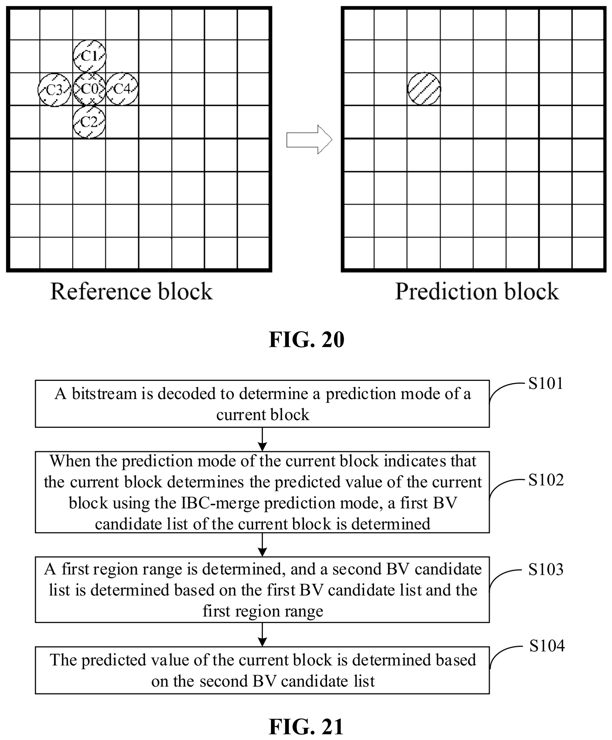

Assuming that the number of taps (nTap) of a filter is 5, the shape of the filter is shown in the left figure of the figure below, $c_0$ to $c_4$ are tap coefficients of the filter, and the yellow point corresponding to the tap coefficient $C_0$ represents the reconstructed pixel ref [i] [j] at the corresponding position of the current pixel Y ^ pred [i] [j] in the best matching block; the remaining brown dots represent reconstructed pixels in the best matching reconstructed block neighboring to the current spatial position. Referring to FIG. 20, FIG. 20 is a schematic diagram of optional TM-FLM prediction according to an embodiment of the present disclosure, and as shown in FIG. 20, a point in a prediction block is an obtained prediction pixel Y ^ pred [i] [j].

The specific predicted-value calculation process is as follows.

For each current pixel (i, j) to be predicted, the pixel position in the filter template is defined as (k, l), then the corresponding reconstructed pixel in the best matching block during filtering is defined as ref [i + k] [j + l], and each filter coefficient at the position (k, l) in the filter template is defined as $c_{k, l}$:

$$c_{k,l} = c_n \qquad (6)$$

where $n = 0,..., nTap - 1$, k and l are between - 1 and 1.

For $i = 0,..., nTbW-1$, $j = 0,..., nTbH-1$:

$$Y^{pred}[i][j] = \sum_k \sum_l \text{ref}[i+k][j+l] \times C_{,k,l} \qquad (7)$$

The final predicted pixel is:

$$\text{predSamples}[i][j] = \text{Clip3}(0,(1 \ll \text{BitDepth})-1, Y^{pred}[i][j]) \qquad (8)$$

wherein

$$\text{Clip3}(x,y,z) = \begin{cases} x & ; z < x \\ y & ; z > y \\ z & ; \text{otherwise} \end{cases} \qquad (9)$$

In summary, in related technologies, there is an issue where the expressed BV ranges overlap between the IBC mode and the IntraTMP mode, which leads to low expression efficiency and thus affects coding efficiency.

Hereinafter, a decoding method proposed in an embodiment of the present disclosure will be described in detail in conjunction with intra prediction.

An embodiment of the present disclosure provides a decoding method. Please refer to FIG. 21, which shows a schematic flow diagram of an optional decoding method provided by an embodiment of the present disclosure. As shown in FIG. 21, the method may include the following operations.

In operation S101, a bitstream is decoded to determine a prediction mode of a current block.

The decoding method according to the embodiments of the present disclosure is applied to a decoder. In addition, the decoding method may be an intra prediction method for video, or may also be an IBC-mode based decoding method which is mainly for improving the existing intra prediction algorithm, and can avoid the problem that candidate BV ranges for a current block overlap in the video decoding process based on the IBC mode and the video decoding process based on a non-IBC mode, thereby achieving a better intra prediction effect and improving video decoding efficiency.

In the embodiments of the present disclosure, the IBC prediction mode is a block-level coding and decoding mode, and similar to the inter-prediction technology, the coding end performs motion search to find the best BV for each coding block. The motion search here may be understood as block matching, and the BV here may also be called a motion vector (MV). A BV is a vector pointing from a current block to a reference block. Different from the inter-prediction technology, the best BV of IBC is obtained by searching in a reconstructed region of a picture where the current coding block is located (i.e. a current coded picture), while the inter-picture motion vector is obtained by searching neighboring reference pictures of the current coded picture in the time domain.

In the embodiments of the present disclosure, the decoder may parse the bitstream and determine first syntax identification information. The first syntax identification information is used to indicate whether the current block uses an intra block copy (IBC) prediction mode.

Exemplarily, the first syntax identification information may be represented by pred _mode_ibc_flag.

In the embodiments of the present disclosure, when the first syntax identification information is a first value, it is determined that the first syntax identification information indicates that the current block uses the IBC prediction mode; and when the first syntax identification information is a second value, it is determined that the first syntax identification information indicates that the current block does not use the IBC prediction mode.

It should be noted that, in the embodiments of the present disclosure, the first value is different from the second value, and the first value and the second value may be parameters or numerals. Specifically, the first syntax identification information may be a parameter written in a profile, or may be a value of a flag, which is not specifically limited here.

Exemplarily, for the first value and the second value, the first value may be set to 1 and the second value may be set to 0; alternatively, the first value may be set to 0 and the second value may be set to 1; alternatively, the first value may be set to true and the second value may be set to false; alternatively, the first value may be set to false and the second value may be set to true; however, it is not specifically limited here.

Exemplarily, when pred_mode_ibc_flag is true or 1, it is determined that the current block uses the IBC prediction mode.

In the embodiments of the present disclosure, the flag written in the bitstream is taken as an example, assuming that the first value is set to 0 (false) and the second value is set to 1 (true), in this case, when the value of the first syntax identification information is 0 (false), it can be determined that the current block uses the IBC prediction mode, that is, the decoding method described in the embodiments of the present disclosure does not need to be executed; and when the value of the first syntax identification information is 1 (true), it can be determined that the current block does not use the IBC prediction mode, that is, it is necessary to execute the decoding method described in the embodiments of the present disclosure.

It should be noted that the embodiments of the present disclosure do not limit the forms of the first value and the second value.

In the embodiments of the present disclosure, when the first syntax identification information indicates that the current block uses the IBC prediction mode, the bitstream is parsed to determine the second syntax identification information. The second syntax identification information is used to indicate whether the current block uses an intra block merge (IBC merge) prediction mode.

Exemplarily, the second syntax identification information may be represented by general_merge_flag.

In the embodiments of the present disclosure, when the second syntax identification information is a third value, it is determined that the second syntax identification information indicates that the current block uses the IBC-merge prediction mode; when the second syntax identification information is a fourth value, it is determined that the first syntax identification information indicates that the current block uses the IBC-merge prediction mode.

It should be noted that, in the embodiments of the present disclosure, the third value is different from the fourth value, and the third value and the fourth value may be in a parameter form or a numeric form. Specifically, the first syntax identification information may be a parameter written in a profile, or may be a value of a flag, which is not specifically limited here.

Exemplarily, for the third value and the fourth value, the third value may be set to 1 and the fourth value may be set to 0; alternatively, the third value may be set to 0 and the fourth value may be set to 1; alternatively, the third value may be set to true and the fourth value may be set to false; alternatively, the third value may be set to false and the fourth value may be set to true; however, it is not specifically limited here.

In the embodiments of the present disclosure, the flag written in the bitstream is taken as an example, assuming that the third value is set to 1 (true) and the fourth value is set to 0 (false), in this case, when the value of the second syntax identification information is 0 (false), it can be determined that the current block does not use the IBC-merge prediction mode, that is, the decoding method described in the embodiments of the present disclosure does not need to be executed; and when the value of the second syntax identification information is 1 (true), it can be determined that the current block uses the IBC-merge prediction mode, that is, it is necessary to execute the decoding method described in the embodiments of the present disclosure.

Exemplarily, when general _merge_flag is true or 1, it is determined that the current block uses the IBC-merge prediction mode.

It should be noted that the embodiments of the present disclosure do not limit the expression forms of the third value and the fourth value.

The prediction mode indicated by the second syntax identification information may be a prediction mode of the current block.

In operation S102: when the prediction mode of the current block indicates that the current block determines the predicted value of the current block using the IBC-merge prediction mode, a first BV candidate list of the current block is determined.

In the embodiments of the present disclosure, in a case where the second syntax identification information (the prediction mode of the current block) indicates that the current block uses the IBC-merge prediction mode, a first BV candidate list (a merge list) of the current block is determined. That is, when the decoder parses out that the prediction mode of the current block is the IBC-merge-based mode, the decoder is required to construct the first BV candidate list of the current block.

For example, in the IBC mode, in the process of obtaining a bvL (luma BV) of the current block, it is necessary to establish a BV candidate list (bvCandList, that is, the first BV candidate list), and the BV candidate list includes a plurality of candidates.

In the embodiments of the present disclosure, the first BV candidate list includes Q first candidate BVs, wherein Q is a positive integer greater than or equal to 1.

Note that the number of BVs (that is, the number of first candidate BVs) in the bvCandList (first BV candidate list) in different modes may be different. For example, the number of first candidate BVs included in the first BV candidate list in the IBC merge mode is 6, and the number of first candidate BVs included in the first BV candidate list in the IBC ABVP mode is 2. Of course, in the embodiments of the present disclosure, the number of first candidate BVs that may be included in the first BV candidate list may be Q, where Q is a positive integer greater than or equal to 1. The number Q of the first candidate BVs is set in advance, and both the decoder and the encoder may agree on or stipulate the value N corresponding to the number of the first candidate BVs for the current block. Exemplarily, if the decoder and the encoder agree on or stipulate that the N corresponding to the number of first candidate BVs for the current block is equal to 8, the number of candidates included in the first BV candidate list established by the decoder or the encoder is equal to 8 in the process of encoding or decoding the current block.

Further, determining the first BV candidate list of the current block may include: performing spatial-domain candidate derivation; adding a spatial-domain candidate to the candidate list, and after adding the spatial-domain candidate to the candidate list, checking the number of valid candidates in the candidate list; if a specified number of candidates is not reached in the candidate list, continuing historical candidate derivation, availability detection and addition; continuing checking the number of valid candidates in the candidate list and adding other available candidates until the specified number of candidates is reached, and obtaining the first BV candidate list of the current block. The action of determining the first BV candidate list of the current block can be referred to S211 to S215 described above, and will not be repeated in detail here.

In operation S103: a first region range is determined, and a second BV candidate list is determined based on the first BV candidate list and the first region range.

In the embodiments of the present disclosure, the decoder removes BVs within the first region range based on the first BV candidate list to obtain the second BV candidate list.

In the embodiments of the present disclosure, when the second syntax identification information indicates that the current block uses the IBC-merge prediction mode, the decoder removes BVs within the first region range in a current picture in which the current block is located based on each first candidate BV in the first BV candidate list, thereby obtaining the second BV candidate list.

In some embodiments of the present disclosure, the first region range includes one of the following: a size of a current coding tree unit; a size of a reconstructed region in the current picture; a size of the picture boundary of the current block; and a search range of the Intra TMP mode. This is not limited in this disclosure.

Note that the above-described first region range is only an example, the first region range may be any one of the above-described or a combination of first region ranges, and the first region range may be determined by the decoder. The present disclosure is not limited thereto.

It can be understood that when the first region range is the search range of the Intra TMP mode, the decoder may remove the BVs in the search range of the Intra TMP mode based on the first BV candidate list to obtain the final second BV candidate list. In this case, since the BVs in the search range of the Intra TMP mode do not exist in the second BV candidate list, the BVs in the candidate list corresponding to the Intra TMP mode do not exist in the second BV candidate list, thus effectively avoiding the BVs expressed in the candidate list of the IBC mode from overlapping with those in the Intra TMP mode, thus saving bits of the bitstream and further improving the video decoding efficiency.

It can be understood that since there is no overlapping BV between the second BV candidate list and the candidate list for the Intra TMP mode, in the case where the same bitstream is used, the embodiments of the present disclosure can increase the diversity of BVs and improve the video decoding efficiency.

For example, in the embodiments of the present disclosure, when the BVs within the search range of the Intra TMP mode are removed based on the first BV candidate list to obtain the second BV candidate list, redundantly expressed BV information between different modes can be removed, which leads to improved expression efficiency of header information and enhanced overall video decoding efficiency.

In operation S104, the predicted value of the current block is determined based on the second BV candidate list.

In the embodiments of the present disclosure, after determining the second BV candidate list, the decoder may determine the predicted value of the current block based on the second BV candidate list.

In some embodiments of the present disclosure, S104 may include the following actions:

decoding the bitstream and determining extended candidate BV index information;
determining a first BV based on the extended candidate BV index information and the second BV candidate list; and
a reference block of the current block is determined according to the first BV, and the predicted value of the current block is determined based on the reference block.

In the embodiments of the present disclosure, the decoder may determine the extended candidate BV index information of the current block by parsing the bitstream.

In the embodiments of the present disclosure, the extended candidate BV index information may be a unique identifier of the first BV in the second BV candidate list.

In the embodiments of the present disclosure, the extended candidate BV index information may be a preset index value of a BV. That is, the extended candidate BV index information is an index value of a BV defined or agreed upon by both the encoder and the decoder.

In the embodiments of the present disclosure, each BV included in the second BV candidate list has unique index information.

In the embodiments of the present disclosure, the extended candidate BV index information may be a parameter written in a profile, or may be a value of a flag, which is not specifically limited here.

Exemplarily, the extended candidate BV index information may be represented in a digital form. For example, the extended candidate BV index information 0 may represent the 1st BV in the second BV candidate list, and the extended candidate BV index information may be expressed in a different digital form, which is not limited in the present disclosure.

In the embodiments of the present disclosure, the decoder may determine the first BV in the second BV candidate list based on the extended candidate BV index information of the current block, and determine the predicted value of the current block based on the reference block of the current block, the reference block being the decoded block pointed to by the first BV.

In some embodiments of the present disclosure, the method may further include:

decoding the bitstream and determining the prediction residual value of the current block; and
determining a reconstructed value of the current block based on the predicted value of the current block and a predicted difference value of the current block.

In the embodiments of the present disclosure, when the current block has a prediction residual, the decoder may determine the prediction residual of the current block by analyzing the bitstream, and perform weighting or other processing on the predicted value of the current block and the prediction residual value of the current block to obtain the reconstructed value of the current block. When the current block does not have a prediction residual, the decoder may directly take the predicted value of the current block as the reconstructed value of the current block.

In the embodiments of the present disclosure, the decoder first parses the bitstream to determine the first syntax identification information; when the first syntax identification information indicates that the current block uses the IBC prediction mode, the decoder determines the second syntax identification information; the decoder determines a first BV candidate list for the current block when the second syntax identification information indicates that the current block uses an IBC-merge prediction mode; subsequently, the decoder removes BVs within the first region range based on the first BV candidate list to obtain the second BV candidate list; finally, the decoder determines the predicted value of the current block based on the second BV candidate list.

In one aspect, when the decoder removes the BVs within the first region range based on the first BV candidate list, the final second BV candidate list is obtained. In this case, the BVs in the first region range do not exist in the second BV candidate list. In this way, the candidate list of the IBC mode can be effectively avoided from overlapping with the BVs expressed in the first region range, so that the bitstream bits can be saved, and the video decoding efficiency can be improved. In another aspect, since there is no overlapping BV between the second BV candidate list and the first region range, in the case where the same bitstream is used, the embodiments of the present disclosure can increase the diversity of BVs and improve the video decoding efficiency. In still another aspect, since the second BV candidate list effectively excludes the BV information in the first region range, the expression efficiency of header information in the bitstream is improved, and the overall video decoding efficiency can be improved.

In some embodiments of the present disclosure, the operation S103 includes operations S1031 to S1033:

In operation S1031: when determining that the current block uses the prediction mode based on intra-merging with BV difference, candidate BV index information is determined.

In the embodiments of the present disclosure, when the current block uses an IBC Merge Mode with Block Vector Difference (MBVD) prediction mode, the decoder may determine candidate BV index information corresponding to the current block by parsing the bitstream.

In the embodiments of the present disclosure, the candidate BV index information is used to indicate a first candidate BV (basic candidate) in the first BV candidate list.

For example, for the IBC MBVD mode, it is assumed that the first BV candidate list includes 8 candidates, and the first 5 candidates among the 8 candidates are regarded as basic candidates. The decoder may obtain candidate BV index information of the first 5 candidate BVs by parsing the bitstream, and then obtain the first 5 candidate BVs indicated by the candidate BV index information in the first BV candidate list through the candidate BV index information.

In operation S1032, based on the first BV candidate list, at least one first extended candidate BV corresponding to the first candidate BV indicated by the candidate BV index information is determined.

In the embodiments of the present disclosure, after determining the first candidate BV indicated by the candidate BV index information based on the first BV candidate list, the decoder may determine at least one first extended candidate BV corresponding to each first candidate BV.

In the embodiments of the present disclosure, the first extended candidate BV may be determined according to a distance set and a BV prediction direction.

In some embodiments of the present disclosure, the operation S1032 may include operations S10321 to S10323:

In operation S10321, N first candidate BVs with the smallest template cost is determined from the first BV candidate list, N being an integer greater than or equal to 1.

In the embodiments of the present disclosure, before determining the first candidate BV using the candidate BV index information, it is necessary to sort each candidate BV in the first BV candidate list to obtain the sorted first BV candidate list, and N first candidate BVs with the smallest template cost may be determined from the sorted first BV candidate list.

In the embodiments of the present disclosure, in the process of sorting each candidate BV in the first BV candidate list, TM cost calculation may be performed on each candidate BV in the first BV candidate list, and the TM cost value of each candidate BV may be resorted, and the sorted candidate BVs may be determined based on the sorted TM cost values. That is, each candidate in the sorted IBC merge list is the first BV candidate list sorted based on TM cost values.

Note that, in the process of sorting each candidate BV in the first BV candidate list, each candidate BV may be sorted in descending order of TM cost values, or each candidate BV may be sorted in ascending order of TM cost values, to which no limit is set in the present disclosure.

Exemplarily, when each candidate BV may be sorted in descending order of TM cost values, the TM cost value of the first candidate BV in the sorted first BV candidate list is the smallest.

In the embodiments of the present disclosure, N may be predetermined, that is, the decoder and the encoder may predetermine or agree on the number of the first candidate BVs.

In the embodiments of the present disclosure, N may also be obtained by parsing the bitstream, and in this case, N is determined by the encoder.

In the embodiments of the present disclosure, when each candidate BV in the first BV candidate list may be sorted in ascending order of TM cost values, N first candidate BVs with the smallest template cost may be determined based on the top N candidate BVs in the sorted first BV candidate list. When each candidate BV in the first BV candidate list may be sorted in descending order of TM cost values, N first candidate BVs with the smallest template cost may be determined based on the last N candidate BVs in the sorted first BV candidate list.

Exemplarily, in the IBC MBVD mode, N may be 8.

In operation S10322, a first candidate BV is determined from the N first candidate BVs based on the candidate BV index information.

In the embodiments of the present disclosure, the decoder may determine a first candidate BV from the N first candidate BVs according to the acquired candidate BV index information.

For example, the decoder may determine 1 first candidate BV that is required to be refined from among 8 first candidate BVs according to the candidate BV index information.

Here, it is described that the decoder determines one first candidate BV from the N first candidate BVs based on index information of one candidate BV.

Therefore, when the decoder obtains index information of a plurality of candidate BVs by parsing the bitstream, the decoder may determine a first candidate BV corresponding to index information of each candidate BV from among the N first candidate BVs.

That is, it is assumed that the decoder determines that N is 8 by parsing the bitstream, and acquires index information of 5 candidate BVs, and the decoder may determine five candidate BVs among the eight first candidate BVs based on the five pieces of candidate BV index information.

In operation S10323, the first candidate BV is refined based on the distance set and the BV prediction direction, and at least one first extended candidate BV corresponding to the first candidate BV is determined.

In the embodiments of the present disclosure, after the decoder determines the first candidate BV according to the candidate BV index information, the decoder may refine each first candidate BV based on the preset distance set and the BV prediction direction for each first candidate BV, and determine at least one first extended candidate BV corresponding to each first candidate BV.

In the embodiments of the present disclosure, a plurality of refined positions of the first candidate BV may be determined according to a predefined distance set and a predefined direction set, thereby realizing refinement of the first candidate BV.

In the embodiments of the present disclosure, the distance set and the BV prediction direction may be preset, that is, the distance set and the BV prediction direction may be specified or agreed upon by both the decoder and the encoder.

Exemplarily, in the IBC MBVD mode, the distance set may be defined as {1 pel, 2 pel, 4 pel, 8 pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, where the distance set includes a plurality of pixel distances (such as 2 pel).

For example, in the IBC MBVD mode, the BV prediction direction may be defined as positive and negative horizontal directions as well as positive and negative vertical directions. Therefore, the BV prediction direction includes 4 directions which are positive and negative horizontal directions as well as positive and negative vertical directions. Further, $20 \times 4$ refined positions (i.e., the first extended candidate BV) may be determined based on 20 distances and 4 directions.

In operation S1033, among at least one first extended candidate BV, the BVs within the first region range are removed to obtain the second BV candidate list.

In the embodiments of the present disclosure, after determining at least one first extended candidate BV corresponding to each first candidate BV, the decoder may remove the BVs within the first region range from among the at least one first extended candidate BV, to obtain the second BV candidate list.

It can be understood that in the decoding process including the block decoding process, the decoder may remove the redudant BVs in the first region range in for example the Intra TMP mode based on the first BV candidate list of the current block to determine the second BV candidate list, and determine the predicted value of the current block based on the redundancy-removed BVs in the second BV candidate list.

In some embodiments of the present disclosure, the operation S1033 may include:

sequentially removing each first extended candidate BV that corresponds to a reference block within the first region range to obtain at least one filtered first extended candidate BV; and
determining the second BV candidate list based on the at least one filtered first extended candidate BV.

In the embodiments of the present disclosure, for each first extended candidate BV, when the first extended candidate BV is a BV that corresponds to a reference block in the first region range, the first extended candidate BV is removed, and when the first extended candidate BV is not a BV that corresponds to a reference block in the first region range, the first extended candidate BV is added to the second BV candidate list.

For example, $20 \times 4$ first extended candidate BVs corresponding to each first candidate BV are filtered in order, and the first extended candidate BVs within the first region range are removed to obtain at least one filtered first extended candidate BV, and the at least one filtered first extended candidate BV is added to the second BV candidate list to determine the second BV candidate list.

In some embodiments of the present disclosure, sequentially removing each first extended candidate BV that corresponds to a reference block within the first region range to obtain at least one filtered first extended candidate BV may include:

when a horizontal boundary position of a first candidate reference block pointed to by any first extended candidate BV falls within a horizontal range of a preset range, and a vertical boundary position of the first candidate reference block pointed to by any first extended candidate BV falls within a vertical range of the preset range, determining that the first candidate reference block pointed to by any first extended candidate BV a reference block within the first region range; and

removing the any first extended candidate BV, and continuing removal of other first extended candidate BVs to obtain the at least one filtered first extended candidate BV.

In some embodiments of the present disclosure, when the horizontal boundary position of the first candidate reference block pointed to by any first extended candidate BV does not fall within the horizontal range of the preset range, or the vertical boundary position of the first candidate reference block pointed to by any first extended candidate BV does not fall within the vertical range of the preset range, the first candidate reference block pointed to by any first extended candidate BV is not a reference block within the first region range. The first extended candidate BV is a filtered first extended candidate BV corresponding to each candidate BV.

In the embodiments of the present disclosure, the first region range may be a preset search range of the template in the IntraTMP mode.

In the embodiments of the present disclosure, the horizontal range of the preset range may be expressed as -searchRangeWidth and searchRangeWidth. Here, -searchRangeWidth represents the left boundary of the horizontal range of the preset range, and searchRangeWidth represents the left and right boundaries of the horizontal range of the preset range. The vertical range of the preset range may be expressed as -searchRangeHeight and searchRangeHeight, where -searchRangeHeight represents the bottom boundary of the horizontal range of the preset range, and searchRangeHeight represents the top boundary of the horizontal range of the preset range.

In the embodiments of the present disclosure, the horizontal boundary position and the vertical boundary position of the first candidate reference block pointed to by the first extended candidate BV are respectively determined, and when the horizontal boundary position and the vertical boundary position of the first candidate reference block fall within the horizontal range and the vertical range of the preset range, the first extended candidate BV is removed, that is, the first extended candidate BV is excluded from the subsequent sorting process.

In some embodiments of the present disclosure, when the horizontal boundary position of the first candidate reference block pointed to by any first extended candidate BV does not fall within the horizontal range of the preset range, or the vertical boundary position of the first candidate reference block pointed to by any first extended candidate BV does not fall within the vertical range of the preset range, the first candidate reference block pointed to by any first extended candidate BV is not a reference block within the first region range. The any first extended candidate BV is a filtered first extended candidate BV corresponding to each candidate BV.

For example, the process of determining the horizontal boundary position and the vertical boundary position of a first candidate reference block pointed to by a first extended candidate BV may be expressed as follows:

(bvCand[x0][y0][disIdx][dirIdx][0]>-searchRangeWidth&& bvCand[x0][y0][disIdx][dirIdx][0]<searchRangeWidth&&bvCand[x0][y0][disIdx][dirIdx][1]>-searchRangeHeight && bvCand[x0][y0][disIdx][dirIdx][1]<searchRangeHeight)

where bvCand represents a first candidate reference block pointed to by a first extended candidate BV, -searchRangeWidth represents a left boundary of a horizontal range of a preset range, searchRangeWidth represents left and right boundaries of the horizontal range of the preset range, -searchRangeHeight represents a bottom boundary of a horizontal range of the preset range, and searchRangeHeight represents a top boundary of the horizontal range of the preset range.

For example, in the embodiments of the present disclosure, if (bvCand [x0] [y0] [disIdx] [dirIdx] [0] >-searchRangeWidth & & bvCand [x0] [y0] [disIdx] [dirIdx] [0] < searchRangeWidth & & bvCand [x0] [y0] [disIdx] [dirIdx] [1] >-searchRangeHeight & & bvCand [x0] [y0] [disIdx] [dirIdx] [1] < searchRangeHeight) corresponding to the first candidate reference block pointed to by the first extended candidate BV is true, the first extended candidate BV is removed. If (bvCand [x0] [y0][disIdx] [dirIdx] [0] >-searchRangeWidth & & bvCand [x0] [y0] [disIdx] [dirIdx] [0] < searchRangeWidth & & bvCand [x0] [y0] [disIdx] [dirIdx] [1] >-searchRangeHeight & & bvCand [x0] [y0] [disIdx] [dirIdx] [1] < searchRangeHeight) corresponding to the first candidate reference block pointed to by the first extended candidate BV is false, the first extended candidate BV is not a reference block in the first region range, and the first extended candidate BV is used as a filtered first extended candidate BV corresponding to the candidate BV.

In some embodiments of the present disclosure, determining the second BV candidate list based on the at least one filtered first extended candidate BV may include:

determining M first extended candidate BVs corresponding to minimum template cost from the at least one filtered first extended candidate BV, M being an integer greater than or equal to 1; and

constructing the second BV candidate list based on the M first extended candidate BVs.

In the embodiments of the present disclosure, after determining the at least one filtered first extended candidate BV, at least one first extended candidate BV is continuously sorted to obtain the sorted M first extended candidate BVs.

In the process of sorting the first extended candidate BVs, all the first extended candidate BVs may be sorted in descending order of TM cost values, or all the first extended candidate BVs may be sorted in ascending order of TM cost values, to which no limits is set in the present disclosure.

Exemplarily, when the first extended candidate BVs may be sorted in descending order of TM cost values, the $1^{st}$ first extended candidate BV among the sorted first extended candidate BVs has the smallest TM cost value.

In the embodiments of the present disclosure, M may be preset, that is, the decoder and the encoder may predetermine or agree on the number of the first extended candidate BVs.

In the embodiments of the present disclosure, M may also be obtained by parsing the bitstream, and in this case, M is determined by the encoder.

In the embodiments of the present disclosure, when the first extended candidate BVs are sorted in ascending order of TM cost values, M first extended candidate BVs with the smallest template cost may be determined based on the top N candidate BVs among the sorted first extended candidate BVs; and when the first extended candidate BVs are sorted in descending order of TM cost values, M first extended candidate BVs with the smallest template cost may be determined based on the last M candidate BVs among the sorted first extended candidate BVs.

In the embodiments of the present disclosure, M first extended candidate BVs may be added to the second BV candidate list to obtain the second BV candidate list.

In some embodiments of the present disclosure, when the number of the at least one filtered first extended candidate BV is less than M, other candidate BVs may be determined from the first BV candidate list, wherein the other candidate BVs are different from the N candidate BVs; and

M first extended candidate BVs may be determined based on the other candidate BVs and the at least one filtered first extended candidate BV.

In the embodiments of the present disclosure, when the number of the at least one filtered first extended candidate BV is less than M, other candidate BV may be determined from the first BV candidate list until the number of the other candidate BVs and the at least one filtered first extended candidate BV reaches M.

It can be understood that the decoder may determine other first candidate BVs from the first BV candidate list while removing the redundantly expressed BV information; the other first candidate BVs are different from the N first candidate BVs, that is, the candidates that cannot be expressed originally are introduced into the resorted list, which improves the expression range of the BV candidate list in the corresponding mode, increases the diversity of candidates, and also improves the video decoding efficiency.

In some embodiments of the present disclosure, the operation S1032 may further include:

determining, from the first BV candidate list, N first candidate BVs having minimum template cost, N being an integer greater than or equal to 1;

removing the BVs within the first region range from among the N first candidate BVs to obtain a third BV candidate list; and

determining, based on the third BV candidate list, at least one first extended candidate BV corresponding to the first candidate BV indicated by the candidate BV index information.

In the embodiments of the present disclosure, before determining the first candidate BV using the candidate BV index information, it is necessary to sort each candidate BV in the first BV candidate list to obtain the sorted first BV candidate list, and then determine N first candidate BVs with the smallest template cost from the sorted first BV candidate list.

In the embodiments of the present disclosure, in the process of sorting each candidate BV in the first BV candidate list, the TM cost calculation may be performed on each candidate BV in the first BV candidate list, and then the TM cost value of each candidate BV may be resorted, and each candidate BV is sorted based on the sorted TM cost values. That is, each candidate in the sorted IBC merge list is the first BV candidate list sorted based on TM cost values.

In the embodiments of the present disclosure, when each candidate BV in the first BV candidate list may be sorted in ascending order of TM cost values, N first candidate BVs with the smallest template cost are determined based on the top N candidate BVs in the sorted first BV candidate list. When each candidate BV in the first BV candidate list may be sorted in descending order of TM cost values, N first candidate BVs with the smallest template cost are determined based on the last N candidate BVs in the sorted first BV candidate list.

In the embodiments of the present disclosure, each first candidate BV among the N first candidate BVs is sequentially determined, and the first candidate BV within the first region range is removed to obtain the third BV candidate list.

In the embodiments of the present disclosure, at least one first extended candidate BV corresponding to the first candidate BV indicated by the candidate BV index information may be determined from the third BV candidate list according to the candidate BV index information.

It can be understood that, in the block decoding process during the decoding process, the decoder may perform redundancy removal for at least one extended candidate BV corresponding to N first candidate BVs in the first BV candidate list of the current block in the IBC MBVD prediction mode. Overlapping BVs in the first region range are removed from at least one extended candidate BV in, for example, the Intra TMP mode, to determine the second BV candidate list, and the predicted value of the current block is determined based on the redundancy-removed BVs in the second BV candidate list, so that since the redundancy of BVs is reduced, the expression efficiency of header information can be improved when the redundancy-removed BVs are decoded, and the video decoding efficiency can be improved.

In some embodiments of the present disclosure, based on the third BV candidate list, determining at least one first extended candidate BV corresponding to the first candidate BV indicated by the candidate BV index information may include:

determining a first candidate BV from the third BV candidate list based on the candidate BV index information; and refining the first candidate BV based on the distance set and the BV prediction direction, and determining at least one first extended candidate BV corresponding to the first candidate BV.

In the embodiments of the present disclosure, after the decoder determines the first candidate BV according to the candidate BV index information, the decoder may refine each first candidate BV based on the preset distance set and the BV prediction direction for each first candidate BV, and determine at least one first extended candidate BV corresponding to each first candidate BV.

In the embodiments of the present disclosure, a plurality of refined positions of the first candidate BV may be determined according to a predefined distance set and a predefined direction set, thereby realizing refinement of the first candidate BV.

In the embodiments of the present disclosure, the distance set and the BV prediction direction may be preset, that is, the distance set and the BV prediction direction are specified or agreed upon by both the decoder and the encoder.

Exemplarily, in the IBC MBVD mode, the distance set may be defined as {1 pel, 2 pel, 4 pel, 8 pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, where the distance set includes a plurality of pixel distances (such as 2 pel).

For example, in the IBC MBVD mode, the BV prediction direction may be defined as positive and negative horizontal directions as well as positive and negative vertical directions. Therefore, the BV prediction direction includes a total of four directions which respectively are positive and negative horizontal directions as well as positive and negative vertical directions. Further, $20 \times 4$ refined positions (i.e., the first extended candidate BV) may be determined based on 20 distances and 4 directions.

In some embodiments of the present disclosure, the decoding method may further include:

decoding the bitstream and determining extended candidate BV index information; determining a first BV from at least one first extended candidate BV according to the extended candidate BV index information; and determining a reference block of the current block according to the first BV, and determining the predicted value of the current block based on the reference block.

In the embodiments of the present disclosure, the decoder may determine the extended candidate BV index information corresponding to the current block by parsing the bitstream.

In the embodiments of the present disclosure, the decoder may determine a first BV corresponding to the extended candidate BV index information from at least one first extended candidate BV according to the extended candidate BV index information.

In the embodiments of the present disclosure, when the current block has a prediction residual, the decoder may determine the prediction residual of the current block by analyzing the bitstream, and perform weighting or other processing on the predicted value of the current block and the prediction residual value of the current block to obtain a reconstructed value of the current block. When the current block does not have a prediction residual, the decoder may directly use the predicted value of the current block as the reconstructed value of the current block.

In some embodiments of the present disclosure, removing BVs within the first region range from among the N first candidate BVs to obtain the third BV candidate list may include:

sequentially removing each first candidate BV that corresponds to a reference block within the first region range from among the N first candidate BVs to obtain at least one filtered first candidate BV; and

determining the third BV candidate list based on the at least one filtered first candidate BV.

In the embodiments of the present disclosure, for each first candidate BV, when the first candidate BV is a BV that corresponds to the reference block in the first region range, the first candidate BV is removed, and when the first candidate BV is not a BV that corresponds to the reference block in the first region range, the first candidate BV is added to the third BV candidate list.

For example, each first candidate BV is sequentially filtered, the first candidate BV within the first region range is removed, and at least filtered one first candidate BV is obtained, and the at least one filtered first candidate BV is added to the third BV candidate list to determine the third BV candidate list.

In some embodiments of the present disclosure, sequentially removing each first candidate BV that corresponds to the reference block within the first region range from among the N first candidate BVs to obtain at least one filtered first candidate BV may include:

sequentially offsetting each of the N first candidate BVs to determine at least one second candidate BV corresponding to each first candidate BV;

when the maximum horizontal boundary position and the minimum horizontal boundary position of at least one second candidate reference block pointed to by the at least one second candidate BV fall within the horizontal range of the preset range, and the maximum vertical horizontal boundary position and the minimum vertical boundary position of the at least one second candidate reference block fall within the vertical range of the preset range, determining that the first candidate BV corresponding to the at least one second candidate BV is a BV of the first region range; and removing the first candidate BV, and continuing removal of other first candidate BVs to obtain the at least one filtered first candidate BV.

It can be understood that the decoder may perform redundancy removal on N first candidate BVs in the first BV candidate list of the current block in the IBC MBVD prediction mode in the block decoding process during the decoding process. The overlapping BVs in the first region range are removed from the N first candidate BVs in, for example, the Intra TMP mode to obtain the third BV candidate list, and the predicted value of the current block is determined based on the redundancy-removed BVs in the third BV candidate list, so that since the redundancy of BVs is reduced, the expression efficiency of header information and the video decoding efficiency can be improved when the redundancy-removed BVs are used for decoding.

In some embodiments of the present disclosure, the decoding method may further include:

when the maximum horizontal boundary position or the minimum horizontal boundary position in the at least one second candidate reference block pointed to by the at least one second candidate BV does not fall within the horizontal range of the preset range, or the maximum vertical horizontal boundary position or the minimum vertical boundary position in the at least one second candidate reference block does not fall within the vertical range of the preset range, determining that a candidate BV corresponding to the at least one second candidate BV is not a BV of the first region range, and a first candidate BV corresponding to the at least one second candidate BV is used as a filtered first candidate BV; and

continuing removal of other first candidate BVs until all the N first candidate BVs are processed or N filtered first candidate BVs are obtained.

In the embodiments of the present disclosure, the first region range may be a preset search range of the template in the IntraTMP mode.

In the embodiments of the present disclosure, the horizontal range of the preset range may be expressed as -searchRangeWidth and searchRangeWidth. Here, -searchRangeWidth represents the left boundary of the horizontal range of the preset range, and searchRangeWidth represents the left and right boundaries of the horizontal range of the preset range. The vertical range of the preset range can be expressed as -searchRangeHeight and searchRangeHeight, where -searchRangeHeight represents the bottom boundary of the horizontal range of the preset range, and searchRangeHeight represents the top boundary of the horizontal range of the preset range.

In the embodiments of the present disclosure, the second candidate BV is a candidate BV obtained after the first candidate BV is shifted. The first candidate BV is shifted by a preset offset pixel, where the preset offset pixel is set for implementation. Exemplarily, the first candidate BV is shifted horizontally or vertically by a preset offset pixel (128 pel).

In the embodiments of the present disclosure, the horizontal boundary position and the vertical boundary position of the second candidate reference block pointed to by the second candidate BV may be respectively determined, and when the horizontal boundary position and the vertical boundary position of the second candidate reference block fall within the horizontal range and the vertical range of the preset range, the second candidate BV is removed, that is, the second candidate BV is excluded from the subsequent sorting process.

In some embodiments of the present disclosure, when the horizontal boundary position of the second candidate reference block pointed to by any second candidate BV does not fall within the horizontal range of the preset range, or the vertical boundary position of the second candidate reference block pointed to by any second candidate BV does not fall within the vertical range of the preset range, the first candidate reference block pointed to by any second candidate BV is not a reference block within the first region range. The second candidate BV is a filtered first candidate BV corresponding to each candidate BV.

For example, the process of determining the horizontal boundary position and the vertical boundary position of the second candidate reference block pointed to by the second candidate BV may be expressed as follows:

(bvCand [x0] [y0] [merge_idx] [disIdx_max] [dirVerIdx] [dirHorIdx_left] [0] >-searchRangeWidth & & bvCand [x0] [y0] [merge_idx] [disIdx_max] [dirVerIdx_right] [0] < searchRangeWidth & & bvCand [x0] [y0] [merge_idx] [disIdx_max] [dirVerIdx_down] [dirHorIdx] [1] < searchRangeHeight],

where bvCand [x0] [y0] [merge_idx] [disIdx_max] [dirVerIdx_left] [0] represents a horizontal boundary position of the first candidate reference block to which the second candidate BV points, bvCand [x0] [y0] [merge_idx] [disVerIdx_up] [dirVerIdx_up] [dirHorIdx] [1] represents a vertical boundary position of the first candidate reference block to which the second candidate BV points.

For example, when (bvCand [x0] [y0] [merge_idx] [disIdx_max] [dirVerIdx] [dirHorIdx_left] [0] >-searchRange-Width & & bvCand [x0] [y0] [merge_idx] [disIdx_max] [dirVerIdx _right] [0] < searchRangeWidth & & bvCand [x0] [y0] [merge_idx] [disIdx_max] [dirVerIdx_down] [dirHorIdx] [1] < searchRangeHeight) corresponding to the candidate reference block pointed to by the second candidate BV is true, the first candidate BV corresponding to the second candidate BV is a BV in the first region range; and the first candidate BV is removed, and removal of other first candidate BVs is continued to obtain at least one filtered first candidate BV.

For example, when (bvCand [x0] [y0] [merge_idx] [disIdx_max] [dirVerIdx] [dirHorIdx_left] [0] >-searchRange-Width & & bvCand [x0] [y0] [merge_idx] [disIdx_max] [dirVerIdx _right] [0] < searchRangeWidth & & bvCand [x0] [y0] [merge_idx] [disIdx_max] [dirVerIdx_down] [dirHorIdx] [1] < searchRangeHeight) corresponding to the candidate reference block pointed to by the second candidate BV is false, the candidate BV corresponding to the second candidate BV is not a BV in the first region range; and the first candidate BV corresponding to the second candidate BV is used as a filtered first candidate BV.

It can be understood that the decoder may perform deduplication on N first candidate BVs in the first BV candidate list of the current block in the IBC MBVD prediction mode in the block decoding process duireng the decoding process. Overlapping BVs in the first region range are removed in, for example, the Intra TMP mode, a third BV candidate list is determined, the predicted value of the current block is determined based on the de-redundant BVs in the third BV candidate list, and at least one first extended candidate BV corresponding to each first candidate BV in the third BV candidate list are removed again to obtain a second BV candidate list, and the predicted value of the current block is determined based on the second BV candidate list. Removing the overlapping BVs in the first region range in, for example, the Intra TMP mode leads to further reduced redundancy of BVs and further improved expression efficiency of header information when decoding BVs after redundancy removal, thereby improving the video decoding efficiency.

In some embodiments of the present disclosure, removing the BVs within the first region based on the first BV candidate list to obtain the second BV candidate list may include:

determining K third candidate BVs with smallest template cost from the first BV candidate list when determining that the current block uses a TM-merge (IBC merge) prediction mode, K being an integer greater than or equal to 1; and removing the BVs within the first region range from among the K third candidate BVs to obtain the second BV candidate list.

In the embodiments of the present disclosure, when the current block uses the template matching merge (IBC merge) prediction mode, the decoder may determine K third candidate BVs with the smallest template cost from the first BV candidate list.

In the embodiments of the present disclosure, before determining the first candidate BV using the candidate BV index information, it is necessary to sort each candidate BV in the first BV candidate list to obtain the sorted first BV candidate list, and then the K first candidate BVs with the smallest template cost are determined from the sorted first BV candidate list.

Note that, in the process of sorting each candidate BV in the first BV candidate list, each candidate BV may be sorted in descending order of TM cost values, or each candidate BV may be sorted in ascending order of TM cost values, and the present disclosure does not limit this.

Exemplarily, when each candidate BV may be sorted in descending order of TM cost values, the 1st candidate BV in the sorted first BV candidate list has the smallest TM cost value.

In the embodiments of the present disclosure, K may be set in advance, that is, the decoder and the encoder may specify or agree on in advance the number of first candidate BVs.

In the embodiments of the present disclosure, K may also be obtained by parsing the bitstream, and in this case, K is determined by the encoder.

In the embodiments of the present disclosure, when each candidate BV in the first BV candidate list may be sorted in ascending order of TM cost values, K third candidate BVs with the smallest template cost may be determined based on the top K candidate BVs in the sorted first BV candidate list. When each candidate BV in the first BV candidate list may be sorted in descending order of TM cost values, K third candidate BVs with the smallest template cost may be determined based on the last K candidate BVs in the sorted first BV candidate list.

In the embodiments of the present disclosure, after determining the K third candidate BVs, the decoder may remove BVs within the first region range among the K third candidate BVs from among at least one first extended candidate BV, thereby obtaining the second BV candidate list.

In some embodiments of the present disclosure, removing the BVs within the first region range among the K third candidate BVs to obtain the second BV candidate list may include:

when a horizontal boundary position of a third candidate reference block pointed to by any one of the K third candidate BVs falls within a horizontal range of a preset range, and a vertical boundary position of a third candidate reference block pointed to by any one of the K third candidate BVs falls within a vertical range of the preset range, determining that the third candidate reference block pointed to by one of the K third candidate BVs is a reference block within the first region range;

removing the any one of the K third candidate BV (s) of the reference block within the first region range, and continuing removal of other third candidate BVs until all the K third candidate BVs are processed, or K filtered third candidate BVs are obtained; and

determining the second BV candidate list based on the at least one filtered third candidate BV.

It can be understood that the decoder may perform de-duplication on K third candidate BVs in the first BV candidate list of the current block in the IBC merge prediction mode in the process of block decoding during the decoding process. Overlapping BVs in the first region range may be removed in for example the Intra TMP mode, a second BV candidate list may be determined, and then local refinement may be performed based on the redundancy-removed BVs in the second BV candidate list, and the predicted value of the current block may be determined. In this way, the redundancy of BVs is reduced, and the expression efficiency of header information can be improved when the BVs after redundancy removal are used for decoding, thus improving the video decoding efficiency.

In the embodiments of the present disclosure, the first region range may be a preset search range of the template in the IntraTMP mode.

In the embodiments of the present disclosure, the horizontal range of the preset range may be expressed as -searchRangeWidth and searchRangeWidth. Here, -searchRangeWidth represents the left boundary of the horizontal range of the preset range, and searchRangeWidth represents the left and right boundaries of the horizontal range of the preset range. The vertical range of the preset range may be expressed as -searchRangeHeight and searchRangeHeight, where -searchRangeHeight represents the bottom boundary of the horizontal range of the preset range, and searchRangeHeight represents the top boundary of the horizontal range of the preset range.

In the embodiments of the present disclosure, the horizontal boundary position and the vertical boundary position of the third candidate reference block pointed to by the third candidate BV may be respectively determined, and when the horizontal boundary position and the vertical boundary position of the third candidate reference block fall within the horizontal range and the vertical range of the preset range, the third candidate BV is removed, that is, the third candidate BV is excluded from the subsequent sorting process.

Exemplarily, the process of determining the horizontal boundary position and the vertical boundary position of the third candidate reference block pointed to by the third candidate BV may be expressed as follows:

(bvCand [x0] [y0] [merge_idx] [0] >-searchRangeWidth & & bvCand [x0] [y0] [merge_idx] [0] < searchRangeWidth & & bvCand [x0] [y0] [merge_idx] [1] >-searchRangeHeight & & bvCand [x0] [y0] [merge_idx] [1] < searchRangeHeight)

Here, bvCand [x0] [y0] [merge_idx] [0] represents a horizontal boundary position of the third candidate reference block pointed to by the third candidate BV, bvCand [x0] [y0] [merge_idx] [1] represents a vertical boundary position of the third candidate reference block pointed to by the third candidate BV, -searchRangeWidth represents a left boundary of the horizontal range of the preset range, -searchRangeHeight represents a top boundary of the horizontal range of the preset

EP 4 697 711 A1

range.

Exemplarily, if (bvCand [x0] [y0] [merge_idx] [0] >-searchRangeWidth & & bvCand [x0] [y0] [merge_idx] [0] < searchRangeWidth & & bvCand [x0] [y0] [merge_idx] [1] >-searchRangeHeight & & bvCand [x0] [y0] [merge_idx] [1] < searchRangeHeight) is true, the third candidate reference block pointed to by the third candidate BV is a reference block in the first region range; and the third candidate BV of the reference block within the first region range is removed, and removal of other third candidate BVs is continued until all the K third candidate BVs are processed or K filtered third candidate BVs are obtained.

Exemplarily, if (bvCand [x0] [y0] [merge_idx] [0] >-searchRangeWidth & & bvCand [x0] [y0] [merge_idx] [0] < searchRangeWidth & & bvCand [x0] [y0] [merge_idx] [1] >-searchRangeHeight & & bvCand [x0] [y0] [merge_idx] [1] < searchRangeHeight) is false, the third candidate reference block pointed to by the third candidate BV is not a reference block in the first region range, and the third candidate BV is used as a filtered third candidate BV.

In the embodiments of the present disclosure, at least one filtered third candidate BV may be added to the second BV candidate list, thereby determining the second BV candidate list.

In some embodiments of the present disclosure, removing the BVs within the first region range among the K third candidate BVs to obtain the second BV candidate list may include:

when a first extended horizontal boundary position of a third candidate reference block pointed to by any one of the K third candidate BVs falls within a horizontal range of a preset range, and a first extended vertical boundary position of the third candidate reference block pointed to by any one of the K third candidate BVs falls within a vertical range of the preset range, the third candidate reference block pointed to by any third candidate BV is determined to be a reference block of a first region range;

wherein the first extended horizontal boundary position is a horizontal boundary position after the horizontal boundary of the third candidate reference block is extended by a first horizontal search range; the first extended vertical boundary position is a vertical boundary position after the vertical boundary of the third candidate reference block is extended by a first vertical search range; the first horizontal search range and the first vertical search range are search ranges specified in the IBC TM merge mode;

removing any one of the K third candidate BVs of the reference block within the first region range, and continuing removal of other third candidate BVs until all the K third candidate BVs are processed or K filtered third candidate BVs are obtained; and

determining the second BV candidate list based on the at least one filtered third candidate BV.

In the embodiments of the present disclosure, the first region range may be a preset search range of the template in the IntraTMP mode.

In the embodiments of the present disclosure, the horizontal range of the preset range may be expressed as -searchRangeWidth and searchRangeWidth. Here, -searchRangeWidth represents the left boundary of the horizontal range of the preset range, and searchRangeWidth represents the left and right boundaries of the horizontal range of the preset range. The vertical range of the preset range can be expressed as -searchRangeHeight and searchRangHeight, where -searchRangeHeight represents the bottom boundary of the horizontal range of the preset range, and searchRangeHeight represents the top boundary of the horizontal range of the preset range.

In the embodiments of the present disclosure, the first extended horizontal boundary position and the first extended vertical boundary position of the third candidate reference block pointed to by the third candidate BV may be respectively determined, and when the first extended horizontal boundary position and the first extended vertical boundary position of the third candidate reference block fall within the horizontal range and the vertical range of the preset range, the third candidate BV is removed, that is, the third candidate BV is excluded from the subsequent sorting process.

Exemplarily, the process of determining a first extended horizontal boundary position and a first extended vertical boundary position of a third candidate reference block pointed to by a third candidate BV may be expressed as follows:

(bvCand [x0] [y0] [merge_idx] [0]-searchRangeWidthIBCTM >-searchRangeWidth & & bvCand [x0] [y0] [merge_idx] [0] + searchRangeWidthIBCTM < searchRangeWidth & & bvCand [x0] [y0] [merge_idx] [1]-searchRangeHeight & & bvCand [x0] [y0] [merge_idx] [1] + searchRangeHeightIBCTM < searchRangeHeight)

Here, bvCand [x0] [y0] [merge_idx] [0]-searchRangeWidthIBCTM represents a first extended horizontal boundary position of a third candidate reference block pointed to by a third candidate BV, bvCand [x0] [y0] [merge_idx] [1]-searchRangeHeightIBCTM represents a first extended vertical boundary position of the third candidate reference block pointed to by the third candidate BV, -searchRangeWidth represents a left boundary of the horizontal range of the preset range, searchRangeWidthIBCTM and searchRangeHeightIBCTM represent a search range specified in the IBC

30

TM merge mode (for example, both searchRangeWidthIBCTM and searchRangeHeightIBCTM have a value of 8 (for example, [-8, 8]).

Exemplarily, if (bvCand[x0][y0][merge_idx] [0]-searchRangeWidthIBCTM>-searchRangeWidth && bvCand[x0] [y0] [merge_idx] [0]+searchRangeWidthIBCTM< searchRangeWidth && bvCand[x0][y0] [merge_idx] [1] -searchRange-HeightIBCTM >-searchRangeHeight && bvCand[x0][y0] [merge_idx] [1] +searchRangeHeightIBCTM <searchRange-Height) is true, the third candidate reference block pointed to by the third candidate BV is a reference block within the first region range, and the third candidate BV of the reference block within the first region range is removed, and the removal is continued for other third candidate BVs until all the K third candidate BVs are processed or K filtered third candidate BVs are obtained.

Exemplarily, if (bvCand[x0][y0][merge_idx] [0]-searchRangeWidthIBCTM>-searchRangeWidth && bvCand[x0] [y0] [merge_idx] [0]+searchRangeWidthIBCTM< searchRangeWidth && bvCand[x0][y0] [merge_idx] [1] -searchRange-HeightIBCTM >-searchRangeHeight && bvCand[x0][y0] [merge_idx] [1] +searchRangeHeightIBCTM <searchRange-Height) is false, the third candidate reference block pointed to by the third candidate BV is not a reference block in the first region range, and the third candidate BV is used as the third candidate BV after filtering.

In the embodiments of the present disclosure, at least one third candidate BV after filtering may be added to the second BV candidate list, thereby determining the second BV candidate list.

In some embodiments of the present disclosure, determining the predicted value of the current block based on the second BV candidate list may include:

> performing TM refinement on the second BV candidate list to determine a fourth BV candidate list;
> decoding the bitstream and determining candidate BV index information;
> determining a first BV according to the candidate BV index information and the fourth BV candidate list; and
> determining a reference block of the current block according to the first BV, and determining the predicted value of the current block based on the reference block.

In the embodiments of the present disclosure, TM refinement may be performed on each second BV candidate in the second BV candidate list, thereby determining the fourth BV candidate list.

In the embodiments of the present disclosure, the decoder may determine a first BV corresponding to the candidate BV index information from the fourth BV candidate list based on the candidate BV index information.

In the embodiments of the present disclosure, when the current block has a prediction residual, the decoder may determine the prediction residual of the current block by analyzing the bitstream, and perform weighting or other processing on the predicted value of the current block and the prediction residual value of the current block to obtain a reconstructed value of the current block. When the current block does not have a prediction residual, the decoder may directly use the predicted value of the current block as the reconstructed value of the current block.

It can be understood that the decoder may perform redundancy removal for N first candidate BVs in the first BV candidate list of the current block in an IBC MBVD prediction mode in the block decoding process during the decoding process. Among the N first candidate BVs, overlapping BVs in the first region range may be removed in, for example the Intra TMP mode, a third BV candidate list may be determined, a predicted value of the current block may be determined based on the deredundant BVs in the third BV candidate list, and at least one first extended candidate BV corresponding to each of the first candidate BVs in the third BV candidate list may be removed again to obtain a second BV candidate list, and a predicted value of the current block may be determined based on the second BV candidate list. The redudant BVs in the first region range in, for example, the Intra TMP mode are removed, which leads to further reduction in the redundancy of BVs and further improvement of the expression efficiency of header information when BVs after the redundancy removal are decoded, thereby improving the video decoding efficiency.

In some embodiments of the present disclosure, in the process of determining a first BV candidate list of the current block, a duplicate-check operation may be performed on candidate BVs in the first BV candidate list.

In the embodiments of the present disclosure, in the IBC mode, in the process of determining the first BV candidate list of the current block, a duplicate-check operation may be performed on candidate BVs in the first BV candidate list.

In some embodiments of the present disclosure, performing the duplicate checking operation on candidate BVs in the first BV candidate list may include:

> determining a current candidate BV to be added;
> comparing the current candidate BV with candidate BVs in the first BV candidate list;
> when the current candidate BV does not overlap with the candidate BV in the first BV candidate list, adding the current candidate BV to the first candidate BV candidate list; and
> when the current candidate BV overlaps with a candidate BV in the first BV candidate list, skipping the current candidate BV, and continuing to determine a next candidate BV to be added.

In the embodiments of the present disclosure, for the current candidate BV to be added to the first BV candidate list, it is determined whether the current candidate BV overlaps with the candidate BVs in the first BV candidate list; when the current candidate BV overlaps with a candidate BV in the first BV candidate list, it is continued to determine the next candidate BV to be added.

In some embodiments of the present disclosure, the case where the current candidate BV overlaps with a candidate BV in the first BV candidate list may include that:

the current candidate BV is identical to a candidate BV in the first BV candidate list, or,
the difference between the current candidate BV and a candidate BV in the first BV candidate list satisfies a first preset condition.

In the embodiments of the present disclosure, two dimensions may be considered in determining whether the current candidate BV is completely the same as a candidate BV in the first BV candidate list. The first dimension is that the current candidate BV is exactly the same as the candidate BV, for example, the position information of the current candidate BV and the candidate BV is exactly the same. The second dimension is that the difference between the current candidate BV and the candidate BV satisfies the first preset condition, for example, the position difference between the current candidate BV and the candidate BV may be within a certain range, wherein the first preset condition here is preset, that is, the first preset condition is specified or agreed on by both the encoder and the decoder.

For example, when the current candidate BV is exactly the same as the candidate BV, it is considered the two BVs overlap with each other (both the horizontal and vertical components are the same); alternatively, after comparing the difference between the current candidate BV and the candidate BV with a certain threshold value, if the difference is too small, it is considered that the two BVs are coincident (for example, the absolute values of the differences in the horizontal component and the vertical component are both less than or equal to 2, or the absolute value of the difference in the horizontal component is less than 2, and the absolute value of the difference in the vertical component is less than 3).

It can be understood that when the first BV candidate list is performed, the deduplication operation may be performed, and some overlapping BVs may be removed, so that the redundancy of BVs during decoding can be reduced, and the expression efficiency of header information can be improved when the redundancy-removed BVs are used for coding and decoding, and the video decoding efficiency can be improved.

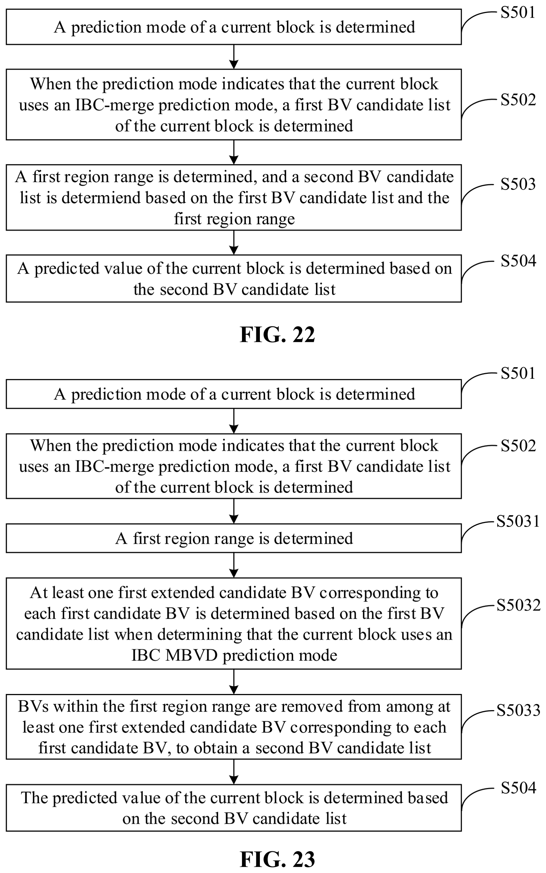

An embodiment of the present disclosure provides an encoding method, as shown in FIG. 22 which is a schematic flow diagram of an optional encoding method provided by an embodiment of the present disclosure. As shown in FIG. 22, the method may include following operations.

In operation S501, a prediction mode of a current block is determined.

In the embodiments of the present disclosure, in a scenario in which the current block is coded, the encoder may traverse different block prediction modes to perform template matching estimation, and determine therefrom a prediction mode with the smallest template cost, which is the prediction mode of the current block.

Note that, in the embodiments of the present disclosure, the prediction mode may include an intra block prediction mode and an inter block prediction mode, and the intra BV prediction mode may further include an IBC mode, an IntraTMP mode, and the like. No limit is set in the embodiments of the present disclosure.

In operation S502, when the prediction mode indicates that the current block uses an IBC-merge prediction mode, a first BV candidate list of the current block is determined.

In operation S503, a first region range is determined, and a second BV candidate list is determiend based on the first BV candidate list and the first region range.

In the embodiments of the present disclosure, the encoder may remove BVs within the first region range based on the first BV candidate list to obtain the second BV candidate list.

In the embodiments of the present disclosure, the first region range may include one of the following:

a size of a current coding tree unit;
a size of a reconstructed region in a current picture;
a size of a picture boundary of the current block; and
a search range of an Intra TMP mode.

For example, in the embodiments of the present disclosure, when the BVs within the search range of the Intra TMP mode are removed based on the first BV candidate list to obtain the second BV candidate list, BV information redundantly expressed between different modes may be removed, and the expression efficiency of header information can be improved, thereby improving the overall video coding efficiency.

In operation S504, a predicted value of the current block is determined based on the second BV candidate list.

In the embodiments of the present disclosure, the encoder may determine the first BV based on the second BV candidate list. A reference block of the current block may be determined according to the first BV, and a predicted value of the current block may be determined based on the reference block. The candidate BV index information corresponding to the first BV may be written into a bitstream.

In some embodiments of the present disclosure, the encoder may determine an original value of the current block, and a predicted difference value of the current block may be determined based on the original value of the current block and the predicted value of the current block.

In the embodiments of the present disclosure, the encoder may write the predicted difference value into the bitstream.

The specific implementation of operations S502-504 is consistent with the implementation principle of the decoder, and will not be described in detail here.

It can be understood that in the block encoding process during the encoding process, the encoder may remove overlapping BVs in the first region range, for example, in the Intra TMP mode, based on the first BV candidate list of the current block, determine the second BV candidate list, and determine the predicted value of the current block based on the redundancy-removed BVs in the second BV candidate list.

In some embodiments of the present disclosure, an encoding method is also provided, as shown in FIG. 23, which includes the following operations.

In operation S501, a prediction mode of a current block is determined.

In operation S502, when the prediction mode indicates that the current block uses an IBC-merge prediction mode, a first BV candidate list of the current block is determined.

In operation S5031, a first region range is determined.

In operation S5032, at least one first extended candidate BV corresponding to each first candidate BV is determined based on the first BV candidate list when determining that the current block uses an IBC MBVD prediction mode.

In some embodiments of the present disclosure, third syntax identification information indicating whether the current block uses an IBC MBVD prediction mode is determined and written to the bitstream.

In some embodiments of the present disclosure, the action of the encoder determining at least one first extended candidate BV corresponding to each first candidate BV based on the first BV candidate list may include: determining N first candidate BVs having minimum template cost from the first BV candidate list, N being an integer greater than or equal to 1; refining each of the N first candidate BVs based on a distance set and a BV prediction direction; and determining at least one first extended candidate BV corresponding to each first candidate BV.

In some embodiments of the present disclosure, for each first candidate BV, sequentially removing each first extended candidate BV that corresponds to a reference block within the first region range to obtain at least one filtered first extended candidate BV by the encoder may include:

when a horizontal boundary position of a first candidate reference block pointed to by any first extended candidate BV falls within a horizontal range of a preset range, and a vertical boundary position of the first candidate reference block pointed to by any first extended candidate BV falls within a vertical range of the preset range, determining that the first candidate reference block pointed to by the any first extended candidate BV is a reference block within the first region range; and removing the any first extended candidate BV, and continuing to remove other first extended candidate BVs corresponding to each of the first candidate BVs to obtain at least one first extended candidate BV after filtering.

In some embodiments of the present disclosure, when the horizontal boundary position of the first candidate reference block pointed to by any first extended candidate BV does not fall within the horizontal range of the preset range, or the vertical boundary position of the first candidate reference block pointed to by the any first extended candidate BV does not fall within the vertical range of the preset range, the first candidate reference block pointed to by the any first extended candidate BV is determined to be not a reference block within the first region range and is a filtered first extended candidate BV corresponding to each candidate BV.

Note that, based on the first BV candidate list, the encoder may determine the first extended candidate BVs of the N first candidate BVs determined after resorting the first BV candidate list, so as to determine whether it is necessary to remove BVs.

In operation S5033, BVs within the first region range are removed from among at least one first extended candidate BV corresponding to each first candidate BV, to obtain a second BV candidate list.

In some embodiments of the present disclosure, the action of the encoder removing BVs within the first region range from among at least one first extended candidate BV corresponding to each first candidate BV to obtain a second BV candidate list may include: sequentially removing each first extended candidate BV that corresponds to a reference block within the first region range for each first candidate BV to obtain at least one filtered first extended candidate BV; and determining the second BV candidate list based on the at least one filtered first extended candidate BV corresponding to each first candidate BV.

In some embodiments of the present disclosure, the encoder may determine, for each first candidate BV, M first extended candidate BVs with minimum template cost from at least one filtered first extended candidate BV, M being an integer greater than or equal to 1; and construct a second BV candidate list based on the M first extended candidate BVs of each first candidate BV.

In some embodiments of the present disclosure, for each first candidate BV, when the number of at least one filtered first extended candidate BV is less than M, other first candidate BVs may be determined from the first BV candidate list, the other first candidate BVs being different from the N first candidate BVs; and M first extended candidate BVs may be determined based on the other first candidate BVs and the at least one filtered first extended candidate BV.

It can be understood that the encoder may determine other first candidate BVs from the first BV candidate list while removing the redundantly expressed BV information and the other first candidate BVs are different from the N first candidate BVs, that is, candidates that cannot be expressed originally are introduced into the resorted list, which improves the expression range of the BV candidate list in the corresponding mode, increases the diversity of candidates, and also improves the video coding efficiency.

Exemplarily, in the MBVD mode, BVs that are within the IntraTMP search range are deleted during the process of constructing a MBVD candidate list. The specific method is as follows:

In the IBC MBVD mode, similar to the MMVD in VVC inter-prediction technology, a candidate may be selected from a candidate set corresponding to a predefined distance and direction sets by taking a candidate in the IBC merge list as a starting point, and the BV corresponding to the selected candidate is the final BV.

For example, in IBC MBVD, the distance set is defined as {1-pel, 2-pel, 4-pel, 8-pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, and the BVD direction includes positive and negative horizontal directions as well as positive and negative vertical directions.

The basic candidates are selected from the top five candidates in the resorted IBC merge list, and the refined positions (i.e. $20 \times 4$ candidates) of all possible MBVDs for each basic candidate are resorted based on the SAD cost between the template and the reference for each refined position. In this process, it is first determined whether the BVs of $20 \times 4$ candidates fall within the IntraTMP search range.

Finally, the first N refined positions with the smallest template SAD are retained, and N may be artificially preset, for example, to 8. If N is not reached, the BVs in the IBC candidate BV list may be used to supplement BVs for MBVD index encoding. If N is 0, IBC-MBVD is not performed. Candidates of IBC-MBVD do not inherit reorder types from RR-IBC-coded neighboring blocks. The MBVD index (candidate BV index information) is binarized by a Rice code having a parameter equal to 1, and the embodiments of the present disclosure do not limit the encoding method thereof.

In operation S504, the predicted value of the current block is determined based on the second BV candidate list.

It should be noted that the principle of the operations S502, S5031-S503 and S504 in the embodiments of the present disclosure are consistent with the principle of the decoder in determining that the current block uses the IBC MBVD prediction mode, and will not be repeatedly described here.

The difference is that the encoder constructs and removes first extended candidate BVs for each of the N first candidate BVs, while the decoder constructs and removes first extended candidate BVs merely for the first candidate BVs that corresponds to candidate BV index information among the N first candidate BVs. However, the principles for contruction of first extended candidate BV for each first candidate BV and removal of BVs within the first region range are the same for the encoder and the decoder.

It can be understood that, in the process of block coding, the encoder may perform deduplication based on at least one extended candidate BV corresponding to N first candidate BVs in the first BV candidate list of the current block in an IBC MBVD prediction mode in the process of block coding. Overlapping BVs in the first region range, for example, in the Intra TMP mode may be removed from among at least one extended candidate BV, a second BV candidate list may be determined, and a predicted value of a current block may be determined based on the redundancy-removed BVs in the second BV candidate list, so that the redundancy of BVs is reduced, the expression efficiency of header information can be improved when the redundancy-removed BVs are used for coding, and the video coding efficiency can be improved.

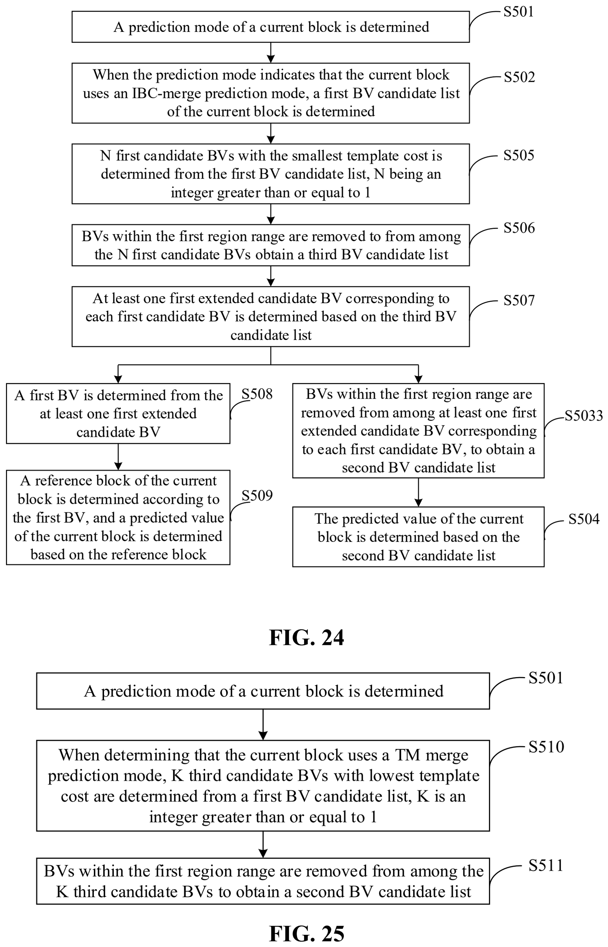

In some embodiments of the present disclosure, an encoding method is also provided, as shown in FIG. 24, including the following operations.

In operation S501, a prediction mode of a current block is determined.

In operation S502, when the prediction mode indicates that the current block uses an IBC-merge prediction mode, a first BV candidate list of the current block is determined.

In operation S505: N first candidate BVs with the smallest template cost is determined from the first BV candidate list, N being an integer greater than or equal to 1.

In operation S506, BVs within the first region range are removed to from among the N first candidate BVs obtain a third BV candidate list.

In some embodiments of the present disclosure, the encoder may sequentially remove each first candidate BV that corresponds to a reference block within the first region range from among the N first candidate BVs to obtain at least one filtered first candidate BV. A third BV candidate list may be determined based on the at least one filtered first candidate BV.

In some embodiments of the present disclosure, the encoder may sequentially offset each of the N first candidate BVs, and determine at least one second candidate BV corresponding to each first candidate BV; when the maximum horizontal boundary position and the minimum horizontal boundary position in the at least one second candidate reference block pointed to by the at least one second candidate BV fall within the horizontal range of the preset range, and the maximum vertical horizontal boundary position and the minimum vertical boundary position in the at least one second candidate reference block fall within the vertical range of the preset range, the first candidate BV corresponding to the at least one second candidate BV is determined to be a BV within the first region range; the first candidate BV is removed, and removal is continued for other first candidate BVs to obtain at least one first candidate BV after filtering.

In some embodiments of the present disclosure, when the maximum horizontal boundary position or the minimum horizontal boundary position of the at least one second candidate reference block pointed to by the at least one second candidate BV does not fall within the horizontal range of the preset range, or the maximum vertical horizontal boundary position or the minimum vertical boundary position of the at least one second candidate reference block does not fall within the vertical range of the preset range, the encoder may determine that the candidate BV corresponding to the at least one second candidate BV is not a BV within the first region range. A first candidate BV corresponding to the at least one second candidate BV is used as a filtered first candidate BV; and removal is continued for other first candidate BVs until all the N first candidate BVs are processed or N filtered first candidate BVs are obtained.

It should be noted that in the MBVD mode, the candidates in the merge list are determined, and the merge candidates in which all candidates are within the IntraTMP search range after shifting in the list are ignored. The specific method is as follows:

in the IBC MBVD mode, similar to MMVD in the inter-prediction technology of VVC, a candidate in the IBC merge list is used as a starting point to select a candidate from the candidate set corresponding to predefined distance and direction sets, and a BV corresponding to the selected candidate is used as the final BV.

For example, in IBC MBVD, the distance set is defined as {1-pel, 2-pel, 4-pel, 8-pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, and the BVD direction includes positive and negative horizontal directions as well as positive and negative vertical directions.

The basic candidates are selected from the top N candidates (N first candidate BVs) in the resorted IBC merge list. Firstly, it is determined whether the first N candidates are all within the IntraTMP search range after shifting, and a candidate (one of the N candidates) is removed from the basic candidates if they are all within the IntraTMP search range. In this case, the merge _idx syntax element no longer corresponds to the sequence number in the original IBC merge list, but the sequence number in the resorted list in which candidates whose offset candidates are all within the IntraTMP search range are removed. In this case, it is necessary to create a new candidate list dedicated for MBVD, i.e., MBVD_merge_cand_list, and check the first N candidates in the original IBC merge candidate list which is IBC merge_cand_list one by one. When not all the offset candidates of a candidate are within the Intra TMP search range, the candidate is put into MBVD_merge_cand_list, otherwise, the candidate is not put into the list until there is no candidate left or the predefined number (N) of candidates is satisfied.

In operation S507, at least one first extended candidate BV corresponding to each first candidate BV is determined based on the third BV candidate list.

In some embodiments of the present disclosure, the encoder may refine each first candidate BV in the third BV candidate list based on the distance set and the BV prediction direction, and determine at least one first extended candidate BV corresponding to each first candidate BV.

In operation S508, a first BV is determined from the at least one first extended candidate BV.

In operation S509, a reference block of the current block is determined according to the first BV, and a predicted value of the current block is determined based on the reference block.

In some embodiments of the present disclosure, the encoder may write candidate BV index information and extended candidate BV index information corresponding to the first BV into the bitstream.

It can be understood that, in the coding process, the encoder may perform deduplication for N first candidate BVs in the first BV candidate list of the current block in the IBC MBVD prediction mode in the process of block coding. Overlapping BVs in the first region range, for example, in the Intra TMP mode are removed from among N first candidate BVs, a third BV candidate list is determined, and a predicted value of a current block is determined based on the redundancy-removed BVs in the third BV candidate list, thus reducing the redundancy of BVs, and further improving the expression efficiency of header information when using the redundancy-removed BVs for coding.

In operation S5033, BVs within the first region range are removed from among at least one first extended candidate BV corresponding to each first candidate BV to obtain a second BV candidate list.

In operation S504: the predicted value of the current block is determined based on the second BV candidate list.

It can be understood that, in the coding process, the encoder may perform deduplication for N first candidate BVs in the first BV candidate list of the current block in the IBC MBVD prediction mode in the process of block encoding. Overlapping BVs in the first region range, for example, in the Intra TMP mode may be removed from N first candidate BVs to obtain a third BV candidate list, a predicted value of a current block may be determined based on the de-redundant BVs in the third BV candidate list, and at least one first extended candidate BV corresponding to each first candidate BV in the third BV candidate list may be removed again to obtain a second BV candidate list, and a predicted value of the current block may be determined based on the second BV candidate list. Removal of overlapping BVs in the first region range in, for example, the Intra TMP mode further reduces the redundancy of BVs and further improve the expression efficiency of header information when the BVs after redundancy removal is used for coding, thereby improving the video coding efficiency.

It should be noted that the principle for the operations S502-S509, S502-S507, S5033 and S504 in the embodiments of the present disclosure are consistent with that of the decoder in determining that the current block uses the IBC MBVD prediction mode, and will not be repeatedly described here.

The difference is that in operations S5033 and S504, the encoder constructs and removes a first extended candidate BV for each of the N first candidate BVs, while the decoder constructs and removes a first extended candidate BV merely for a first candidate BV that corresponds to the candidate BV index information among the N first candidate BVs. However, the principles for construction of a first extended candidate BV for each first candidate BV and removal of BVs within the first region range are the same for the encoder and the decoder.

It should be noted that, in the embodiments of the present disclosure, after the operation S507, the operations S508-S509 and the operations S5033-S504 are two optional implementations, and the embodiments of the present disclosure are not limited thereto.

In some embodiments of the present disclosure, an encoding method is also provided, as shown in FIG. 25, including the following operations.

In operation S501, a prediction mode of a current block is determined.

In operation S510, when determining that the current block uses a TM merge prediction mode, K third candidate BVs with lowest template cost are determined from a first BV candidate list, K is an integer greater than or equal to 1.

In operation S511, BVs within the first region range are removed from among the K third candidate BVs to obtain a second BV candidate list.

It should be noted that, in the embodiments of the present disclosure, the encoder may remove BVs within the first region range from among the K third candidate BVs to obtain a second BV candidate list, which may include the following two manners.

Manner 1

When a horizontal boundary position of a third candidate reference block pointed to by any third candidate BV among the K third candidate BVs falls within a horizontal range of a preset range, and a vertical boundary position of a third candidate reference block pointed to by the any third candidate BV falls within a vertical range of a preset range, the third candidate reference block pointed to by the any third candidate BV is determined to be a reference block of a first region range;

The any third candidate BV of the reference block within the first region range is removed, and removal is continued for other third candidate BVs until all the K third candidate BVs are processed or K filtered third candidate BVs are obtained; and
The second BV candidate list is determined based on the at least one filtered third candidate BV.

Manner 2

When a first extended horizontal boundary position of a third candidate reference block pointed to by any third candidate BV among the K third candidate BVs falls within a horizontal range of a preset range, and a first extended vertical boundary position of the third candidate reference block pointed to by the any third candidate BV falls within a vertical range of the preset range, the third candidate reference block pointed to by the any third candidate BV is determined to be a reference block of a first region range,

wherein the first extended horizontal boundary position is a horizontal boundary position after the horizontal boundary of the third candidate reference block is extended by a first horizontal search range; the first extended vertical boundary position is a vertical boundary position after the vertical boundary of the third candidate reference block is extended by a first vertical search range; the first horizontal search range and the first vertical search range are search ranges specified in the IBC TM merge mode;
The any third candidate BV of the reference block within the first region range is removed, and removal is continued for other third candidate BVs until all the K third candidate BVs are processed or K filtered third candidate BVs are obtained; and
The second BV candidate list is determined based on the at least one filtered third candidate BV.

In operation S504, the predicted value of the current block is determined based on the second BV candidate list.

It should be noted that the principles of the operations S502-S509, S502-S507, S5033 and S504 in the embodiments of the present disclosure are consistent with those of the decoder in determining that the current block uses the TM merge prediction mode, and will not be repeatedly described here.

It can be understood that the encoder may perform deduplication on K third candidate BVs in the first BV candidate list of the current block in the Intra TMP mode in the process of block coding during the coding process. Redudant BVs in the first region range in, for example, the Intra TMP mode may be removed to determine a second BV candidate list, and then local refinement may be performed based on the redundancy-removed BVs in the second BV candidate list to determine the predicted value of the current block. In this way, the redundancy of BVs is reduced, and the expression efficiency of header information can be improved when redundancy-removed BVs are used for coding, thus improving the video coding efficiency.

Note that, in the process of determining the first BV candidate list of the current block in the present disclosure, the encoding method may further include: performing a duplicate-check operation on candidate BVs in the first BV candidate list in the process of determining the first BV candidate list of the current block.

In the embodiments of the present disclosure, the encoder may perform a duplicate-check operation on candidate BVs in a first BV candidate list, including: determining a current candidate BV to be added; comparing the current candidate BV with candidate BVs in the first BV candidate list; when the current candidate BV does not overlap with any candidate BV in the first BV candidate list, adding the current candidate BV to the first BV candidate list; and when the current candidate BV overlaps with a candidate BV in the first BV candidate list, skipping the current candidate BV, and continuing to determine a next candidate BV to be added.

In some embodiments of the present disclosure, the current candidate BV may be exactly the same as a candidate BV in the first BV candidate list.

In some embodiments of the present disclosure, the difference between the current candidate BV and a candidate BV in the first BV candidate list satisfies a first preset condition.

It can be understood that the deduplication operation may be performed for the first BV candidate list to remove some overlapping BVs, so that the redundancy of BVs during coding can be reduced, and the expression efficiency of header information can be improved when the redundancy-removed BVs are used for coding, and the video encoding efficiency can be improved.

In some embodiments of the present disclosure, when the current block uses the IBC-merge prediction mode, first syntax identification information and second syntax identification information may be determined and written into the bitstream. The first syntax identification information indicates whether the current block uses an IBC prediction mode; and the second syntax identification information indicates whether the current block uses an Intra intra-block merge prediction mode.

The above-described codec methods will be explained in detail in some specific embodiments below.

(1) Embodiment 1:

In the case where the current block uses the IBC MBVD mode, the IBC MBVD mode is similar to MMVD in the inter-prediction technology of VVC. Taking a candidate in the IBC merge list as a starting point, a candidate is selected from a candidate set corresponding to predefined distance and direction sets, and the BV corresponding to the selected candidate is the most final BV. That is, the current candidate is taken as the center point for offset to obtain a candidate set, and it is continued to select one candidate as the final BV in the candidate set.

Specifically, when the current block is in the IBC MBVD mode, in the process of constructing the MBVD candidate list, the BVs within the IntraTMP search range may be deleted, and the specific method is as follows:
in the case where the current block is in the IBC MBVD mode, similar to MMVD in the inter-prediction technology of VVC, a candidate in the IBC merge list (first BV candidate list) is taken as a starting point, and a candidate is selected from a candidate set corresponding to the predefined distance and direction sets, and the BV corresponding to the selected candidate is the most final BV.

Based on the predefined distance set and the predefined direction set, a plurality of refined positions of the basic candidate may be be determined, thereby realizing refinement of the basic candidate.

Exemplarily, in the IBC MBVD mode, the distance set is defined as {1-pel, 2-pel, 4-pel, 8-pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, and the BVD direction includes positive and negative horizontal directions as well as positive and negative vertical directions. The direction set includes positive and negative horizontal directions as well as positive and negative vertical directions, with a total of 4 directions. Based on 20 distances and 4 directions, $20 \times 4$ refined positions (i.e., the refined positions of the basic candidate) may be determined.

First, basic candidates are required to be determined from the candidates in the sorted IBC merge list corresponding to the IBC MBVD mode. The number of basic candidates may be preset, that is, the decoder and the encoder may predetermine or agree on the number of basic candidates.

Note that the sorted IBC merge list is a list resorted after the TM cost calculation is performed for each candidate. That is, the individual candidates in the sorted IBC merge list are sorted based on TM cost values. Each candidate may be sorted in descending order of TM cost values, or each candidate may be sorted in ascending order of TM cost values, which is not limited in the present disclosure.

Exemplarily, when each candidate may be sorted in descending order of TM cost values, the 1st candidate in the sorted IBC merge list has the smallest TM cost value,

A basic candidate (first candidate BV) may be selected from the top five candidates in the resorted IBC merge list (first BV candidate list), and the refined positions of all possible MBVDs for each basic candidate (i.e. $20 \times 4$ candidates) may be resorted based on the SAD cost between the template and the reference of the refined position of each basic candidate. In this process, it is required to first determine whether the BVs of $20 \times 4$ candidates for each basic candidate are within the IntraTMP search range.

Exemplarily, if (bvCand [x0] [y0] [disIdx] [dirIdx] [0] >-searchRangeWidth && bvCand [x0] [y0] [disIdx] [dirIdx] [0] < searchRangeWidth && bvCand [x0] [y0] [disIdx] [dirIdx] [1] >-searchRangeHeight && bvCand [x0] [y0] [disIdx] [dirIdx] [1] < searchRangeHeight) is true, it represents that the BV is within the IntraTMP range and is excluded from resorting. Here searchRangeWidth and searchRangeHeight represent a preset search range of the template in IntraTMP mode.

bvCand represents a position of a candidate, and searchRangeWidth and searchRangeHeight represent the preset search range. Here, the preset search range includes at least one of the following: a size of a CTU, a range of a reconstructed region, a current image in which the current block is located, and the like, and the present disclosure does not limit this.

After the IBC MBVD list of the IBC MBVD mode is determined, the top N refined positions with the smallest template SAD may be retained, and N may be artificially preset, for example, to 8. If N is not reached, BVs in the IBC candidate BV list may be used to supplement the BVs for MBVD index coding. If N is 0, IBC-MBVD is not performed. Candidates of IBC-MBVD do not inherit reorder types from RR-IBC-coded neighboring blocks. An MBVD index may be binarized by a Rice code with a parameter equal to 1.

In the embodiments of the present disclosure, since the BV information redundantly expressed between different modes has been removed, the expression efficiency of header information can be improved, thereby improving the overall video coding efficiency. In addition to redundantly expressed BV information, candidates that cannot be expressed originally may be introduced into the resorted list, which improves the expression range of the BV candidate list in the corresponding mode, increases the diversity of candidates, and also improves the video coding efficiency.

In the embodiments of the present disclosure, in the IBC mode, candidates within the BV expression range that can be covered by the IntraTMP mode may be removed from the candidate list of the mode selected based on sorted template cost, thereby improving the expression efficiency of header information, improving the diversity of candidates, and improving the video encoding efficiency.

(2) Embodiment 2:

On the basis of Embodiment 1, when the current block is in the IBC MBVD mode, determination may be performed for the candidates in the merge list, and the merge candidates which all fall within the IntraTMP search range after shifting in the list are ignored. The specific method is as follows:

in the IBC MBVD mode, similar to MMVD in the inter-prediction technology of VVC, a candidate in the IBC merge list is taken as a starting point, and a candidate is selected from the candidate set corresponding to predefined distance and direction sets, and the BV corresponding to the selected candidate is the most final BV.

Exemplarily, in the IBC MBVD mode, the distance set is defined as {1-pel, 2-pel, 4-pel, 8-pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, and the BVD direction includes positive and negative horizontal directions as well as positive and negative vertical directions.

Basic candidates may be selected from the top N candidates in the resorted IBC merge list. It is first to determine whether the first N candidates after shifting (such as candidate points with offset of 128 pel) are all within the IntraTMP search range, and if they are all within the IntraTMP search range, the candidates are removed from the basic candidates. In this case, the syntax element merge _idx no longer corresponds to a sequence number in the original IBC merge list, but to a sequence number of the resorted list after the candidates whose offset candidates are all within the IntraTMP search range are removed. In this case, it is necessary to create a new candidate list dedicated to MBVD, i.e., MBVD_merge_cand_list, and check the first N candidates in the original IBC merge candidate list which is IBC merge_cand_list one by one. If not all the offset candidates fall within the Intra TMP search range, the corresponding candidate is put into the MBVD_merge_cand_list, otherwise, it is not put into the list until there are no candidates left or there is predefined number (such as 5) of candidates.

An example of conditions for determining that offset candidates are all within the IntraTMP search range is given below:

If (bvCand[x0][y0][merge_idx][disIdx_max] [dirVerIdx] [dirHorIdx_left] [0]>-searchRangeWidth && bvCand[x0][y0] [merge_idx] [disIdx_max] [dirVerIdx][dirHorIdx_right] [0]< searchRangeWidth && bvCand[x0][y0] [merge_idx] [disIdx_max] [dirVerIdx_up] [dirHorIdx] [1]>-searchRangeHeight && bvCand[x0][y0] [merge_idx] [disIdx_max] [dirVerIdx_down] [dirHorIdx] [1]<searchRangeHeight) is true,

after the IBC MBVD list of the IBC MBVD mode is determined, basic candidates for subsequent operations may be selected from the MBVD _merge_cand_list. At the same time, the meaning of the syntax element merge _idx is also changed to the sequence number in MBVD_merge_cand_list, where searchRangeWidth and searchRangeHeight refer to the search range of refined candidates utilizing TM in the TM merge mode, e.g. being set to a constant 8.

The refined positions (i.e. $20 \times 4$ candidates) of all possible MBVDs for each basic candidate are resorted based on the SAD cost between the template and its reference for each refined position. In this process, it is required to first determine whether a BV of $20 \times 4$ candidates is within the IntraTMP search range, for example:

if (bvCand[x0][y0][merge_idx][disIdx][dirVerIdx] [dirHorIdx] [0]>- searchRangeWidth && bvCand[x0][y0] [merge_idx] [disIdx] [dirVerIdx] [dirHorIdx] [0]< searchRangeWidth && bvCand[x0][y0] [merge_idx] [disIdx] [dirVerIdx] [dirHorIdx] [1]>- searchRangeHeight && bvCand[x0][y0] [merge_idx] [disIdx] [dirVerIdx] [dirHorIdx] [1]<searchRangeHeight) is true, the BV is determined to be within the IntraTMP range and is excluded from resorting. Here searchRangeWidth and searchRangeHeight refer to the preset search range of the template in IntraTMP mode.

Finally, the first N refined positions with the smallest template SAD may be retained, and N may be artificially preset, for example, to 8. If N is not reached, BVs in the IBC candidate BV list may be used to supplement BVs for MBVD index coding. Candidates of IBC-MBVD do not inherit reorder types from RR-IBC-coded neighboring blocks. An MBVD index may be binarized by a Rice code with a parameter equal to 1.

(3) Embodiment 3:

In the case where the current block is in the IBC TM merge mode, on the basis of a constructed merge list, the BVs in the list that are within the IntraTMP search range are ignored, that is, a candidate list specifically for the IBC TM merge mode is established, where some BVs that are within the IntraTMP search range are eliminated. An example of a specific implementation method is as follows:

in the IBC TM merge mode, after obtaining bvL based on the above information, TM may also be used to locally refine a BV. The specific operation is to search in a small range centered on the obtained bvL, and select the best BV in this range as the final BV based on the minimum TM cost.

For TM refinement of the candidate list of IBC merge mode, a specific implementation process is as follows: a candidate list IBC_TM_merge_cand_list dedicated to the IBC TM merge mode is constructed, and the first N candidates in the original IBC merge_cand_list are checked one by one; if the a checked candidate is not within the IntraTMP search range, the candidate is put into IBC_TM_merge_cand_list, otherwise, the candidate is not put into the list in until there are no candidates left or there is a predefined number (such as 6) of candidates.

An example of conditions of determining that offset candidates are all within the IntraTMP search range is given below:

if (bvCand [x0] [y0] [merge_idx] [0] >-searchRangeWidth & & bvCand [x0] [y0] [merge_idx] [0] < searchRangeWidth & & bvCand [x0] [y0] [merge_idx] [1] >-searchRangeHeight & & bvCand [x0] [y0] [merge_idx] [1] < searchRangeHeight) is true, where searchRangeWidth and searchRangeHeight refer to a preset search range of the template in IntraTMP mode.

After the IBC TM merge list of the IBC TM merge mode is determined, basic candidates for subsequent operations may be selected from IBC_TM_merge_cand_list. At the same time, the meaning of the syntax element merge _idx also is changed to a sequence number in IBC_TM_merge_cand_list.

It should be noted that when constructing candidates, the reorder type defaults to not reordered.

In the IBC TM merge mode, syntax element transmission indicates whether to perform TM refinement of integer-pixel precision. The position of the refined motion vector and the template used in each refinement step are required to comply with the constraints of the reference region.

Search may be performed near a pointing position of a candidate, and a size of SAD between the template of a reference block and the template of a current block is used to determine the best position. The search method includes but not limited to: the search range is [-8, 8]; first, a diamond search on a integer-pixel basis is performed, and eight points near the middle position are searched, as shown in the upper left corner of the figure below. The maximum search times are 375. After the best position is determined for the first time, the search is continued. In the subsequent search process, 5 points are searched for at even positions and 3 points are searched for at odd positions. Referring to FIGS. 7a and 7b, taking FIG. 7b as an example, a circle is made counterclockwise from the network dot, which is the order of indices 0 to 7. Specifically, when the red position is selected as the best position, the above process continues to search for 5 points or 3 points at the purple position. After the diamond search, a cross search on a integer-pixel basis is performed only once, that is, after the diamond search finds out the current best position, a check is performed at four positions below, right, above and left of the current best position by one pixel, and the final best position is updated, that is, the refined candidate list is updated.

(4) Embodiment 4:

Similar to Embodiment 3, except that candidates whose search range is completely included in the IntraTMP search range are removed, thus ensuring that the search range fully covers the IntraTMP range. An example of a specific implementation method is as follows:

In the IBC TM merge mode, after obtaining bvL based on the above information, TM may also be used to partially refine a BV. The specific operation is to search in a small range centered on the obtained bvL, and select the best BV in this range as the final BV based on the minimum TM cost.

For TM refinement of the candidate list of IBC merge mode, a specific implementation process is as follows: a candidate list IBC_TM_merge_cand_list dedicated to IBC TM merge mode is constructed, and the first N candidates in the original IBC merge candidate list IBC merge_cand_list are checked one by one. If a candidate thereof is not within the IntraTMP search range, the candidate is put into IBC_TM_merge_cand_list, otherwise, the candidate is not put into the list in until there are no candidates left or a predefined number (such as 6) of candidates is reached.

An example of a condition of determining that offset candidates are all within the IntraTMP search range is given below:

if (bvCand[x0][y0][merge_idx] [0]-searchRangeWidthIBCTM>- searchRangeWidth && bvCand[x0][y0] [merge_idx] [0] +searchRangeWidthIBCTM< searchRangeWidth && bvCand[x0][y0] [merge_idx] [1] -searchRangeHeightIBCTM >- searchRangeHeight && bvCand[x0][y0] [merge_idx] [1] +searchRangeHeightIBCTM <searchRangeHeight) is true, where searchRangeWidth and searchRangeHeight refer to a preset search range of the template in the IntraTMP mode, and searchRangeWidthIBCTM and searchRangeHeightIBCTM refer to a search range specified in the IBC TM merge mode (for example, searchRangeWidthIBCTM and searchRangeHeightIBCTM both have a value of 8, as exemplified in [-8, 8] below).

After the IBC TM merge list of the IBC TM merge mode is determined, basic candidates for subsequent operations may be selected from IBC_TM_merge_cand_list. At the same time, the meaning of the syntax element merge _idx is also changed to a sequence number in IBC_TM_merge_cand_list.

It should be noted that when constructing candidates, the reorder type defaults to no reorder.

In the IBC TM merge mode, syntax element transmission indicates whether to perform TM refinement with integer-pixel precision. The positions of a refined motion vector and the template used in each refinement step are required to comply with the constraints of the reference region. A search may be performed near a pointing position of a candidate, and the size of SAD between the template of a reference block and the template of a current block is used to determine the best position. A search method includes but not limited to: the search range is [-8, 8]; first, a diamond search on a integer-pixel basis is performed, and eight points near the middle position are searched, as shown in the upper left corner of the figure below. The maximum search times are 375. After the best position is determined for the first time, the search is continued. In the subsequent search process, 5 points are searched for at even positions and 3 points are searched for at odd positions. Referring to FIGS. 7a and 7b, taking FIG. 7b as an example, a circle is made counterclockwise from the network dot, which is the order of indices 0 to 7. Specifically, when the red position is selected as the best position, the above process continues to search for 5 points or 3 points of the purple position. After the diamond search process, a cross search on a integer-pixel basis is performed only once, that is, after the diamond search finds out the current best position, a check is performed at four positions which are below, right, above and left of the current best position by one pixel, and the final best position is updated, that is, the refined candidate list is updated.

(5) Embodiment 5:

The foregoing prediction techniques related to IBC TM merge and MBVD may be used in combination.

That is, Embodiments 1 and 2, Embodiments 2 and 4, Embodiments 2 and 3, and Embodiments 1 and 4 may all be used in combination.

(6) Embodiment 6:

In the process of establishing a TM merge candidate list or a MBVD candidate list, it may be further to perform a duplicate-check and redundancy removal.

A new BV to be added to the list may be compared with an existing BV in the list, and if they overlap, the BV is skipped and it is continued to check a next candidate BV; if there is no coincidence, the BV is added to the candidate list.

The criteria for overlapping may be that:

exactly the same is considered overlapping (both horizontal and vertical components are the same);

a difference between BVs may be compared with a certain threshold value to find that the difference is too small and is considered to be coincident (for example, the absolute value of the difference between the horizontal components and that between the vertical components are both less than or equal to 2, or the absolute value of the difference between the horizontal components is less than 2 and the absolute value of the difference between the vertical components is less than 3).

An embodiment of the present disclosure provides a bitstream, which is generated by bit coding according to information to be coded. The information to be coded includes at least one of the following: a prediction residual of a current block, candidate BV index information, extended candidate BV index information, first syntax identification information, second syntax identification information, and third syntax identification information.

The first syntax identification information is used to indicate whether the current block uses the intra-block-copy (IBC) prediction mode, the second syntax identification information is used to indicate whether the current block uses the IBC-merge prediction mode, and the third syntax identification information is used to indicate whether the current block uses the MBVD mode.

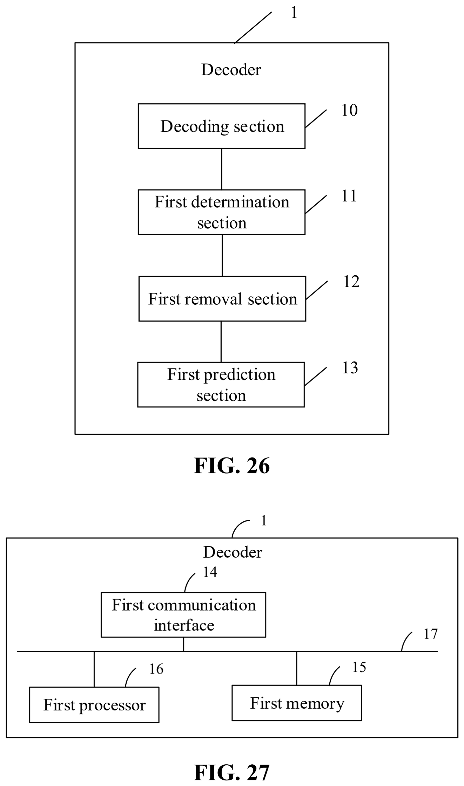

In still another embodiment of the present disclosure, based on the same inventive concept as the above-described embodiments, see FIG. 26, which shows a schematic diagram of the composition structure of decoder 1 provided according to an embodiment of the present disclosure. As shown in FIG. 26, the decoder 1 may include:

a decoding section 10, configured to decode a bitstream and determine a prediction mode of a current block;
a first determination section 11, configured to determine a first BV candidate list of the current block when the prediction mode of the current block indicates that the current block determines a predicted value of the current block using an IBC-merge prediction mode, and determine a first region range;
a first removal section 12, configured to determine a second BV candidate list based on the first BV candidate list and the first region range; and
a first prediction section 13, configured to determine the predicted value of the current block based on the second BV candidate list.

In some embodiments of the present disclosure, the first removal section 12 is further configured to remove BVs within the first region range based on the first BV candidate list to obtain the second BV candidate list.

In some embodiments of the present disclosure, the first removal section 12 is further configured to: determine candidate BV index information when determining that the current block uses an Intra Block Copy Merge Mode with Block Vector Difference (IBC MBVD) prediction mode;

determine at least one first extended candidate BV corresponding to a first candidate BV indicated by the candidate BV index information based on the first BV candidate list; and
remove the BVs within the first region range from the at least one first extended candidate BV to obtain the second BV candidate list.

In some embodiments of the present disclosure, the first determination section 11 is further configured to determine N first candidate BVs with the smallest template cost from the first BV candidate list, N being an integer greater than or equal to 1;

determine the first candidate BV from the N first candidate BVs based on the candidate BV index information; and
refine the first candidate BV based on a distance set and a BV prediction direction to determine at least one first extended candidate BV corresponding to the first candidate BV.

In some embodiments of the present disclosure, the first removal section 12 is further configured to sequentially remove each first extended candidate BV that corresponds to a reference block within the first region range to obtain at least one filtered first extended candidate BV; and
determine the second BV candidate list based on the at least one filtered first extended candidate BV.

In some embodiments of the present disclosure, the first removal section 12 is further configured to, when a horizontal boundary position of a first candidate reference block pointed to by any first extended candidate BV falls within a horizontal range of a preset range, and a vertical boundary position of the first candidate reference block pointed to by the any first extended candidate BV falls within a vertical range of the preset range, determining that the first candidate reference block pointed to by the any first extended candidate BV is a reference block within the first region range; and
remove the any first extended candidate BV and continuing removal of other first extended candidate BVs to obtain the at least one filtered first extended candidate BV.

In some embodiments of the present disclosure, the first removal section 12 is further configured to, when a horizontal boundary position of a first candidate reference block pointed to by any first extended candidate BV does not fall within a horizontal range of a preset range, or a vertical boundary position of the first candidate reference block pointed to by the any first extended candidate BV does not fall within a vertical range of the preset range, determining that the first candidate reference block pointed to by the any first extended candidate BV is not a reference block within the first region range, and the any first extended candidate BV is a filtered first extended candidate BV corresponding to each candidate BV.

In some embodiments of the present disclosure, the first determination section 11 is further configured to determine M first extended candidate BVs with smallest template cost from the at least one filtered first extended candidate BV, where M is an integer greater than or equal to 1; and construct the second BV candidate list based on the M first extended candidate BVs.

In some embodiments of the present disclosure, the first determination section 11 is further configured to, when the number of the at least one filtered first extended candidate BV is less than M, determining other candidate BVs from the first BV candidate list, wherein the other candidate BVs are different from the N candidate BVs; and determine M first extended candidate BVs based on the other candidate BVs and the at least one filtered first extended candidate BV.

In some embodiments of the present disclosure, the decoding section 10 is further configured to decode the bitstream and determine extended candidate BV index information.

The first determination section 11 is further configured to determine a first BV based on the extended candidate BV index information and the second BV candidate list, and determine a reference block of the current block based on the first BV;

The first prediction section 13 is further configured to determine the predicted value of the current block based on the reference block.

In some embodiments of the present disclosure, the first determination section 11 is further configured to determine N first candidate BVs with the smallest template cost from the first BV candidate list, N being an integer greater than or equal to 1;

remove BVs within the first region range from the N first candidate BVs to obtain a third BV candidate list; and determine, based on the third BV candidate list, the at least one first extended candidate BV corresponding to the first candidate BV indicated by the candidate BV index information.

In some embodiments of the present disclosure, the first determination section 11 is further configured to determine the first candidate BV from the third BV candidate list based on the candidate BV index information; and refine the first candidate BV based on a distance set and a BV prediction direction to determine the at least one first extended candidate BV corresponding to the first candidate BV.

In some embodiments of the present disclosure, the decoding section 10 is further configured to decode the bitstream and determine extended candidate BV index information;

determine a first BV from the at least one first extended candidate BV according to the extended candidate BV index information; and determining a reference block of the current block according to the first BV, and determine the predicted value of the current block based on the reference block.

In some embodiments of the present disclosure, the first removal section 12 is further configured to sequentially remove each first candidate BV that corresponds to a reference block within the first region range from the N first candidate BVs to obtain at least one filtered first candidate BV; and determine the third BV candidate list based on the at least one filtered first candidate BV.

In some embodiments of the present disclosure, the first removal section 12 is further configured to sequentially offset each of the N first candidate BVs to determine at least one second candidate BV corresponding to each first candidate BV;

when a maximum horizontal boundary position and a minimum horizontal boundary position of at least one second candidate reference block pointed to by the at least one second candidate BV fall within a horizontal range of a preset range, and a maximum vertical boundary position and a minimum vertical boundary position of the at least one second candidate reference block fall within a vertical range of the preset range, determining that a first candidate BV corresponding to the at least one second candidate BV is a BV of the first region range; and remove the first candidate BV and continuing removal of other first candidate BVs to obtain the at least one filtered first candidate BV.

In some embodiments of the present disclosure, the first removal part 12 is further configured to, when a maximum horizontal boundary position or a minimum horizontal boundary position of at least one second candidate reference block pointed to by the at least one second candidate BV does not fall within a horizontal range of a preset range, or a maximum vertical boundary position or a minimum vertical boundary position of the at least one second candidate reference block does not fall within a vertical range of the preset range, determining that a candidate BV corresponding to the at least one second candidate BV is not a BV of the first region range and a first candidate BV corresponding to the at least one second candidate BV is a filtered first candidate BV; and

continue removal of other first candidate BVs until all N first candidate BVs are processed or N filtered first candidate BVs are obtained.

In some embodiments of the present disclosure, the first removal section 12 is further configured to determine K third candidate BVs with the smallest template cost from the first BV candidate list when determining that the current block uses a Template Matching (TM)-merge prediction mode, K being an integer greater than or equal to 1; and

removing the BVs within the first region range from among the K third candidate BVs to obtain the second BV candidate list.

In some embodiments of the present disclosure, the first removal section 12 is further configured to, when a horizontal boundary position of a third candidate reference block pointed to by any one of the K third candidate BVs falls within a horizontal range of a preset range, and a vertical boundary position of the third candidate reference block pointed to by the any one of the K third candidate BVs falls within a vertical range of the preset range, determining that the third candidate reference block pointed to by the any one of the K third candidate BVs is a reference block within the first region range; and

remove the any one of the K third candidate BVs of the reference block within the first region range, and continuing removal of other third candidate BVs until all the K third candidate BVs are processed or K filtered third candidate BVs are obtained; and

determine the second BV candidate list based on the at least one filtered third candidate BV.

In some embodiments of the present disclosure, the first removal section 12 is further configured to, when a first extended horizontal boundary position of a third candidate reference block pointed to by any third candidate BV among the K third candidate BVs falls within a horizontal range of a preset range, and a first extended vertical boundary position of the third candidate reference block pointed to by any third candidate BV falls within a vertical range of a preset range, determine that the third candidate reference block pointed to by the any third candidate BV is a reference block within the first region range,

wherein the first extended horizontal boundary position is a horizontal boundary position after the horizontal boundary of the third candidate reference block is extended by the first horizontal search range; the first extended vertical boundary position is a vertical boundary position after the vertical boundary of the third candidate reference block is extended by the first vertical search range; and the first horizontal search range and the first vertical search range are search ranges specified in the TM merge prediction mode;

removing the any third candidate BV of the reference block within the first region range, and continue removal of other third candidate BVs until all the K third candidate BVs are processed or K filtered third candidate BVs are obtained; and

determine the second BV candidate list based on the at least one filtered third candidate BV.

In some embodiments of the present disclosure, the first determination section 11 is further configured to perform TM refinement on the second BV candidate list to determine a fourth BV candidate list.

The decoding section 10 is further configured to decode the bitstream and determine candidate BV index information.

The first determination section 11 is further configured to determine a first BV according to the candidate BV index information and the fourth BV candidate list, and determine a reference block of the current block based on the first BV.

The first prediction section 13 is further configured to determine the predicted value of the current block based on the reference block.

In some embodiments of the present disclosure, the first removal section 12 is further configured to perform a duplicate-check operation on candidate BVs in the first BV candidate list during the process of determining the first BV candidate list for the current block.

In some embodiments of the present disclosure, the first removal section 12 is further configured to determine a current candidate BV to be added;

compare the current candidate BV to the candidate BVs in the first BV candidate list;

when the current candidate BV does not overlap with any candidate BV in the first BV candidate list, add the current candidate BV to the first BV candidate list; and

when the current candidate BV overlaps with a candidate BV in the first BV candidate list, skip the current candidate BV and continue to determine a next candidate BV to be added.

In some embodiments of the present disclosure, the first removal section 12 is further configured, the current candidate BV is completely identical to the candidate BV in the first BV candidate list.

In some embodiments of the present disclosure, the first removal section 12 is further configured, a difference between the current candidate BV and the candidate BV in the first BV candidate list satisfies a first preset condition.

In some embodiments of the present disclosure, the decoding section 10 is further configured to decode the bitstream and determine a prediction residual value of the current block.

The first prediction section 13 is further configured to determine a reconstructed value of the current block based on the predicted value of the current block and the prediction residual value of the current block.

In some embodiments of the present disclosure, the first region range may include one of the followings:

a size of a current coding tree unit;
a size of a reconstructed region in a current picture;
a size of a picture boundary of the current block; and
a search range of an Intra TMP mode.

In some embodiments of the present disclosure, the decoding section 10 is further configured to decode the bitstream and determine first syntax identification information, the first syntax identification information being used to indicate whether the current block uses an IBC prediction mode; and

when the first syntax identification information indicates that the current block uses the IBC prediction mode, determine second syntax identification information which indicates whether the current block uses an IBC-merge prediction mode to determine the predicted value of the current block.

In practical applications, an embodiments of the present disclosure also provides a decoder, as shown in FIG. 27 which is a schematic diagram of a specific hardware structure of the decoder 1 provided by an embodiment of the present disclosure. As shown in FIG. 27, the decoder 1 may include:

a first communication interface 14, a first memory 15, and a first processor 16. The various components are coupled together by a first bus system 17. It will be appreciated that the first bus system 17 is used to enable connection communication between these components. The first bus system 17 includes a power bus, a control bus, and a status signal bus in addition to a data bus. However, for the sake of clarity of illustration, various buses are labled as first bus system 17 in FIG. 27.

The first communication interface 14 is configured to receive and transmit signals in the process of transmitting and receiving information with other external network elements.

The first memory 15 for storing a computer program executable on the first processor 16.

The first processor 16 for executing a decoding method on the decoder side when the computer program is executed.

It can be understood that in the block decoding process during the decoding process, the decoder may remove redundant BVs in the first region range in, for example, the Intra TMP mode based on the first BV candidate list of the current block to determine the second BV candidate list, and determine the predicted value of the current block based on the redundancy-removed BVs in the second BV candidate list.

It can be understood that the first memory 15 in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM), and Direct Rambus RAM (DRRAM). The first memory 15 of the systems and methods described herein is intended to include, but is not limited to, these and any other suitable type of memory.

The first processor 16 may be an integrated circuit chip having signal processing capabilities. In implementation, the steps of the above-described method may be accomplished by integrated logic circuitry of hardware in the first processor 16 or instructions in the form of software. The first processor 16 described above may be a general-purpose processor, a Digital Signal Processor (DSP), an Application Specific Integrated Circuit (ASIC), an off-the-shelf Field Programmable Gate Array (FPGA) or other programmable logic device, a discrete gate or transistor logic device, or a discrete hardware component. The methods, steps, and logical block diagrams described in the embodiments of the present disclosure may be implemented or executed. The general purpose processor may be a microprocessor or the processor may be any conventional processor or the like. The steps of the method described in connection with the embodiments of the present disclosure may be directly embodied as being performed by the hardware decoding processor, or may be performed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the first memory 15, and the first processor 16 reads the information of the first memory 15, and combines the hardware thereof to complete the steps of the above method.

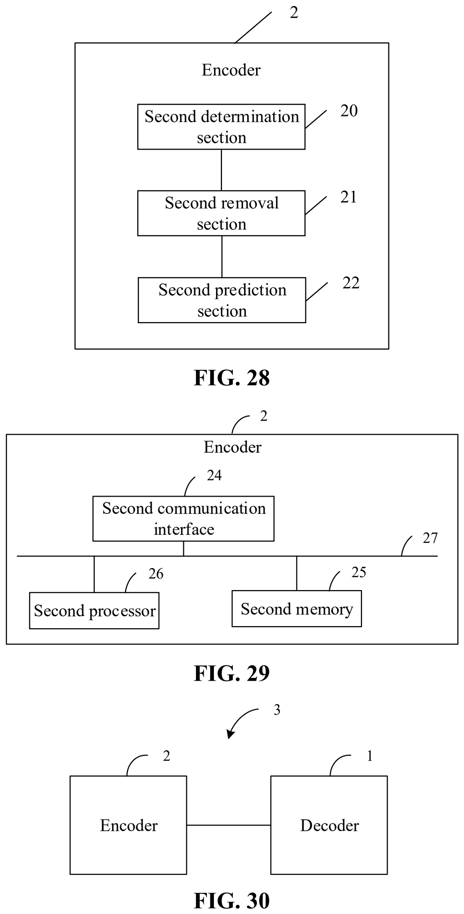

In still another embodiment of the present disclosure, based on the same inventive concept as the above-described embodiments, FIG. 28 shows a schematic diagram of the composition structure of encoder 2 provided by an embodiment of the present disclosure. As shown in FIG. 28, the encoder 2 may include:

a second determination section 20, configured to: determine a prediction mode of a current block; determine a first BV candidate list for the current block when the current block uses an IBC-merge prediction mode; and determine a first region range.

a second removal section 21, configured to determine a second BV candidate list based on the first BV candidate list and the first region range; and

a second prediction section 22, configured to determine a predicted value of the current block based on the second BV candidate list.

In some embodiments of the present disclosure, the second removal section 21 is further configured to remove BVs within the first region range based on the first BV candidate list to obtain the second BV candidate list.

In some embodiments of the present disclosure, the second removal section 21 is further configured to determine at least one first extended candidate BV corresponding to each first candidate BV based on the first BV candidate list when determining that the current block uses an IBC MBVD prediction mode; and

remove the BVs within the first region range from among the at least one first extended candidate BV corresponding to each first candidate BV to obtain the second BV candidate list.

In some embodiments of the present disclosure, the second determination section 20 is further configured to determine N first candidate BVs with the smallest template cost from the first BV candidate list, N being an integer greater than or equal to 1; and

refining each of the N first candidate BVs based on a distance set and a BV prediction direction to determine the at least one first extended candidate BV corresponding to each first candidate BV.

In some embodiments of the present disclosure, the second removal section 21 is further configured to, for each first candidate BV, sequentially removing each first extended candidate BV that corresponds to a reference block within the first region range to obtain at least one filtered first extended candidate BV; and

determine the second BV candidate list based on the at least one filtered first extended candidate BV corresponding to each first candidate BV.

In some embodiments of the present disclosure, the second removal section 21 is further configured to, when a horizontal boundary position of a first candidate reference block pointed to by any first extended candidate BV falls within a horizontal range of a preset range, and a vertical boundary position of the first candidate reference block pointed to by the any first extended candidate BV falls within a vertical range of the preset range, determine that the first candidate reference block pointed to by the any first extended candidate BV is a reference block within the first region range; and

remove the any first extended candidate BV and continuing removal of other first extended candidate BVs corresponding to each first candidate BV to obtain the at least one filtered first extended candidate BV.

In some embodiments of the present disclosure, the second removal section 21 is further configured to, when a horizontal boundary position of a first candidate reference block pointed to by any first extended candidate BV does not fall within a horizontal range of a preset range, or a vertical boundary position of the first candidate reference block pointed to by the any first extended candidate BV does not fall within a vertical range of the preset range, determine that the first candidate reference block pointed to by the any first extended candidate BV is not a reference block within the first region range, and the any first extended candidate BV is a filtered first extended candidate BV corresponding to each candidate BV.

In some embodiments of the present disclosure, the second determination section 20 is further configured to, for each first candidate BV, determining M first extended candidate BVs with smallest template cost from the at least one filtered first extended candidate BV, where M is an integer greater than or equal to 1; and

constructing the second BV candidate list based on N first extended candidate BVs of each first candidate BV.

In some embodiments of the present disclosure, the second determining section 20 is further configured to determine, for each first candidate BV, other first candidate BVs from the first BV candidate list when the number of the at least one filtered first extended candidate BV is less than M; the other first candidate BVs being different from the N first candidate BVs; and

determine M first extended candidate BVs based on the other first candidate BVs and the at least one filtered first extended candidate BV.

In some embodiments of the present disclosure, the second determination section 20 is further configured to determine N first candidate BVs with the smallest template cost from the first BV candidate list, N being an integer greater than or equal to 1;

remove the BVs within the first region range from among the N first candidate BVs to obtain a third BV candidate list; and
determine, based on the third BV candidate list, the at least one first extended candidate BV corresponding to each first candidate BV.

In some embodiments of the present disclosure, the second determination section 20 is further configured to refine each first candidate BV in the third BV candidate list based on a distance set and a BV prediction direction to determine the at least one first extended candidate BV corresponding to each first candidate BV.

In some embodiments of the present disclosure, the second removal section 21 is further configured to sequentially remove each first candidate BV that corresponds to a reference block within the first region range from the N first candidate BVs to obtain at least one filtered first candidate BV; and
determine the third BV candidate list based on the at least one filtered first candidate BV.

In some embodiments of the present disclosure, the second removal section 21 is further configured to sequentially offset each first candidate BV among the N first candidate BVs to determine at least one second candidate BV corresponding to each first candidate BV;

when a maximum horizontal boundary position and a minimum horizontal boundary position of at least one second candidate reference block pointed to by the at least one second candidate BV fall within a horizontal range of a preset range, and a maximum vertical boundary position and a minimum vertical boundary position of the at least one second candidate reference block fall within a vertical range of the preset range, determining that a first candidate BV corresponding to the at one second candidate BV is a BV of the first region range; and
remove the first candidate BV and continuing removing other first candidate BVs to obtain the at least one filtered first candidate BV.

In some embodiments of the present disclosure, the second removal part 21 is further configured to, when a maximum horizontal boundary position or a minimum horizontal boundary position of at least one second candidate reference block pointed to by the at least one second candidate BV does not fall within a horizontal range of a preset range, or a maximum vertical boundary position or a minimum vertical boundary position of the at least one second candidate reference block does not fall within a vertical range of the preset range, determining that a candidate BV corresponding to the at least one second candidate BV is not a BV of the first region range, and a first candidate BV corresponding to the at least one second candidate BV is a filtered first candidate BV; and
continuing removal of other first candidate BVs until all N first candidate BVs are processed or N filtered first candidate BVs are obtained.

In some embodiments of the present disclosure, the second removal section 21 is further configured to determine K third candidate BVs with the smallest template cost from the first BV candidate list when determining that the current block uses a Template Matching (TM) merge prediction mode, K being an integer greater than or equal to 1; and
removing the BVs within the first region range from the K third candidate BVs to obtain the second BV candidate list.

In some embodiments of the present disclosure, the second removal section 21 is further configured to, when a horizontal boundary position of a third candidate reference block pointed to by any one of the K third candidate BVs falls within a horizontal range of a preset range, and a vertical boundary position of the third candidate reference block pointed to by the any one of the K third candidate BVs falls within a vertical range of the preset range, determining that the third candidate reference block pointed to by the any one of the K third candidate BVs is a reference block within the first region range;

remove the any one of the K third candidate BVs corresponding to the reference block within the first region range, and continuing removal of other third candidate BVs until all the K third candidate BVs are processed or K filtered third candidate BVs are obtained; and
determine the second BV candidate list based on the at least one filtered third candidate BV.

In some embodiments of the present disclosure, the second removal section 21 is further configured to, among the K third candidate BVs, when a first extended horizontal boundary position of a third candidate reference block pointed to by any third candidate BV falls within a horizontal range of a preset range, and a first extended vertical boundary position of the third candidate reference block pointed to by the any third candidate BV falls within a vertical range of the preset range, determining that the third candidate reference block pointed to by the any third candidate BV is a reference block within the first region range,

wherein the first extended horizontal boundary position is a horizontal boundary position after the horizontal boundary of the third candidate reference block is extended by a first horizontal search range; the first extended vertical boundary position is a vertical boundary position after the vertical boundary of the third candidate reference block is extended by a first vertical search range; the first horizontal search range and the first vertical search range are search ranges specified under a TM merge prediction mode;
remove the any third candidate BV of the reference block within the first region range, and continue removal of other third candidate BVs until all the K third candidate BVs are processed or K filtered third candidate BVs are obtained; and
determine the second BV candidate list based on the at least one filtered third candidate BV.

In some embodiments of the present disclosure, the second removal section 21 is further configured to perform a duplicate-check operation on candidate BVs in the first BV candidate list during the process of determining the first BV candidate list for the current block.

In some embodiments of the present disclosure, the second removal section 21 is further configured to determine a current candidate BV to be added;

compare the current candidate BV to the candidate BVs in the first BV candidate list;
when the current candidate BV does not overlap with any candidate BV in the first BV candidate list, add the current candidate BV to the first BV candidate list; and
when the current candidate BV overlaps with a candidate BV in the first BV candidate list, skip the current candidate BV and continue to determine a next candidate BV to be added.

In some embodiments of the present disclosure, the second removal section 21 is further configured, the current candidate BV is completely identical to the candidate BV in the first BV candidate list.

In some embodiments of the present disclosure, the second removal section 21 is further configured, a difference between the current candidate BV and the candidate BV in the first BV candidate list satisfies a first preset condition.

In some embodiments of the present disclosure, the encoder 2 further comprises a writing portion 23. The second determination section 20 is further configured to determine first syntax identification information and determine second syntax identification information when the current block uses an IBC-merge prediction mode;

The writing section 23 is further configured to write the first syntax identification information and the second syntax identification information into the bitstream, the first syntax identification information indicating whether the current block uses an IBC prediction mode, the second syntax identification information indicating whether the current block uses an IBC-merge prediction mode.

In some embodiments of the present disclosure, the second determination section 20 is further configured to determine third syntax identification information.

The writing section 23 is further configured to write the third syntax identification information into the bitstream, the third syntax identification information indicating whether the current block uses an IBC MBVD prediction mode.

In some embodiments of the present disclosure, the second determination section 20 is further configured to determine a first BV according to the second BV candidate list, and determine a reference block of the current block from the first BV.

The second prediction section 22 is further configured to determine the predicted value of the current block based on the reference block.

In some embodiments of the present disclosure, the writing section 23 is further configured to write candidate BV index information corresponding to the first BV into the bitstream.

In some embodiments of the present disclosure, the writing section 23 is further configured to write candidate BV index information and extended candidate BV index information corresponding to the first BV into the bitstream.

In some embodiments of the present disclosure, the second prediction section 22 is further configured to determine an original value of the current block, and determine a prediction residual value of the current block according to an original value of the current block and a predicted value of the current block.

In some embodiments of the present disclosure, the first region range may include one of the followings:

a size of a current coding tree unit;
a size of a reconstructed region in the current picture;
a size of a picture boundary of the current block; and
a search range of an Intra TMP mode.

In practical disclosure, an embodiment of the present disclosure also provides an encoder, as as shown in FIG. 29

47

which is a schematic diagram of a specific hardware structure of the encoder 2 provided by an embodiment of the present disclosure. As shown in FIG. 29, the encoder 2 may include:
a second communication interface 24, a second memory 25, and a second processor 26. The various components are coupled together by a second bus system 27. It will be appreciated that the second bus system 27 is used to enable connection communication between these components. The second bus system 27 includes a power bus, a control bus, and a status signal bus in addition to a data bus. However, for the sake of clarity of illustration, various buses are designated as second bus system 27 in FIG. 29.

The second communication interface 24 is used for receiving and transmitting signals in the process of transmitting and receiving information with other external network elements.

The second memory 25 is for storing a computer program capable of running on the second processor 26.

The second processor 26 is for executing an encoding method on the encoder side when the computer program is executed.

It can be understood that in the block coding process during the encoding process, the encoder may remove redundant BVs in the first region range, for example, in the Intra TMP mode based on the first BV candidate list of the current block to determine the second BV candidate list, and determine the predicted value of the current block based on the redundancy-removed BVs in the second BV candidate list.

An embodiment of the present disclosure provides a computer-readable storage medium storing a computer program that implements the decoding method of the decoder when executed by a first processor or implements the encoding method of the encoder when executed by a second processor.

In still another embodiment of the present disclosure, FIG. 30 shows a schematic structure diagram of a codec system provided by an embodiment of the present disclosure. As shown in FIG. 30, the codec system 3 may include the encoder 2 and the decoder 1.

In the embodiments of the present disclosure, the encoder 2 may be the encoder described in any one of the foregoing embodiments, and the decoder 1 may be the decoder described in any one of the foregoing embodiments.

It should be noted that in the present disclosure, the terms "comprising," "including," or any other variation thereof are intended to encompass a non-exclusive inclusion such that a process, method, article, or apparatus which not only includes a series of elements but also includes other elements not explicitly listed, or elements inherent to such a process, method, article, or apparatus. Without further limitation, an element defined by the statement "including a" does not preclude additional identical elements in the process, method, article, or apparatus that includes the element.

The above-described serial numbers of the embodiments of the present disclosure are for description only, and do not represent the advantages and disadvantages of the embodiments.

The methods disclosed in several method embodiments provided in the present disclosure can be arbitrarily combined without conflict to obtain new method embodiments.

The features disclosed in several product embodiments provided in the present disclosure can be arbitrarily combined without conflicting to obtain new product embodiments.

The features described in several method or device embodiments provided in the present disclosure can be arbitrarily combined without conflict to obtain a new method or device embodiment.

The above is merely specific embodiments of the present disclosure, and the scope of protection of the present disclosure is not limited thereto. Any changes or substitutions the person skilled in the art can easily think of within the technical scope disclosed in the present disclosure should be covered within the scope of protection of the present disclosure. Therefore, the scope of protection of the present disclosure should be based on the scope of protection of the claims.

Industrial practicality

In the embodiments of the present disclosure, in the process of block coding and decoding, regardless of whether the encoding end or the decoding end performs block coding and decoding, overlapping BVs in a first region range, for example, in the Intra TMP mode, may be removed based on a first BV candidate list of a current block, and a predicted value of the current block may be determined based on the redundancy-removed BVs in a second BV candidate list.

**Claims**

**1.** A decoding method, applied to a decoder, the method comprising:

decoding a bitstream and determining a prediction mode of a current block;
determining a first block-vector (BV) candidate list for the current block when the prediction mode of the current block indicates that the current block determines a predicted value of the current block using an Intra Block Copy (IBC)-merge prediction mode;

determining a first region range, and determining a second BV candidate list based on the first BV candidate list and the first region range; and

determining the predicted value of the current block based on the second BV candidate list.

2. The method according to claim **1,** wherein determining the second BV candidate list based on the first BV candidate list and the first region range comprises:

removing BVs within the first region range from the first BV candidate list to obtain the second BV candidate list.

3. The method according to claim 2, wherein removing the BVs within the first region range from the first BV candidate list to obtain the second BV candidate list comprises:

when determining that the current block uses an Intra Block Copy Merge Mode with Block Vector Difference (IBC MBVD) prediction mode based on intra merge with BV difference, determining candidate BV index information;

determining at least one first extended candidate BV corresponding to a first candidate BV indicated by the candidate BV index information based on the first BV candidate list; and

removing the BVs within the first region range from the at least one first extended candidate BV to obtain the second BV candidate list.

4. The method according to claim 3, wherein determining the at least one first extended candidate BV corresponding to the first candidate BV indicated by the candidate BV index information based on the first BV candidate list comprises:

determining N first candidate BVs with smallest template cost from the first BV candidate list, where N is an integer greater than or equal to 1;

determining the first candidate BV from the N first candidate BVs based on the candidate BV index information; and

refining the first candidate BV based on a distance set and a BV prediction direction to determine the at least one first extended candidate BV corresponding to the first candidate BV.

5. The method according to claim 4, wherein removing the BVs within the first region range from the at least one first extended candidate BV to obtain the second BV candidate list comprises:

sequentially removing each first extended candidate BV that corresponds to a reference block within the first region range to obtain at least one filtered first extended candidate BV; and

determining the second BV candidate list based on the at least one filtered first extended candidate BV.

6. The method according to claim 5, wherein sequentially removing the each first extended candidate BV corresponding to the reference block within the first region range to obtain the at least one filtered first extended candidate BV comprises:

when a horizontal boundary position of a first candidate reference block pointed to by any first extended candidate BV falls within a horizontal range of a preset range, and a vertical boundary position of the first candidate reference block pointed to by the any first extended candidate BV falls within a vertical range of the preset range, determining that the first candidate reference block pointed to by the any first extended candidate BV is a reference block within the first region range; and

removing the any first extended candidate BV and continuing removal of other first extended candidate BVs to obtain the at least one filtered first extended candidate BV.

7. The method according to claim 5 or 6, further comprising:

when a horizontal boundary position of a first candidate reference block pointed to by any first extended candidate BV does not fall within a horizontal range of a preset range, or a vertical boundary position of the first candidate reference block pointed to by the any first extended candidate BV does not fall within a vertical range of the preset range, determining that the first candidate reference block pointed to by the any first extended candidate BV is not a reference block within the first region range, and the any first extended candidate BV is a filtered first extended candidate BV corresponding to each candidate BV.

8. The method according to any one of claims 5 to 7, wherein determining the second BV candidate list based on the at least one filtered first extended candidate BV comprises:

determining M first extended candidate BVs with smallest template cost from the at least one filtered first extended candidate BV, where M is an integer greater than or equal to 1; and

constructing the second BV candidate list based on the M first extended candidate BVs.

9. The method according to claim 8, further comprising:

when the number of the at least one filtered first extended candidate BV is less than M, determining other candidate BVs from the first BV candidate list, wherein the other candidate BVs are different from the N candidate BVs; and

determining M first extended candidate BVs based on the other candidate BVs and the at least one filtered first extended candidate BV.

10. The method according to any one of claims 1 to 9, wherein determining the predicted value of the current block based on the second BV candidate list comprises:

decoding the bitstream and determining extended candidate BV index information;
determining a first BV based on the extended candidate BV index information and the second BV candidate list; and
determining a reference block of the current block based on the first BV, and determining the predicted value of the current block based on the reference block.

11. The method according to any one of claims 3 to 10, wherein determining the at least one first extended candidate BV corresponding to the first candidate BV indicated by the candidate BV index information based on the first BV candidate list comprises:

determining N first candidate BVs with smallest template cost from the first BV candidate list, where N is an integer greater than or equal to 1;
removing BVs within the first region range from the N first candidate BVs to obtain a third BV candidate list; and
determining the at least one first extended candidate BV corresponding to the first candidate BV indicated by the candidate BV index information based on the third BV candidate list.

12. The method according to claim 11, wherein determining the at least one first extended candidate BV corresponding to the first candidate BV indicated by the candidate BV index information based on the third BV candidate list comprises:

determining the first candidate BV from the third BV candidate list based on the candidate BV index information; and
refining the first candidate BV based on a distance set and a BV prediction direction to determine the at least one first extended candidate BV corresponding to the first candidate BV.

13. The method according to claim 11 or 12, further comprising:

decoding the bitstream and determining extended candidate BV index information;
determining a first BV from the at least one first extended candidate BV based on the extended candidate BV index information; and
determining a reference block of the current block based on the first BV, and determining the predicted value of the current block based on the reference block.

14. The method according to any one of claims 11 to 13, wherein removing BVs within the first region range from the N first candidate BVs to obtain the third BV candidate list comprises:

sequentially removing each first candidate BV that corresponds to a reference block within the first region range from the N first candidate BVs to obtain at least one filtered first candidate BV; and
determining the third BV candidate list based on the at least one filtered first candidate BV.

15. The method according to claim 14, wherein sequentially removing each first candidate BV that corresponds to the reference block within the first region range from the N first candidate BVs to obtain the at least one filtered first candidate BV comprises:

sequentially offsetting each of the N first candidate BVs to determine at least one second candidate BV corresponding to each first candidate BV;

when a maximum horizontal boundary position and a minimum horizontal boundary position of at least one second candidate reference block pointed to by the at least one second candidate BV fall within a horizontal range of a preset range, and a maximum vertical boundary position and a minimum vertical boundary position of the at least one second candidate reference block fall within a vertical range of the preset range, determining that a first candidate BV corresponding to the at least one second candidate BV is a BV of the first region range; and removing the first candidate BV and continuing removal of other first candidate BVs to obtain the at least one filtered first candidate BV.

16. The method according to claim 14 or 15, further comprising:

when a maximum horizontal boundary position or a minimum horizontal boundary position of at least one second candidate reference block pointed to by the at least one second candidate BV does not fall within a horizontal range of a preset range, or a maximum vertical boundary position or a minimum vertical boundary position of the at least one second candidate reference block does not fall within a vertical range of the preset range, determining that a candidate BV corresponding to the at least one second candidate BV is not a BV of the first region range and a first candidate BV corresponding to the at least one second candidate BV is a filtered first candidate BV; and continuing removal of other first candidate BVs until all N first candidate BVs are processed or N filtered first candidate BVs are obtained.

17. The method according to claim 2, wherein removing the BVs within the first region range from the first BV candidate list to obtain the second BV candidate list comprises:

when determining that the current block uses a Template Matching (TM)-merge prediction mode, determining K third candidate BVs with smallest template cost from the first BV candidate list, where K is an integer greater than or equal to 1; and removing the BVs within the first region range from the K third candidate BVs to obtain the second BV candidate list.

18. The method according to claim 17, wherein removing the BVs within the first region range from the K third candidate BVs to obtain the second BV candidate list comprises:

when a horizontal boundary position of a third candidate reference block pointed to by any one of the K third candidate BVs falls within a horizontal range of a preset range, and a vertical boundary position of the third candidate reference block pointed to by the any one of the K third candidate BVs falls within a vertical range of the preset range, determining that the third candidate reference block pointed to by the any one of the K third candidate BVs is a reference block within the first region range; removing the any one of the K third candidate BVs of the reference block within the first region range, and continuing removal of other third candidate BVs until all the K third candidate BVs are processed or K filtered third candidate BVs are obtained; and determining the second BV candidate list based on the at least one filtered third candidate BV.

19. The method according to claim 17, wherein removing the BVs within the first region range from the K third candidate BVs to obtain the second BV candidate list comprises:

when a first extended horizontal boundary position of a third candidate reference block pointed to by any third candidate BV among the K third candidate BVs falls within a horizontal range of a preset range, and a first extended vertical boundary position of the third candidate reference block pointed to by the any third candidate BV falls within a vertical range of the preset range, determining that the third candidate reference block pointed to by the any third candidate BV is a reference block within the first region range, wherein the first extended horizontal boundary position is a horizontal boundary position of the third candidate reference block extended by a first horizontal search range, the first extended vertical boundary position is a vertical boundary position of the third candidate reference block extended by a first vertical search range, and the first horizontal search range and the first vertical search range are search ranges specified in the TM merge prediction mode; removing the any third candidate BV of the reference block within the first region range, and continuing removal of other third candidate BVs until all the K third candidate BVs are processed or K filtered third candidate BVs are obtained; and
determining the second BV candidate list based on the at least one filtered third candidate BV.

**20.** The method according to any one of claims 17 to 19, wherein determining the predicted value of the current block based on the second BV candidate list comprises:

performing TM refinement on the second BV candidate list to determine a fourth BV candidate list;
decoding the bitstream and determining candidate BV index information;
determining a first BV based on the candidate BV index information and the fourth BV candidate list; and
determining a reference block of the current block based on the first BV, and determining the predicted value of the current block based on the reference block.

**21.** The method according to any one of claims 1 to 20, further comprising:
performing a duplicate-check operation on candidate BVs in the first BV candidate list during the process of determining the first BV candidate list for the current block.

**22.** The method according to claim 21, wherein performing the duplicate-check operation on the candidate BVs in the first BV candidate list comprises:

determining a current candidate BV to be added;
comparing the current candidate BV with the candidate BVs in the first BV candidate list;
when the current candidate BV does not overlap with any candidate BV in the first BV candidate list, adding the current candidate BV to the first BV candidate list; and
when the current candidate BV overlaps with a candidate BV in the first BV candidate list, skipping the current candidate BV and continuing to determine a next candidate BV to be added.

**23.** The method according to claim 22, wherein the current candidate BV overlapping with the candidate BV in the first BV candidate list comprises:
the current candidate BV being completely identical to the candidate BV in the first BV candidate list.

**24.** The method according to claim 22, wherein the current candidate BV overlapping with the candidate BV in the first BV candidate list comprises:
a difference between the current candidate BV and the candidate BV in the first BV candidate list satisfying a first preset condition.

**25.** The method according to any one of claims 1 to 22, further comprising:

decoding the bitstream and determining a prediction residual of the current block; and
determining a reconstructed value of the current block based on the predicted value of the current block and the prediction residual of the current block.

**26.** The method according to claim 1, wherein the first region range comprises one of followings:

a size of a current coding tree unit;
a size of a reconstructed region in a current picture;
a size of a picture boundary of the current block; and
a search range of an Intra TMP mode.

**27.** The method according to claim 1, further comprising:

decoding the bitstream and determining first syntax identification information, wherein the first syntax identification information indicates whether the current block uses an IBC prediction mode; and
when the first syntax identification information indicates that the current block uses the IBC prediction mode, determining second syntax identification information, wherein the second syntax identification information indicates whether the current block uses an IBC-merge prediction mode to determine the predicted value of the current block.

**28.** An encoding method, applied to an encoder, the method comprising:

determining a prediction mode of a current block;

determining a first BV candidate list for the current block when the prediction mode indicates that the current block uses an Intra Block Copy (IBC)-merge prediction mode;

determining a first region range, and determining a second BV candidate list based on the first BV candidate list and the first region range; and

determining a predicted value of the current block based on the second BV candidate list.

29. The method according to claim 28, wherein determining the second BV candidate list based on the first BV candidate list and the first region range comprises:

removing BVs within the first region range from the first BV candidate list to obtain the second BV candidate list.

30. The method according to claim 29, wherein removing the BVs within the first region range from the first BV candidate list to obtain the second BV candidate list comprises:

when determining that the current block uses an Intra Block Copy Merge Mode with Block Vector Difference (IBC MBVD) prediction mode, determining at least one first extended candidate BV corresponding to each first candidate BV based on the first BV candidate list; and

removing the BVs within the first region range from the at least one first extended candidate BV corresponding to each first candidate BV to obtain the second BV candidate list.

31. The method according to claim 30, wherein determining the at least one first extended candidate BV corresponding to each first candidate BV based on the first BV candidate list comprises:

determining N first candidate BVs with smallest template cost from the first BV candidate list, where N is an integer greater than or equal to 1; and

refining each first candidate BV among the N first candidate BVs based on a distance set and a BV prediction direction to determine the at least one first extended candidate BV corresponding to each first candidate BV.

32. The method according to claim 31, wherein removing the BVs within the first region range from the at least one first extended candidate BV corresponding to each first candidate BV to obtain the second BV candidate list comprises:

for each first candidate BV, sequentially removing each first extended candidate BV that corresponds to a reference block within the first region range to obtain at least one filtered first extended candidate BV; and

determining the second BV candidate list based on the at least one filtered first extended candidate BV corresponding to each first candidate BV.

33. The method according to claim 32, wherein sequentially removing, for each first candidate BV, each first extended candidate BV corresponding to the reference block within the first region range to obtain the at least one filtered first extended candidate BV comprises:

when a horizontal boundary position of a first candidate reference block pointed to by any first extended candidate BV falls within a horizontal range of a preset range, and a vertical boundary position of the first candidate reference block pointed to by the any first extended candidate BV falls within a vertical range of the preset range, determining that the first candidate reference block pointed to by the any first extended candidate BV is a reference block within the first region range; and

removing the any first extended candidate BV and continuing removal of other first extended candidate BVs corresponding to each first candidate BV to obtain the at least one filtered first extended candidate BV.

34. The method according to claim 32 or 33, further comprising:

when a horizontal boundary position of a first candidate reference block pointed to by any first extended candidate BV does not fall within a horizontal range of a preset range, or a vertical boundary position of the first candidate reference block pointed to by the any first extended candidate BV does not fall within a vertical range of the preset range, determining that the first candidate reference block pointed to by the any first extended candidate BV is not a reference block within the first region range, and the any first extended candidate BV is a filtered first extended candidate BV corresponding to each candidate BV.

35. The method according to any one of claims 32 to 34, wherein determining the second BV candidate list based on the at least one filtered first extended candidate BV corresponding to each first candidate BV comprises:

for each first candidate BV, determining M first extended candidate BVs with smallest template cost from the at least one filtered first extended candidate BV, where M is an integer greater than or equal to 1; and

constructing the second BV candidate list based on the M first extended candidate BVs of each first candidate BV.

36. The method according to claim 35, further comprising:

for each first candidate BV, when the number of the at least one filtered first extended candidate BV is less than M, determining other first candidate BVs from the first BV candidate list, wherein the other first candidate BVs are different from the N first candidate BVs; and

determining M first extended candidate BVs based on the other first candidate BVs and the at least one filtered first extended candidate BV.

37. The method according to any one of claims 30 to 36, wherein determining the at least one first extended candidate BV corresponding to each first candidate BV based on the first BV candidate list comprises:

determining N first candidate BVs with smallest template cost from the first BV candidate list, where N is an integer greater than or equal to 1;

removing the BVs within the first region range from the N first candidate BVs to obtain a third BV candidate list; and

determining the at least one first extended candidate BV corresponding to each first candidate BV based on the third BV candidate list.

38. The method according to claim 37, wherein determining the at least one first extended candidate BV corresponding to each first candidate BV based on the third BV candidate list comprises:

refining each first candidate BV in the third BV candidate list based on a distance set and a BV prediction direction to determine the at least one first extended candidate BV corresponding to each first candidate BV.

39. The method according to claim 37 or 38, wherein removing the BVs within the first region range from the N first candidate BVs to obtain the third BV candidate list comprises:

sequentially removing each first candidate BV that corresponds to a reference block within the first region range from the N first candidate BVs to obtain at least one filtered first candidate BV; and

determining the third BV candidate list based on the at least one filtered first candidate BV.

40. The method according to claim 39, wherein sequentially each first candidate BV that corresponds to a reference block within the first region range from the N first candidate BVs to obtain at least one filtered first candidate BV comprises:

sequentially offsetting each first candidate BV among the N first candidate BVs to determine at least one second candidate BV corresponding to each first candidate BV;

when a maximum horizontal boundary position and a minimum horizontal boundary position of at least one second candidate reference block pointed to by the at least one second candidate BV fall within a horizontal range of a preset range, and a maximum vertical boundary position and a minimum vertical boundary position of the at least one second candidate reference block fall within a vertical range of the preset range, determining that a first candidate BV corresponding to the at one second candidate BV is a BV of the first region range; and

removing the first candidate BV and continuing removing other first candidate BVs to obtain the at least one filtered first candidate BV.

41. The method according to claim 39 or 40, further comprising:

when a maximum horizontal boundary position or a minimum horizontal boundary position of at least one second candidate reference block pointed to by the at least one second candidate BV does not fall within a horizontal range of a preset range, or a maximum vertical boundary position or a minimum vertical boundary position of the at least one second candidate reference block does not fall within a vertical range of the preset range, determining that a candidate BV corresponding to the at least one second candidate BV is not a BV of the first region range, and a first candidate BV corresponding to the at least one second candidate BV is a filtered first candidate BV; and continuing removal of other first candidate BVs until all N first candidate BVs are processed or N filtered first candidate BVs are obtained.

42. The method according to claim 29, wherein removing the BVs within the first region range from the first BV candidate list to obtain the second BV candidate list comprises:

> when determining that the current block uses a Template Matching (TM) merge prediction mode, determining K third candidate BVs with smallest template cost from the first BV candidate list, where K is an integer greater than or equal to 1; and
> removing the BVs within the first region range from the K third candidate BVs to obtain the second BV candidate list.

43. The method according to claim 42, wherein the removing BVs within the first region range from the K third candidate BVs to obtain the second BV candidate list comprises:

> when, among the K third candidate BVs, a horizontal boundary position of a third candidate reference block pointed to by any third candidate BV falls within a horizontal range of a preset range, and a vertical boundary position of the third candidate reference block pointed to by the any third candidate BV falls within a vertical range of the preset range, determining that the third candidate reference block pointed to by the any third candidate BV is a reference block within the first region range;
> removing the any third candidate BV corresponding to the reference block within the first region range, and continuing removal of other third candidate BVs until all the K third candidate BVs are processed or K filtered third candidate BVs are obtained; and
> determining the second BV candidate list based on the at least one filtered third candidate BV.

44. The method according to claim 42, wherein removing the BVs within the first region range from the K third candidate BVs to obtain the second BV candidate list comprises:

> when, among the K third candidate BVs, a first extended horizontal boundary position of a third candidate reference block pointed to by any third candidate BV falls within a horizontal range of a preset range, and a first extended vertical boundary position of the third candidate reference block pointed to by the any third candidate BV falls within a vertical range of the preset range, determining that the third candidate reference block pointed to by the any third candidate BV is a reference block within the first region range,
> wherein the first extended horizontal boundary position is a horizontal boundary position of the third candidate reference block extended by a first horizontal search range, the first extended vertical boundary position is a vertical boundary position of the third candidate reference block extended by a first vertical search range, and the first horizontal search range and the first vertical search range are search ranges specified under a TM merge prediction mode;
> removing the any K third candidate BV of the reference block within the first region range, and continuing removal of other third candidate BVs until all the K third candidate BVs are processed or K filtered third candidate BVs are obtained; and
> determining the second BV candidate list based on the at least one filtered third candidate BV.

45. The method according to any one of claims 28 to 44, further comprising:
performing a duplicate-check operation on candidate BVs in the first BV candidate list during the process of determining the first BV candidate list for the current block.

46. The method according to claim 45, wherein performing the duplicate-check operation on the candidate BVs in the first BV candidate list comprises:

> determining a current candidate BV to be added;
> comparing the current candidate BV with the candidate BVs in the first BV candidate list;
> when the current candidate BV does not overlap with any candidate BV in the first BV candidate list, adding the current candidate BV to the first BV candidate list; and
> when the current candidate BV overlaps with a candidate BV in the first BV candidate list, skipping the current candidate BV and continuing to determine a next candidate BV to be added.

47. The method according to claim 46, wherein the current candidate BV overlapping with the candidate BV in the first BV candidate list comprises:
the current candidate BV being completely identical to the candidate BV in the first BV candidate list.

48. The method according to claim 46, wherein the current candidate BV overlapping with the candidate BV in the first BV candidate list comprises:
a difference between the current candidate BV and the candidate BV in the first BV candidate list satisfying a first preset condition.

49. The method according to claim 28, further comprising:
when the current block uses the IBC-merge prediction mode, determining and signaling first syntax identification information and second syntax identification information, wherein the first syntax identification information indicates whether the current block uses an IBC prediction mode, and the second syntax identification information indicates whether the current block uses the IBC-merge prediction mode.

50. The method according to claim 30 or 42, further comprising:
determining and signaling third syntax identification information, wherein the third syntax identification information indicates whether the current block uses an IBC Merge Mode with Block Vector Difference (IBC MBVD) prediction mode.

51. The method according to any one of claims 28 to 50, wherein determining the predicted value of the current block based on the second BV candidate list comprises:

determining a first BV based on the second BV candidate list;
determining a reference block of the current block based on the first BV, and determining the predicted value of the current block based on the reference block.

52. The method according to claim 51, further comprising:
signalling candidate BV index information corresponding to the first BV through the bitstream.

53. The method according to claim 30, further comprising:
signalling candidate BV index information and extended candidate BV index information corresponding to the first BV through the bitstream.

54. The method according to any one of claims 29 to 53, further comprising:

determining an original value of the current block;
determining a prediction residual of the current block based on the original value of the current block and the predicted value of the current block.

55. The method according to claim 28, wherein the first region range comprises one of followings:

a size of a current coding tree unit;
a size of a reconstructed region in the current picture;
a size of a picture boundary of the current block; and
a search range of an Intra TMP mode.

56. A bitstream, generated by performing bit encoding on information to be coded, wherein the information to be coded comprises at least one of followings:

a prediction residual of a current block, candidate BV index information, extended candidate BV index information, first syntax identification information, second syntax identification information, and third syntax identification information,
wherein the first syntax identification information indicates whether the current block uses an Intra Block Copy (IBC) prediction mode, the second syntax identification information indicates whether the current block uses an IBC-merge prediction mode, and the third syntax identification information indicates whether the current block uses a Merge Mode with Block Vector Difference (MBVD) mode.

57. A decoder, comprising:

a decoding section, configured to decode a bitstream to determine a prediction mode of a current block;
a first determination section, configured to, when the prediction mode of the current block indicates that the current block determines a predicted value of the current block using an Intra Block Copy (IBC) merge prediction mode, determine a first block vector (BV) candidate list for the current block, and determine a first region range;

a first removal section, configured to determine a second BV candidate list based on the first BV candidate list and the first region range; and

a first prediction section, configured to determine the predicted value of the current block based on the second BV candidate list.

58. A decoder, comprising a first memory and a first processor; wherein:

the first memory is configured to store a computer program capable of running on the first processor; and

the first processor is configured to, when running the computer program, execute the method according to any one of claims 1 to 27.

59. An encoder, comprising:

a second determination section, configured to determine a prediction mode of a current block, and when the current block uses an Intra Block Copy (IBC) merge prediction mode, determine a first block vector (BV) candidate list for the current block, and determine a first region range;

a second removal section, configured to determine a second BV candidate list based on the first BV candidate list and the first region range; and

a second prediction section, configured to determine a predicted value of the current block based on the second BV candidate list.

60. A codec, comprising a second memory and a second processor; wherein:

the second memory is configured to store a computer program capable of running on the second processor; and

the second processor is configured to, when running the computer program, execute the method according to any one of claims 28 to 55.

61. A computer-readable storage medium, having stored a computer program that, when executed, implements the method according to any one of claims 1 to 27 or implements the method according to any one of claims 28 to 55.

**FIG. 1**

**FIG. 2a**

**FIG. 2b**

**FIG. 2c**

**FIG. 2d**

**FIG. 2e**

**FIG. 2f**

**FIG. 3**

**FIG. 4**

**FIG. 5**

**FIG. 6**

**FIG. 7a**

**FIG. 7b**

BVD

BVP

BV

Current PU

**FIG. 8**

X'

Current block

**FIG. 9a**

X'

Current block

**FIG. 9b**

**FIG. 9c**　　　　　**FIG. 9d**

⋮

**FIG. 10**

⋮

**FIG. 11**

**FIG. 12**

**FIG. 13**

| A current template type is determined | S41 |

↓

| Current template pixels are obtained | S42 |

↓

| A BV is determined within a predefined search range | S43 |

**FIG. 14**

**FIG. 15**

| Initialization | S51 |

↓

| Determining a search region of the template within a current picture | S52 |

↓

| Searching in the search region and determining BVs corresponding to N matching templates | S53 |

**FIG. 16**

A value of the number N of candidate templates is determined —— S531

A matching template comparison criterion is determined and BVs corresponding to N matching templates are recorded —— S532

**FIG. 17**

N candidate reconstructed blocks are acquired —— S61

A weighted fusion weight is determined —— S62

A predicted value is generated through the weighted fusion —— S63

**FIG. 18**

|      | C2   |      |
|------|------|------|
| C1   | C0   | C3   |
|      | C4   |      |

**FIG. 19a**

| C1 | C0 | C2 |
|----|----|----|

**FIG. 19b**

| C1 |
|----|
| C0 |
| C2 |

**FIG. 19c**

|    | C2 |
|----|----|
| C1 | C0 |

**FIG. 19d**

| C0 | C1 |
|----|----|
| C2 |    |

**FIG. 19e**

| C5 | C2 | C6 |
|----|----|----|
| C1 | C0 | C3 |
| C7 | C4 | C8 |

**FIG. 19f**

Reference block                    Prediction block

**FIG. 20**

| |
|---|
| A bitstream is decoded to determine a prediction mode of a current block |

S101

| |
|---|
| When the prediction mode of the current block indicates that the current block determines the predicted value of the current block using the IBC-merge prediction mode, a first BV candidate list of the current block is determined |

S102

| |
|---|
| A first region range is determined, and a second BV candidate list is determined based on the first BV candidate list and the first region range |

S103

| |
|---|
| The predicted value of the current block is determined based on the second BV candidate list |

S104

**FIG. 21**

A prediction mode of a current block is determined — S501

When the prediction mode indicates that the current block uses an IBC-merge prediction mode, a first BV candidate list of the current block is determined — S502

A first region range is determined, and a second BV candidate list is determiend based on the first BV candidate list and the first region range — S503

A predicted value of the current block is determined based on the second BV candidate list — S504

**FIG. 22**

A prediction mode of a current block is determined — S501

When the prediction mode indicates that the current block uses an IBC-merge prediction mode, a first BV candidate list of the current block is determined — S502

A first region range is determined — S5031

At least one first extended candidate BV corresponding to each first candidate BV is determined based on the first BV candidate list when determining that the current block uses an IBC MBVD prediction mode — S5032

BVs within the first region range are removed from among at least one first extended candidate BV corresponding to each first candidate BV, to obtain a second BV candidate list — S5033

The predicted value of the current block is determined based on the second BV candidate list — S504

**FIG. 23**

A prediction mode of a current block is determined — S501

When the prediction mode indicates that the current block uses an IBC-merge prediction mode, a first BV candidate list of the current block is determined — S502

N first candidate BVs with the smallest template cost is determined from the first BV candidate list, N being an integer greater than or equal to 1 — S505

BVs within the first region range are removed to from among the N first candidate BVs obtain a third BV candidate list — S506

At least one first extended candidate BV corresponding to each first candidate BV is determined based on the third BV candidate list — S507

A first BV is determined from the at least one first extended candidate BV — S508

A reference block of the current block is determined according to the first BV, and a predicted value of the current block is determined based on the reference block — S509

BVs within the first region range are removed from among at least one first extended candidate BV corresponding to each first candidate BV, to obtain a second BV candidate list — S5033

The predicted value of the current block is determined based on the second BV candidate list — S504

**FIG. 24**

A prediction mode of a current block is determined — S501

When determining that the current block uses a TM merge prediction mode, K third candidate BVs with lowest template cost are determined from a first BV candidate list, K is an integer greater than or equal to 1 — S510

BVs within the first region range are removed from among the K third candidate BVs to obtain a second BV candidate list — S511

**FIG. 25**

1

Decoder

Decoding section — 10

First determination section — 11

First removal section — 12

First prediction section — 13

**FIG. 26**

1

Decoder

First communication interface — 14

17

16

First processor

15

First memory

**FIG. 27**

Encoder 2

Second determination section 20

Second removal section 21

Second prediction section 22

**FIG. 28**

Encoder 2

Second communication interface 24

27

Second processor 26

Second memory 25

**FIG. 29**

3

Encoder 2

Decoder 1

**FIG. 30**

## INTERNATIONAL SEARCH REPORT

| International application No. |
| --- |
| **PCT/CN2023/088535** |

**A.     CLASSIFICATION OF SUBJECT MATTER**

H04N19/176(2014.01)i

According to International Patent Classification (IPC) or to both national classification and IPC

**B.     FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; JPTXT; CNKI; IEEE: 块向量, 运动向量, 运动矢量, 冗余, 重合, 重复, 去除, 删除, 消除, 列表, block vector, BV, motion vector, redundancy, repetition, coincident, wipe, remove, delete, list

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2015019403 A (JVC KENWOOD CORP.) 29 January 2015 (2015-01-29) description, paragraphs [0015]-[0230] | 1-55, 57-61 |
| A | CN 113709498 A (GUANGDONG OPPO MOBILE COMMUNICATIONS CO., LTD.) 26 November 2021 (2021-11-26) entire document | 1-55, 57-61 |
| A | CN 110383841 A (BLACKBERRY LIMITED) 25 October 2019 (2019-10-25) entire document | 1-55, 57-61 |
| A | KR 20140097997 A (UNIV SEJONG IND ACAD COOP GR) 07 August 2014 (2014-08-07) entire document | 1-55, 57-61 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 January 2024** | **08 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/088535** |

**Box No. II      Observations where certain claims were found unsearchable (Continuation of item 2 of first sheet)**

This international search report has not been established in respect of certain claims under Article 17(2)(a) for the following reasons:

1. ☑  Claims Nos.: **56**
   because they relate to subject matter not required to be searched by this Authority, namely:

   Claim 56 sets forth a code stream, which sets forth information itself, is substantially a mere presentation of information, and belongs to subject matter to be excluded.

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/CN2023/088535**

| Patent document cited in search report | | | Publication date (day/month/year) | Patent family member(s) | | | Publication date (day/month/year) |
|---|---|---|---|---|---|---|---|
| JP | 2015019403 | A | 29 January 2015 | JP | 5874791 | B2 | 02 March 2016 |
| CN | 113709498 | A | 26 November 2021 | TW | 20214578 | A | 01 December 2021 |
| | | | | CN | 113709498 | B | 02 June 2023 |
| CN | 110383841 | A | 25 October 2019 | EP | 3568988 | A1 | 20 November 2019 |
| | | | | EP | 3568988 | A4 | 10 June 2020 |
| | | | | WO | 2018129614 | A1 | 19 July 2018 |
| | | | | US | 2018199052 | A1 | 12 July 2018 |
| | | | | US | 10291928 | B2 | 14 May 2019 |
| KR | 20140097997 | A | 07 August 2014 | KR | 101510585 | B1 | 08 April 2015 |

Form PCT/ISA/210 (patent family annex) (July 2022)